# EUROPEAN PATENT SPECIFICATION

(11) **EP 4 207 383 B1**
(45) Date of publication and mention of the grant of the patent: **13.08.2025**
(21) Application number: 21872328.6
(22) Date of filing: 16.09.2021
(51) Int. Cl.: H01M 4/505, H01M 4/525, H01M 4/58, H01G 11/30, H01G 11/58, H01G 11/62, H01G 11/86, H01M 10/052, H01M 10/0566, H01M 10/0567, H01M 10/0568, H01M 10/0569, H01M 10/058, H01G 9/035, H01M 6/16, H01G 11/50, H01G 11/06, H01G 11/64, H01G 11/84, H01M 10/0525

(54) **NON-AQUEOUS ELECTROLYTIC SOLUTION, SECONDARY BATTERY, AND METHOD FOR MANUFACTURING SAME**
NICHTWÄSSRIGE ELEKTROLYTLÖSUNG, SEKUNDÄRBATTERIE UND VERFAHREN ZUR HERSTELLUNG DAVON
ÉLECTROLYTE NON AQUEUX, ET BATTERIE SECONDAIRE AINSI QUE PROCÉDÉ DE FABRICATION DE CELLE-CI

(30) Priority: 24.09.2020 JP 2020159936; 02.03.2021 JP 2021032987
(43) Date of publication of application: 05.07.2023
(73) Proprietor: Nippon Shokubai Co., Ltd., Osaka-shi, Osaka 541-0043 (JP)
(72) Inventor: NISHIHATA Ryo, Suita-shi, Osaka 564-0034 (JP); MIZUNO Hiroyuki, Suita-shi, Osaka 564-0034 (JP); ARAKAWA Motohiro, Suita-shi, Osaka 564-0034 (JP)
(74) Representative: Germain Maureau
(86) International application number: PCT/JP2021/034131
(87) International publication number: WO 2022/065198

(56) References cited:
- WO-A1-2004/109839
- JP-A- 2000 331 715
- JP-A- 2000 331 715
- JP-A- 2005 190 977
- JP-A- 2006 344 505
- JP-A- 2007 095 445
- JP-A- 2008 226 537
- JP-A- 2009 123 526
- JP-A- 2009 123 526
- JP-A- H08 162 164
- JP-A- H09 251 862
- JP-A- H1 167 270
- US-A1- 2006 003 226
- US-A1- 2008 220 331
- YU H. ET AL: "Quantitative Determination of Carbon Dioxide Content in Organic Electrolytes by Infrared Spectroscopy", JOURNAL OF THE ELECTROCHEMICAL SOCIETY, vol. 166, no. 12, 1 January 2019 (2019-01-01), pages A2467 - A2470, XP055914020, ISSN: 0013-4651, DOI: 10.1149/2.0291912jes
- YU H., OBROVAC M. N.: "Quantitative Determination of Carbon Dioxide Content in Organic Electrolytes by Infrared Spectroscopy", JOURNAL OF THE ELECTROCHEMICAL SOCIETY, vol. 166, no. 12, 1 January 2019 (2019-01-01), pages A2467 - A2470, XP055914020, ISSN: 0013-4651, DOI: 10.1149/2.0291912jes

## Description

### TECHNICAL FIELD

The present disclosure relates to a non-aqueous electrolyte solution, a secondary battery, and a method of manufacturing the same.

### BACKGROUND ART

Injection of carbon dioxide (CO₂) into a battery using Li metal or carbon as a negative electrode material has been reported to improve battery characteristics. The same has been reported for secondary batteries using a Si or Sn negative electrode.

For example, Patent Document 1 proposes a non-aqueous secondary battery that uses a non-aqueous electrolyte solution containing 0.1 wt% or more of vinylene carbonate just after the assembly of the battery before the first charge, and contains CO₂ sealed in a battery casing. This battery, with vinylene carbonate added and CO₂ sealed, achieves improvement in both of storage characteristics in discharged state and cycle characteristics.

Patent Document 2 proposes a non-aqueous lithium power storage element that contains 10 µg/L or more and 5000 µg/L or less of carbon dioxide in a non-aqueous electrolyte solution and 1 mass% or more and 50 mass% or less of a lithium compound other than an active material in a positive electrode active material layer. This power storage element improves in characteristics, such as input/output characteristics and high-temperature durability, although the positive electrode contains the lithium compound.

Patent Document 3 proposes an electrolyte solution for a lithium ion secondary battery containing a lithium imide salt, a room temperature molten salt, and a high vapor pressure solvent. The room temperature molten salt, which is also called ionic liquid, contains a cationic component and an anionic component, and is in a molten state at room temperature and flowable. This salt is different from an organic solvent used in general lithium ion secondary batteries. Although the room temperature molten salt can improve the safety of the battery, it is extremely difficult to impregnate the positive electrode, the negative electrode, and the separator with the room temperature molten salt. The high vapor pressure solvent is a volatile solvent having a vapor pressure of 1 kPa or higher at 20°C. Examples of the high vapor pressure solvent include carbon dioxide, monohydric alcohol, ketone, nitrile, ester, chain carbonate ester, cyclic ether, and chain ether.

Patent Document 4 proposes a non-aqueous electrolytic secondary battery in which at least one of a positive electrode or a negative electrode releases 0.1 ml or more and 10 ml or less of carbon dioxide per unit weight of an active material layer contained in the electrode when the battery is heated at 350°C for one minute. The electrode (the negative electrode) of this battery contains carbon dioxide as an impurity.
US 2008/220331 discloses a nonaqueous electrolyte secondary battery comprising a positive electrode including a positive active material having a layered structure, a negative electrode including a negative active material, and a nonaqueous electrolyte including a lithium electrolyte salt and a solvent, wherein carbon dioxide is dissolved in said nonaqueous electrolyte, and the concentration of the lithium electrolyte salt in said nonaqueous electrolyte is 1.0 mol/liter or more, and charge is performed in such a way that an end-of-charge potential of the positive electrode becomes 4.40 V (vs. Li/Li⁺) or more.
The publication entitled Quantitative determination of carbon dioxide contend in organic electrolytes by infrared spectroscopy, Yu et al., Journal of the Electrochemical Society, 166, (12), A2467-A2470 (2019) discloses that CO₂ concentration can be accurately determined in electrolyte solutions using FTIR. In order to demonstrate the utility of the FTIR method, measurement of CO₂ solubility in EC/DEC 1:2 v/v solvent containing 1 M of LiPF₆/LiTFSI salt blends was investigated.
US 2006/003226 discloses a rechargeable lithium battery including a negative electrode made by sintering a layer of a mixture of silicon particles, which undergo a porosity increase that advances inside from particle surfaces during charge and discharge, and a binder on a surface of a conductive metal foil current collector, a positive electrode and a nonaqueous electrolyte, characterized in that said nonaqueous electrolyte contains carbon dioxide dissolved therein in addition to carbon dioxide formed during fabrication of the battery and forms a film having a lithium-ion conducting capability on a surface of said negative electrode, wherein the amount of added carbon dioxide dissolved in said nonaqueous electrolyte is at least 0.1 by weight.

### CITATION LIST

### PATENT DOCUMENTS

PATENT DOCUMENT 1: Japanese Unexamined Patent Publication No. 2001-307771
PATENT DOCUMENT 2: Japanese Unexamined Patent Publication No. 2018-61022
PATENT DOCUMENT 3: Japanese Unexamined Patent Publication No. 2018-170272
PATENT DOCUMENT 4: Japanese Unexamined Patent Publication No. 2012-174416

### SUMMARY OF THE INVENTION

### TECHNICAL PROBLEM

Based on the studies so far, the inventors of the present application have found that a non-aqueous electrolyte solution containing a sulfonylimide compound such as lithium bis(fluorosulfonyl)imide as an electrolyte salt improves performance of a lithium ion secondary battery such as high-temperature durability and charge/discharge cycle characteristics.

However, Patent Document 1 does not consider a non-aqueous electrolyte solution containing a sulfonylimide compound. The battery of Patent Document 1 contains vinylene carbonate in the non-aqueous electrolyte solution. This increases direct current resistance (DCR) and impedance of the battery, making the battery performance insufficient.

In Patent Document 2, the non-aqueous electrolyte solution dissolves less than 5 ppm of CO₂ at the maximum when the concentration of the electrolyte salt is 1.2 mol/L. Thus, the dissolution of CO₂ may be less effective in improving the input/output characteristics and the high-temperature durability.

Patent Document 3 describes that the positive electrode, the negative electrode, and the separator are easily impregnated with the electrolyte solution although the electrolyte solution contains the room temperature molten salt, and the initial capacity of the battery can be improved. However, evaluation of the battery using this electrolyte solution shows that the room temperature molten salt contained in the electrolyte solution is less effective for the improvement, and may conversely degrade the battery performance.

Just like Patent Document 1, Patent Document 4 does not consider the non-aqueous electrolyte solution containing the sulfonylimide compound. Patent Document 4 describes that the amount of carbon dioxide contained in the electrode is adjusted by controlling the atmosphere for manufacturing the electrode. However, no consideration is given to carbon dioxide contained in the non-aqueous electrolyte solution and the amount thereof.

In view of such points, the present disclosure has been made to provide a non-aqueous electrolyte solution that contains a sulfonylimide compound and can improve battery performance, a secondary battery including the non-aqueous electrolyte solution, and a method of manufacturing the same.

### SOLUTION TO THE PROBLEM

As a result of further studies, the inventors of the present application have found that a battery using a non-aqueous electrolyte solution containing a sulfonylimide compound causes greater self-discharge from a fully charged state than a battery using a non-aqueous electrolyte solution containing a lithium compound alone (e.g., LiPF₆ or LiBF₄) other than the sulfonylimide compound as an electrolyte salt, and that there is room for improvement in storage characteristics of the battery. This finding was first discovered by the inventors of the present application, and Patent Documents 1 and 2 or any other documents are silent about the self-discharge of the battery using the non-aqueous electrolyte solution containing the sulfonylimide compound (especially lithium bis(fluorosulfonyl)imide).

Patent Document 4 describes that carbon dioxide contained in the electrode facilitates the formation of a coating film, reducing the self-discharge. In Patent Document 4, a rate of thickness change and capacity retention rate of a battery charged to 30% at a rate of 1 C and stored in an environment of 65°C for a month (50% SOC) are measured before and after the storage, and used as indicators of the amount of self-discharge during the storage. However, these indicators are based on a reaction between the negative electrode active material and carbon dioxide that is physically adsorbed on the negative electrode or present as a compound in the negative electrode, during the storage of the battery as a self-discharge reaction. The indicators are related to evaluation of durability of the electrolyte solution, and are different from an intended indicator based on charge consumption when there is no electric load between the positive and negative electrodes as the self-discharge.

In the present disclosure, the self-discharge of the battery is reduced without using components that may increase the resistance of the battery such as vinylene carbonate in the non-aqueous electrolyte solution containing the sulfonylimide compound for the improvement of the storage characteristics and performance of the battery. The present disclosure is specifically described below.

The present disclosure is directed to a non-aqueous electrolyte solution containing a sulfonylimide compound (1) which includes LiN(FSO₂)₂ as an electrolyte salt; an electrolyte solution solvent; and at least one of carbon dioxide (CO₂), carbon monoxide (CO), a bicarbonate ion (HCO₃⁻), or a carbonate ion (CO₃²⁻) dissolved therein. The electrolyte solution solvent includes at least one selected from the group consisting of a carbonate solvent, a lactone solvent, an ether solvent, a nitrile solvent, and a chain ester solvent, and a total amount of the at least one of carbon dioxide (CO₂), carbon monoxide (CO), a bicarbonate ion (HCO₃⁻), or a carbonate ion (CO₃²⁻) dissolved is 20 ppm by mass or more.

The present disclosure is directed to a method of manufacturing a non-aqueous electrolyte solution that contains a sulfonylimide compound (1) which includes LiN(FSO₂)₂ as an electrolyte salt, an electrolyte solution solvent, and at least one of carbon dioxide (CO₂), carbon monoxide (CO), a bicarbonate ion (HCO₃⁻), or a carbonate ion (CO₃²⁻) dissolved therein. The electrolyte solution solvent includes at least one selected from the group consisting of a carbonate solvent, a lactone solvent, an ether solvent, a nitrile solvent, and a chain ester solvent. The method includes: dissolving the at least one of carbon dioxide (CO₂), carbon monoxide (CO), a bicarbonate ion (HCO₃⁻), or a carbonate ion (CO₃²⁻) in the non-aqueous electrolyte solution. The dissolving includes at least one of
1) bringing a high-pressure gas containing CO₂ or carbon monoxide (CO) or a bicarbonate ion (HCO₃⁻) or a carbonate ion (CO₃²⁻) into contact with the non-aqueous electrolyte solution,
2) bringing a gas containing CO₂ or carbon monoxide (CO) or a bicarbonate ion (HCO₃⁻) or a carbonate ion (CO₃²⁻) into contact with the non-aqueous electrolyte solution,
3) blowing the gas containing CO₂ or carbon monoxide (CO) or a bicarbonate ion (HCO₃⁻) or a carbonate ion (CO₃²⁻) into the non-aqueous electrolyte solution,
4) replacing air in a sealed container containing the non-aqueous electrolyte solution with the gas containing CO₂ or carbon monoxide (CO) or a bicarbonate ion (HCO₃⁻) or a carbonate ion (CO₃²⁻).

The present disclosure is also directed to a secondary battery including: a positive electrode; a negative electrode; and a non-aqueous electrolyte solution. The non-aqueous electrolyte solution contains a sulfonylimide compound (1) which includes LiN(FSO₂)₂ as an electrolyte salt, at least one selected from the group consisting of a carbonate solvent, a lactone solvent, an ether solvent, a nitrile solvent, and a chain ester solvent as an electrolyte solution solvent, and at least one of carbon dioxide (CO₂), carbon monoxide (CO), a bicarbonate ion (HCO₃⁻), or a carbonate ion (CO₃²⁻) dissolved therein. A total amount of the at least one of carbon dioxide (CO₂), carbon monoxide (CO), a bicarbonate ion (HCO₃⁻), or a carbonate ion (CO₃²⁻) dissolved is 20 ppm by mass or more.

The present disclosure is also directed to a method of manufacturing a secondary battery including a positive electrode, a negative electrode, and a non-aqueous electrolyte solution. The non-aqueous electrolyte solution contains a sulfonylimide compound (1) which includes LiN(FSO₂)₂ as an electrolyte salt and at least one selected from the group consisting of a carbonate solvent, a lactone solvent, an ether solvent, a nitrile solvent, and a chain ester solvent as an electrolyte solution solvent. The method includes:
assembling the secondary battery in a CO₂ atmosphere and
injecting the non-aqueous electrolyte solution into the battery.

The present disclosure is also directed to a method of manufacturing a secondary battery including a positive electrode, a negative electrode, and a non-aqueous electrolyte solution. The non-aqueous electrolyte solution contains a sulfonylimide compound (1) which includes LiN(FSO₂)₂ as an electrolyte salt and at least one selected from the group consisting of a carbonate solvent, a lactone solvent, an ether solvent, a nitrile solvent, and a chain ester solvent as an electrolyte solution solvent. The method includes: replacing air in the battery into which the non-aqueous electrolyte solution has been injected with carbon dioxide (CO₂).

### ADVANTAGES OF THE INVENTION

The present disclosure can provide a non-aqueous electrolyte solution containing a sulfonylimide compound and capable of improving battery performance, a secondary battery including the non-aqueous electrolyte solution, and a method of manufacturing the same.

### BRIEF DESCRIPTION OF THE DRAWING

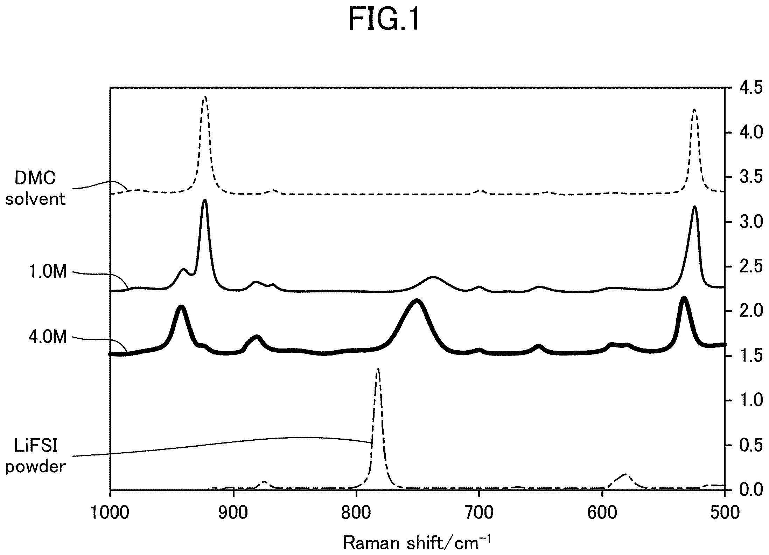

FIG. 1 is a diagram illustrating a Raman spectrum "DMC solvent" of dimethyl carbonate (DMC), "1.0M" of a referential electrolyte solution 7-1 shown in Table 7-1 in the following section of series of Example 7, "4.0M" of an electrolyte solution 7-1 shown in Table 7-1, and "LiFSI powder" of LiFSI powder.

### DESCRIPTION OF EMBODIMENTS

Embodiments of the present disclosure will be described in detail below. The following description of preferred embodiments is merely an example in nature, and is not intended to limit the scope, applications, or use of the present disclosure.

### <Non-Aqueous Electrolyte Solution and Method for Manufacturing Same>

### (Electrolyte Salt)

A non-aqueous electrolyte solution of the present embodiment contains an electrolyte salt. The electrolyte salt contains a sulfonylimide compound (a fluorine-containing sulfonylimide salt, will be hereinafter referred to as a "sulfonylimide compound (1)") which includes LiN(FSO₂)₂.

As the sulfonylimide compound (1), a commercially available product may be used, or one obtained by synthesis using any known method may also be used.

It is only required that the electrolyte salt contains the sulfonylimide compound (1), but may also contain another electrolyte (an electrolyte other than the sulfonylimide compound (1)). Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include a non-lithium salt of fluorine-containing sulfonylimide listed above as the sulfonylimide compound (1) (e.g., a salt obtained by substituting lithium (ion) in the sulfonylimide compound (1) with a cation other than the lithium ion). Examples of the salt substituted with a cation other than the lithium ion include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more. Alternatively, as the other sulfonylimide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include a compound represented by the general formula (2):
[Chemical Formula 2]

LiPFₐ(CₘF₂ₘ₊₁)₆₋ₐ (where 0 ≤ a ≤ 6 and 1 ≤ m ≤ 4) (2)

(this compound will be hereinafter referred to as a "fluorophosphoric acid compound (2)"), a compound represented by the general formula (3):
[Chemical Formula 3]

LiBF₆(CₙF₂ₙ₊₁)_{4-b} (where 0 ≤ b ≤ 4 and 1 ≤ n ≤ 4) (3)

(this compound will be hereinafter referred to as a "fluoroboric acid compound (3)"), lithium salts such as lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂], and non-lithium salts (e.g., salts obtained by substituting a lithium (ion) with the above-described cation in these lithium salts, such as NaBF₄, NaPF₆, and NaPF₃(CF₃)₃)). These non-imide salts may be used alone or in combination of two or more. Alternatively, as the non-imide salt, a commercially available product may be used, or one obtained by synthesis using a known method may also be used.

Among the other electrolytes, the non-imide salts are preferable in view of ion conductivity and costs. Among them, the fluorophosphoric acid compound (2), the fluoroboric acid compound (3), and LiAsF₆ are preferable, and the fluorophosphoric acid compound (2) is more preferable.

Examples of the fluorophosphoric acid compound (2) include LiPF₆, LiPF₃(CF₃)₃, LiPF₃(C₂F₅)₃, LiPF₃(C₃F7)₃, and LiPF₃(C₄F₉)₃. Among the examples, the fluorophosphoric acid compound (2) is preferably LiPF₆ or LiPF₃(C₂F₅)₃, more preferably LiPF₆.

Examples of the fluoroboric acid compound (3) include LiBF₄, LiBF(CF₃)₃, LiBF(C₂F₅)₃, and LiBF(C₃F₇)₃. Among the examples, the fluoroboric acid compound (3) is preferably LiBF₄ or LiBF(CF₃)₃, and is more preferably LiBF₄.

These electrolyte salts (the sulfonylimide compound (1) and the other electrolyte) may be present (contained) in the ionic form in the non-aqueous electrolyte solution.

The concentration of the sulfonylimide compound (1) in the non-aqueous electrolyte solution is preferably 0.01 mol/L or more, more preferably 0.05 mol/L or more, much more preferably 0.1 mol/L or more, still more preferably 0.2 mol/L or more, even more preferably 0.5 mol/L or more, in view of reducing the impedance and DCR of the battery and improving the low temperature charge-discharge characteristics and the charge-discharge cycle characteristics. The concentration is preferably 5 mol/L or less, more preferably 3 mol/L or less, still more preferably 2 mol/L or less, in view of keeping the battery performance from decreasing due to the increase in viscosity of the electrolyte solution.

In vibrational spectrum of FIG. 1 showing peak intensities derived from an organic solvent (an electrolyte solution solvent described later) contained in the non-aqueous electrolyte solution, a relationship between two peak intensities Io and Is changes from Is < Io to Is > Io as the concentration of the sulfonylimide compound (1) in the non-aqueous electrolyte solution increases, where Io is an intensity of an original peak of the electrolyte solution solvent and Is is a peak observed when the original peak of the electrolyte solution solvent shifts (hereinafter may be referred to as a "shifted peak"). That is, in the non-aqueous electrolyte solution containing the sulfonylimide compound (1) at a high concentration (e.g., 4 mol/L), the two peak intensities in the vibrational spectrum chart meet the relationship Is > Io.

The original peak of the electrolyte solution solvent is a peak observed at a peak position (wave number) when only the electrolyte solvent is measured by vibrational spectroscopy. The value of the intensity Io of the original peak of the electrolyte solution solvent and the value of the intensity Is of the shifted peak are the height or area of each peak from a base line of the vibrational spectrum.

If there are multiple shifted peaks of the original peak of the electrolyte solution solvent in the vibrational spectrum, one of the shifted peaks from which the relationship between Is and Io is easiest to determine is selected to see the relationship between the two peak intensities. If the non-aqueous electrolyte solution contains two or more electrolyte solution solvents, one of the electrolyte solution solvents that is easiest to determine the relationship between Is and Io (that shows the most significant difference between Is and Io) is selected, and the relationship between Is and Io is determined based on its peak intensity. If the amount of shift of the peak is small and the peaks before and after the shift overlap and look like a gentle peak, the peaks may be separated by a known technique to determine the relationship between Is and Io.

An electrolyte solution solvent forming a cluster and an electrolyte solution solvent not involved in the formation of the cluster are present in different ways in the non-aqueous electrolyte solution. Specifically, in the vibrational spectrum, the peak derived from the electrolyte solution solvent forming the cluster shifts to a higher or lower wave number from the wave number of the peak derived from the electrolyte solution solvent not involved in the formation of the cluster (the original peak of the electrolyte solution solvent). Thus, the peak shifted to the higher or lower wave number from the original peak of the electrolyte solution solvent corresponds to the peak derived from the electrolyte solution solvent forming the cluster.

Examples of the vibrational spectrum include an IR spectrum and a Raman spectrum. Examples of the IR spectroscopy include transmission measurement such as a Nujol mull technique and a liquid membrane technique, and reflection measurement such as ATR. Either one of the IR spectrum or the Raman spectrum that makes it easy to determine the relationship between Is and Io in the vibrational spectrum of the non-aqueous electrolyte solution is selected. The vibration spectroscopy is performed under a condition in which the influence of moisture in the atmosphere can be reduced or ignored. Examples of the measurement performed under such conditions include IR spectroscopy under low humidity or non-humidity conditions, for example, in a dry room or a glove box, and Raman spectroscopy with the non-aqueous electrolyte solution contained in a sealed container.

The content of the sulfonylimide compound (1) in the non-aqueous electrolyte solution is preferably 10 mol% or more, more preferably 20 mol% or more, still more preferably 30 mol% or more, and particularly preferably 50 mol% or more with respect to the total of 100 mol% of the electrolyte salt contained in the non-aqueous electrolyte solution, in view of reducing the impedance and DCR of the battery and improving the low temperature charge-discharge characteristics and the charge-discharge cycle characteristics.

The electrolyte salt may be an electrolyte salt of a simple salt composition containing the sulfonylimide compound (1) alone, or an electrolyte salt of a mixed salt composition containing the sulfonylimide compound (1) and another electrolyte. The electrolyte salt of the mixed salt composition is preferably an electrolyte salt of a mixed salt composition containing the sulfonylimide compound (1) and the fluorophosphoric acid compound (2), and particularly preferably an electrolyte salt of a mixed salt composition containing LiN(FSO₂)₂ and LiPF₆.

When the electrolyte salt of the mixed salt composition containing the sulfonylimide compound (1) and the other electrolyte is used, the concentration of the other electrolyte in the non-aqueous electrolyte solution is preferably 0.1 mol/L or more, more preferably 0.2 mol/L or more, and still more preferably 0.5 mol/L or more, in view of reducing the impedance and DCR of the battery and improving the low temperature charge-discharge characteristics and the charge-discharge cycle characteristics. The concentration is preferably 1 mol/L or less, more preferably 0.6 mol/L or less, in view of reducing the impedance and DCR of the battery and improving the low temperature charge-discharge characteristics and the charge-discharge cycle characteristics.

The total concentration of the electrolyte salt in the non-aqueous electrolyte solution is preferably 0.8 mol/L or more, more preferably 1.2 mol/L or more, in view of reducing the impedance and DCR of the battery and improving the low temperature charge-discharge characteristics and the charge-discharge cycle characteristics. The concentration is preferably 5 mol/L or less, more preferably 3 mol/L or less, still more preferably 2 mol/L or less, in view of keeping the battery performance from decreasing due to the increase in viscosity of the electrolyte solution.

The concentration of the sulfonylimide compound (1) is preferably raised in view of reducing the impedance and DCR of the battery and improving the low temperature charge-discharge characteristics and the charge-discharge cycle characteristics. The ratio between the sulfonylimide compound (1) and the other electrolyte (a ratio between the concentration of the sulfonylimide compound and the concentration of the other electrolyte by mole) is preferably 1 : 25 or more, more preferably 1 : 10 or more, even more preferably 1 : 8 or more, still more preferably 1 : 5 or more, far more preferably 1 : 2 or more, particularly preferably 1 : 1 or more, and preferably 25 : 1 or less, more preferably 10 : 1 or less, even more preferably 5 : 1 or less, and still more preferably 2 : 1 or less.

### (At Least One of CO₂, CO, HCO₃⁻ or CO₃²⁻)

The non-aqueous electrolyte solution of the present embodiment contains the sulfonylimide compound (1) as the electrolyte salt and at least one of carbon dioxide (CO₂), carbon monoxide (CO), a bicarbonate ion (HCO₃⁻), or a carbonate ion (CO₃²⁻) (may be hereinafter referred to as "CO₂ or other component") dissolved therein.

As described above, the inventors of the present application have found that the battery using the non-aqueous electrolyte solution containing the sulfonylimide compound (1) causes greater self-discharge from a fully charged state than a battery using a non-aqueous electrolyte solution containing the other electrolyte (such as LiPF₆ or LiBF₄) alone. More specifically, the inventors have found that the battery using the non-aqueous electrolyte solution containing the sulfonylimide compound (1) causes greater self-discharge depending on the concentration of the sulfonylimide compound (1). As a result of intensive studies to solve the problems unique to the non-aqueous electrolyte solution containing the sulfonylimide compound (1), the inventors have found that dissolving CO₂ or other component in a predetermined amount or more in the non-aqueous electrolyte solution containing the sulfonylimide compound (1) can reduce the self-discharge of the battery without adding vinylene carbonate to the non-aqueous electrolyte solution. Further, as described in the following examples, the non-aqueous electrolyte solution containing the sulfonylimide compound (1) causes even less self-discharge (reduces the self-discharge more effectively (has good storage characteristics)) when CO₂ is dissolved into the electrolyte solution, and also brings great improvements in battery performance, such as reduced DCR and impedance of the battery and improved low temperature charge-discharge characteristics and charge-discharge cycle characteristics, compared with a non-aqueous electrolyte solution containing LiPF₆ alone.

In this specification, CO₂ or other component dissolved in the non-aqueous electrolyte solution containing the sulfonylimide compound (1) means CO₂ or other component that is intentionally dissolved in the non-aqueous electrolyte solution, but does not exclude, for example, the CO₂ or other component originally contained in a raw material of the non-aqueous electrolyte solution such as an electrolyte solution solvent, or CO₂ or other component that is inevitably dissolved in the non-aqueous electrolyte solution in an ordinary production process of the non-aqueous electrolyte solution or the secondary battery. In other words, the total amount of dissolved CO₂ or other component, which will be described later, may include CO₂ or other component in the raw material and CO₂ or other component inevitably dissolved, together with CO₂ or other component intentionally dissolved.

CO₂ or other component dissolved in the non-aqueous electrolyte solution is not limited to have any particular form, and may be present in at least one of CO₂, CO, HCO₃⁻, or CO₃²⁻, i.e., in any one of the forms or two or more of the forms.

The total amount of CO₂ or other component dissolved in the non-aqueous electrolyte solution is, for example, 20 ppm by mass or more, preferably 50 ppm by mass or more, more preferably 100 ppm by mass or more, still more preferably 150 ppm by mass or more, far more preferably 200 ppm by mass or more, particularly preferably 250 ppm by mass or more, in terms of the ratio to the electrolyte solution. The upper limit of the total amount of dissolved CO₂ or other component is not limited to a particular value, but is, for example, equal to or lower than the saturation concentration at 25°C. The total amount of dissolved CO₂ or other component can be measured by a method described in the following examples, for example, gas chromatography.

In this specification, the total amount of CO₂ or other component dissolved in the non-aqueous electrolyte solution means: the total amount of CO₂ or other component dissolved in the electrolyte solution after the preparation (just prepared) or after an optional aging period (e.g., one week) for stabilizing the amount of dissolved CO₂ or other component in the preparing of the non-aqueous electrolyte solution; or the total amount of CO₂ or other component dissolved in the electrolyte solution extracted from the secondary battery in, for example, a nitrogen atmosphere after the aging of the battery in the process of manufacturing the secondary battery. Examples of the aging include the following processes and processes performed under the conditions described in the following section of Examples.
(I) After the solution is injected and the battery is partially charged, the battery is treated (stored) at a high temperature of 30°C or higher for a period of not less than 6 hours and not more than 28 days. The battery which has been degassed, resealed, and then checked to have no defects in the initial performance by charge-discharge is stored at 50% depth of charge for a week or more to check that the battery has no defects caused by the self-discharge.
(II) The same process as the process (I) except that no high temperature treatment is performed after the partial charging.
(III) The same process as the process (I) except that no degassing is performed after the high temperature treatment.

Examples of the method of dissolving CO₂ or other component in the non-aqueous electrolyte solution containing the sulfonylimide compound (1) include: a method (A) of dissolving CO₂ or other component in the non-aqueous electrolyte solution in the preparing of the non-aqueous electrolyte solution; and a method (B) of dissolving CO₂ or other component in the non-aqueous electrolyte solution in the process of manufacturing the secondary battery.

Specifically, the method (A) of dissolving CO₂ or other component in the non-aqueous electrolyte solution in the preparing of the non-aqueous electrolyte solution includes injecting a non-aqueous electrolyte solution that contains the sulfonylimide compound (1) and 20 ppm by mass or more of CO₂ or other component dissolved (may be hereinafter referred to as an "electrolyte solution containing CO₂ or other component dissolved" or a "CO₂ dissolving electrolyte solution") into the secondary battery. Examples of the method of dissolving CO₂ or other component in the non-aqueous electrolyte solution (dissolving) include: bringing a gas containing CO₂ or other component into contact with the non-aqueous electrolyte solution (liquid contacting); blowing the gas containing CO₂ or other component into the non-aqueous electrolyte solution (bubbling); stirring the non-aqueous electrolyte solution in a gas atmosphere containing CO₂ or other component (stirring); bringing a high-pressure gas containing CO₂ or other component into contact with the non-aqueous electrolyte solution (a method of pressurizing the gas containing CO₂ or other component into the non-aqueous electrolyte solution, pressurizing); and adding a substance that generates the gas containing CO₂ or other component to the non-aqueous electrolyte solution (adding). Examples of the substance that generates the gas containing CO₂ or other component include bicarbonate, carbonate, and dry ice. CO₂ or other component can be dissolved in an electrolyte solvent generally used for a non-aqueous electrolyte solution. Thus, the non-aqueous electrolyte solution may be prepared by dissolving the sulfonylimide compound (1) in an electrolyte solvent containing CO₂ or other component dissolved in advance. CO₂ or other component can be dissolved in the electrolyte solution solvent by the same method as described above. As another method, introducing a non-aqueous electrolyte solution prepared in advance into a sealed container to about 1/10 of the volume of the container and filling the container with CO₂ or other component after the inside of the container is made almost vacuum is repeated several times to replace the air in the container with CO₂ or other component, and finally, the container is stored in a sealed state at a cool temperature for several days (replacing). The dissolving may include at least one of the above-described processes or a combination of the processes. The dissolving preferably includes at least one of the pressurizing, the liquid contacting, the bubbling, or the replacing, more preferably at least one of the pressurizing, the liquid contacting, or the bubbling, much more preferably the pressurizing and the replacing (or a combination of the pressurizing and the replacing).

In the method (A), the secondary battery may be assembled in a CO₂ atmosphere or an atmosphere containing CO₂ in view of controlling the total amount of CO₂ or other component dissolved in the non-aqueous electrolyte solution to be constant. Specifically, injecting the non-aqueous electrolyte solution containing CO₂ or other component dissolved in advance into the battery or the process after the injecting may be carried out in the CO₂ atmosphere or the atmosphere containing CO₂. Alternatively, the battery into which the electrolyte solution has been injected may be exposed to a high pressure CO₂ atmosphere.

The electrolyte solution containing CO₂ or other component dissolved, used in the method (A), is obtained by the method for manufacturing a non-aqueous electrolyte solution of the present embodiment. The method includes the dissolving including at least one of the above-described processes to dissolve 20 ppm by mass or more of CO₂ or other component in the non-aqueous electrolyte solution containing the sulfonylimide compound (1).

Examples of the method (B) of dissolving CO₂ or other component in the non-aqueous electrolyte solution in the process of manufacturing the secondary battery include: assembling the secondary battery in a CO₂ atmosphere and injecting the non-aqueous electrolyte solution into the battery (specifically, a battery housing with three sides sealed is filled with CO₂ after the inside of the housing is made almost vacuum, the non-aqueous electrolyte solution is then injected into the battery from an unsealed side, and the battery is sealed at normal pressure); and replacing, with carbon dioxide (CO₂), air in the secondary battery into which the non-aqueous electrolyte solution has been injected. The replacement of the air in the battery with CO₂ can be carried out in the same manner as the replacement of the air in the container with CO₂. Specifically, the process of filling the battery housing containing the non-aqueous electrolyte solution with CO₂ after the inside of the housing is made almost vacuum is repeated several times to replace the air in the housing with CO₂.

The total amount of CO₂ or other component dissolved in the non-aqueous electrolyte solution varies depending on the temperature of the non-aqueous electrolyte solution. Thus, the temperature of the non-aqueous electrolyte solution is preferably controlled to be constant in the process of preparing the non-aqueous electrolyte solution and/or the process of manufacturing the secondary battery.

### (Electrolyte Solution Solvent)

The non-aqueous electrolyte solution may contain an electrolyte solution solvent. The electrolyte solution solvent is not limited to particular solvents and may be any kind of electrolyte solution solvent that can dissolve and disperse the electrolyte salt. Examples of the electrolyte solution solvent include non-aqueous solvents and media such as a polymer and polymer gel that can be a substitute for the electrolyte solution solvent. Any solvents that are generally used for batteries can be used.

Suitable examples of the non-aqueous solvents include a solvent that has a large dielectric constant and a boiling point of 60°C or higher, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate, ethyl methyl carbonate, diethyl carbonate, diphenyl carbonate, and methyl phenyl carbonate; saturated cyclic carbonic acid ester solvents such as ethylene carbonate, propylene carbonate, 2,3-dimethyl ethylene carbonate, 1,2-butylene carbonate, and erythritan carbonate; fluorine-containing cyclic carbonic acid ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, butyl acetate, and propyl propionate. These solvents may be used alone or in combination of two or more thereof.

Among the electrolyte solution solvents, the carbonate solvents such as the chain carbonate ester solvents and the saturated cyclic carbonate ester solvents, the lactone solvents, the ether solvents, the nitrile solvents, and the chain ester solvents are preferable, the chain carbonate solvents, the saturated cyclic carbonate solvents, and the lactone solvents are more preferable, and the chain carbonate solvents and the saturated cyclic carbonate solvents are much more preferable. Specifically, dimethyl carbonate, ethyl methyl carbonate, diethyl carbonate, ethylene carbonate, propylene carbonate, γ-butyrolactone and γ-valerolactone are preferable, and dimethyl carbonate, ethyl methyl carbonate, diethyl carbonate, ethylene carbonate, and propylene carbonate are more preferable.

The electrolyte solution solvent may contain, in addition to the organic solvents listed above, a solvent that is also called ionic liquid, contains a cationic component and an anionic component, and is in a molten state at room temperature and flowable. A non-aqueous electrolyte solution containing the ionic liquid alone as the electrolyte solution solvent (i.e., containing none of the organic solvents) is not preferable because it degrades the performance of the battery using the electrolyte solution as described in the following section of Examples. The ionic liquid is not limited to a particular one, and examples thereof include 1-ethyl-3-methylimidazolium bis(fluorosulfonyl)imide (EMImFSI), 1-methyl-1-propylpyrrolidinium bis(fluorosulfonyl)imide (P13FSI), and room temperature molten salts described in Japanese Unexamined Patent Publication No. 2018-170272 (Patent Document 3).

The polymer or the polymer gel can be used instead of the electrolyte solution solvent by the following method. Examples of the method include: a method of dropping a solution prepared by dissolving an electrolyte salt in a solvent onto a polymer film formed by a known method to impregnate the polymer film with the electrolyte salt and the non-aqueous solvent so that the polymer film supports the electrolyte salt and the non-aqueous solvent; a method of melting and mixing a polymer and an electrolyte salt at a temperature higher than the melting point of the polymer, forming the mixture into a film, and impregnating the film with a solvent (the method forms gel electrolyte); a method of mixing a non-aqueous electrolyte solution prepared by dissolving an electrolyte salt in an organic solvent in advance with a polymer, forming the mixture into a film by casting or coating, and volatilizing the organic solvent; and a method of molding a mixture obtained by melting and mixing a polymer and an electrolyte salt at a temperature higher than the melting point of the polymer (the method forms intrinsic polymer electrolyte).

Examples of the polymer used as a substitute for the electrolyte solution solvent include polyethylene oxide (PEO) that is a homopolymer or copolymer of an epoxy compound (such as ethylene oxide, propylene oxide, butylene oxide, and allyl glycidyl ether), polyether polymers such as polypropylene oxide, methacrylic polymers such as polymethylmethacrylate (PMMA), nitrile polymers such as polyacrylonitrile (PAN), fluorine polymers such as polyvinylidene fluoride (PVdF), polyvinylidene fluoride-hexafluoropropylene, and copolymers thereof. These polymers may be used alone or in combination of two or more of them.

### (Additives)

The non-aqueous electrolyte solution may further contain at least one selected from the group consisting of a compound represented by the general formula (4):

[Chemical Formula 4] M¹PO_{c}F_{d}

(where M¹ represents an alkali metal element, 1 ≤ c ≤ 3, and 1 ≤ d ≤ 3) (4) (this compound will be hereinafter referred to as a "fluorophosphoric acid compound (4)"), a compound represented by the general formula (5):

[Chemical Formula 5] M²(FSO₃)ₑ

(where M² represents a monovalent or divalent metal element and e is 1 or 2) (5) (this compound will be hereinafter referred to as a "fluorosulfonic acid compound (5)"), or a compound represented by the general formula (6). 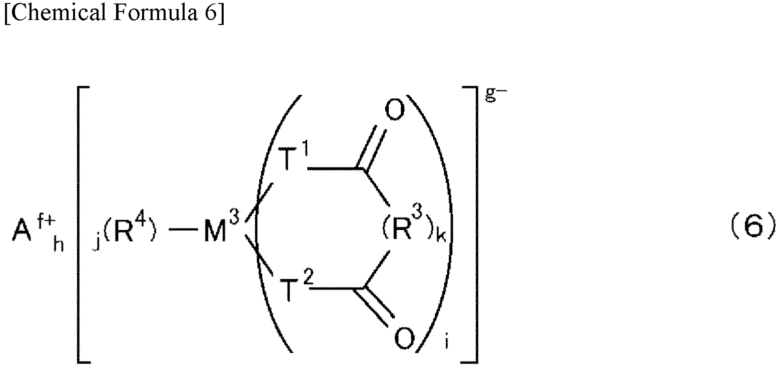 (In the general formula (6), M³ represents B or P, A^{f+} represents a metal ion, H, or an onium ion, 1 ≤ f ≤ 3, 1 ≤ g ≤ 3, h is g/f, 1 ≤ i ≤ 3, 0 ≤ j ≤ 4, k is 0 or 1, R³ represents an alkylene group having 1 to 10 carbon atoms or a halogenated alkylene group having 1 to 10 carbon atoms, R⁴ represents F or a fluorinated alkyl group having 1 to 10 carbon atoms, and T¹ and T² each independently represent O or S.) (This compound may be referred to as a "fluorooxalato compound (6)"). These compounds (4), (5) and (6) may be used alone or in combination of two or more of them.

Adding at least one of the fluorophosphoric acid compound (4), the fluorosulfonic acid compound (5), or the fluorooxalato compound (6) to the non-aqueous electrolyte solution containing the sulfonylimide compound (1) brings improvements in battery performance. Thus, the electrolyte solution preferably contains at least one of the compound (4), (5), or (6). Although the addition of at least one of the compound (4), (5), or (6) reduces the self-discharge of the battery using the non-aqueous electrolyte solution containing the sulfonylimide compound (1), there is room for improvement because the effect (degree) of reduction of the self-discharge is not sufficient compared with a battery using an electrolyte solution containing LiPF₆ alone. In this regard, the inventors of the present application have found that the battery causes even less self-discharge when the non-aqueous electrolyte solution containing the sulfonylimide compound (1) contains at least one of the compounds (4), (5) and (6) added thereto, and also contains CO₂ or other component dissolved therein (when the addition of at least one of the compounds (4), (5) and (6) and the dissolution of CO₂ or other component are combined). This is found to bring greater improvements in battery performance.

Examples of the alkali metal element represented by M¹ in the general formula (4) include lithium, sodium, potassium, rubidium, and cesium. Among them, lithium is preferred.

Examples of the fluorophosphoric acid compound (4) include lithium monofluorophosphate (Li₂PO₃F) and lithium difluorophosphate (LiPO₂F₂). These fluorophosphoric acid compounds (4) may be used alone or in combination of two or more of them. Among the fluorophosphoric acid compounds (4), LiPO₂F₂ is preferable.

Examples of the monovalent metal element represented by M² in the general formula (5) include the elements listed above as the examples of the alkali metal element. Examples of the divalent metal element represented by M² include an alkaline earth metal element. Examples of the alkaline earth metal include beryllium, magnesium, calcium, strontium, and barium. Among them, the monovalent metal elements (alkali metal elements) are preferable, and lithium is more preferable.

Examples of the fluorosulfonic acid compound (5) include lithium fluorosulfonate (LiFSO₃), sodium fluorosulfonate (NaFSO₃), potassium fluorosulfonate (KFSO₃), and magnesium fluorosulfonate (Mg(FSO₃)₂). These fluorosulfonic acid compounds (5) may be used alone or in combination of two or more or them. Among the fluorosulfonic acid compounds (5), LiFSO₃ is preferable.

In the general formula (6), M³ represents B (boron) or P (phosphorus).

In the general formula (6), A^{f+} represents a metal ion, H (hydrogen), or an onium ion. Examples of the metal ion include an alkali metal ion, an alkaline earth metal ion, and a trivalent metal ion. Examples of the alkali metal and the alkaline earth metal include those described above. Examples of the trivalent metal include boron (B), aluminum (Al), gallium (Ga), indium (In), and thallium (Tl). Among the metal ions, Li⁺, Na⁺, Mg²⁺ and Ca²⁺ are preferable, and Li⁺ is more preferable. Examples of the onium ion include chain quaternary ammonium such as tetraethylammonium, tetrabutylammonium, and triethylmethylammonium; chain tertiary ammonium such as triethylammonium, tributylammonium, dibutylmethylammonium, and dimethylethylammonium; imidazolium such as 1-ethyl-3-methylimidazolium and 1,2,3-trimethylimidazolium; and pyrrolidinium such as N,N-dimethylpyrrolidinium and N-ethyl-N-methylpyrrolidinium. Among them, chain quaternary ammonium and imidazolium are preferable, and chain quaternary ammonium is more preferable. That is, f, g, and h in the general formula (6) are preferably 1.

In the general formula (6), R³ represents an alkylene group having 1 to 10 carbon atoms or a halogenated alkylene group having 1 to 10 carbon atoms. Examples of the alkylene group having 1 to 10 carbon atoms include a methylene group, an ethylene group, a propylene group, a butylene group, a pentylene group, a hexylene group, a heptylene group, an octylene group, a nonylene group, and a decalene group, which may be branched. Examples of the halogenated alkylene group having 1 to 10 carbon atoms include an alkylene group having 1 to 10 carbon atoms and having some or all of hydrogen atoms substituted with F, Cl, Br, or I (preferably with F, e.g., a fluoromethylene group or a fluoroethylene group). R³ is preferably an alkylene group having 1 to 4 carbon atoms or a fluorinated alkylene group having 1 to 4 carbon atoms, more preferably an alkylene group having 1 to 2 carbon atoms or a fluorinated alkylene group having 1 to 2 carbon atoms. In the general formula (6), k is 0 or 1. When k is 0, it represents a direct bond of a carbonyl group, and the compound of the general formula (6) is oxalatoborate or oxalatophosphonium. k is preferably 0.

In the general formula (6), R⁴ represents F (fluorine) or a fluorinated alkyl group having 1 to 10 carbon atoms. Examples of the fluorinated alkyl group having 1 to 10 carbon atoms include a fluoromethyl group, a difluoromethyl group, a trifluoromethyl group, a fluoroethyl group, a difluoroethyl group, a trifluoroethyl group, a tetrafluoroethyl group, a perfluoroethyl group, a fluoropropyl group, a perfluoropropyl group, a perfluorobutyl group, and a perfluorooctyl group. R⁴ is preferably a fluorinated alkyl group having 1 to 2 carbon atoms or F, more preferably F.

In the general formula (6), T¹ and T² each independently (identically or differently) represent O (oxygen) or S (sulfur). Both of T¹ and T² are preferably O for availability.

In the general formula (6), i is preferably 1 or 2 when M³ is B (boron), j is 2 when i is 1, and R⁴ is more preferably F. When i is 2, j is 0. When M³ is P (phosphorus), i is 1 to 3, j is 4 when i is 1, j is 2 when i is 2, and j is 0 when i is 3.

Examples of the fluorooxalato compound (6) include difluoro(oxalato)borate salts, bis(oxalato)borate salts, tetrafluorophosphonium salts, difluorobis(oxalato)phosphonium salts, and tris(oxalato)phosphonium salts. More specific examples include lithium salts having an oxalate skeleton such as lithium bis(oxalato)borate (LiBOB), lithium difluoro(oxalato)borate (LiDFOB), lithium difluoro(oxalato)phosphate (LIDFOP), lithium tetrafluoro(oxalato)phosphate (LITFOP), lithium difluorobis(oxalato)phosphate (LiDFOP), and lithium tris(oxalato)phosphate. These fluorooxalato compounds (6) may be used alone or in combination of two or more of them. Among the fluorooxalato compounds (6), lithium difluoro(oxalato)borate (LiDFOB) is preferred.

The content of the additive in the non-aqueous electrolyte solution is preferably 0.01 mass% or more, more preferably 0.1 mass% or more, still more preferably 0.2 mass% or more, even more preferably 0.3 mass% or more, far more preferably 0.5 mass% or more, and preferably 3 mass% or less, more preferably 2 mass% or less, still more preferably 1 mass% or less, in view of reducing the self-discharge of the battery and further improving the battery performance.

### (Other Components)

The non-aqueous electrolyte solution may contain other additive (an additive different from the compounds (4), (5) and (6)) for improving various characteristics of the lithium ion secondary battery. Examples of the other additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as fluoroethylene carbonate (FEC), trifluoropropylene carbonate, phenylethylene carbonate, and erythritan carbonate; sulfamic acid (amidosulfuric acid, H₃NSO₃); and sulfamate salts (alkali metal salts such as lithium salts, sodium salts, and potassium salts; alkaline earth metal salts such as calcium salts, strontium salts, and barium salts; other metal salts such as manganese salts, copper salts, zinc salts, iron salts, cobalt salts, and nickel salts; ammonium salts; and guanidine salts). These other additives may be used alone or in combination of two or more of them.

The other additive is preferably used in a range of 0.1 mass% or more to 10 mass% or less, more preferably in a range of 0.2 mass% or more to 8 mass% or less, and even more preferably in a range of 0.3 mass% or more to 5 mass% or less, with respect to 100 mass% of the non-aqueous electrolyte solution. When the amount of the other additive used is too small, it may be difficult for the other additive to exhibit its effect. On the other hand, when the amount of the other additive used is large, it is also difficult for the other additive to exhibit its effect corresponding to the amount added, and the non-aqueous electrolyte solution may become more viscous, lowering the electrical conductivity.

The non-aqueous electrolyte solution described above (the electrolyte solution containing CO₂ or other component dissolved) is used, for example, for a battery (a battery having a charge-discharge mechanism) and a power storage (electrochemical) device (or an ion conductive material constituting such a device). Specifically, the electrolyte solution can be used as an electrolyte solution constituting, for example, a primary battery, a secondary battery (e.g., a lithium (ion) secondary battery), a fuel battery, an electrolytic capacitor, an electric double layer capacitor, a solar battery, and an electrochromic display device. Hereinafter, the description will be made with reference to a battery (especially a secondary battery) as an example.

### <Secondary Battery>

A secondary battery of the present embodiment includes a positive electrode, a negative electrode, and a non-aqueous electrolyte solution. The non-aqueous electrolyte solution in this secondary battery contains the sulfonylimide compound (1) and dissolves 20 ppm by mass or more of CO₂ or other component. In other words, the non-aqueous electrolyte solution in the secondary battery corresponds to the non-aqueous electrolyte solution of the present embodiment (the electrolyte solution containing CO₂ or other component dissolved).

### (Positive Electrode)

The positive electrode includes a positive electrode current collector and a positive electrode mixture layer formed on the positive electrode current collector, and is usually in a sheet shape.

Examples of metal used for the positive electrode current collector include iron, copper, aluminum, nickel, stainless steel, titanium, tantalum, gold, and platinum. Among them, aluminum is preferred. The shape and size of the positive electrode current collector are not limited to particular ones.

The positive electrode mixture layer is made of a positive electrode mixture (a positive electrode composition). The positive electrode mixture contains components such as a positive electrode active material, a conductivity aid, a binder, and a solvent dispersing these components.

In the secondary battery of the present embodiment, the positive electrode (the positive electrode mixture) preferably contains at least one of a ternary positive electrode active material represented by the general formula (7):

[Chemical Formula 7] Li_{z}NiₓMn_{y}Co(_{1-x-y})O₂

(where 0.9 ≤ z ≤ 1.1, 0.2 ≤ x < 1, 0 ≤ y ≤ 0.4, and 0 < 1-x-y ≤ 0.8) (7) (hereinafter referred to as a "ternary positive electrode active material (7)") or a positive electrode active material represented by the general formula (8):

[Chemical Formula 8] LiₚFe₁₋ᵣQᵣ(PO₄)ₚ (8)

(where Q represents Mn or Ni, 0.9 ≤ p ≤ 1.1, and 0 ≤ r ≤ 0.05)
(hereinafter referred to as an "iron phosphate positive electrode active material (8)"). These positive electrode active materials may be used alone or in combination of two or more of them.

It is found that when the non-aqueous electrolyte solution containing the sulfonylimide compound (1) is used for a secondary battery including a positive electrode containing the ternary positive electrode active material (7) or the iron phosphate positive electrode active material (8) as the positive electrode active material, the battery causes the greater self-discharge in a fully charged state than a battery using a non-aqueous electrolyte solution containing LiPF₆ alone. In this regard, the inventors of the present application have found that the battery causes even less self-discharge when CO₂ or other component is dissolved in the non-aqueous electrolyte solution containing the sulfonylimide compound (1), i.e., by the combination of the dissolved CO₂ or other component and the ternary positive electrode active material (7) or the iron phosphate positive electrode active material (8). This is found to bring greater improvements in battery performance.

Examples of the ternary positive electrode active material (7) include LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, and LiNi_{0.8}Co_{0.1}Mn_{0.1}O₂. The ternary positive electrode active material (7) may be used alone or in combination of two or more of them.

Examples of the iron phosphate positive electrode active material (8) include compounds having an olivine structure, such as LiFePO₄ and LiFe_{0.995}Mn_{0.005}PO₄. The iron phosphate positive electrode active material (8) may be used alone or in combination of two or more of them.

The positive electrode contains at least one of the ternary positive electrode active material (7) or the iron phosphate positive electrode active material (8), but may further contain other positive electrode active material (a positive electrode active material other than the ternary positive electrode active material (7) and the iron phosphate positive electrode active material (8)). The other positive electrode active material may be any material that can absorb and desorb various ions (such as lithium ions and sodium ions). For example, a positive electrode active material used in a known secondary battery (a lithium ion secondary battery or a sodium ion secondary battery) can be used.

Examples of the positive electrode active material used for the lithium ion secondary battery include: transition metal oxides such as lithium cobalt oxide, lithium nickel oxide, lithium manganese oxide, and ternary oxides represented by LiNi_{1-v-w}CoₓAl_{y}O₂ (0 ≤ v ≤ 1, 0 ≤ w ≤ 1) other than the ternary positive electrode active material (7); compounds having an olivine structure such as LiAPO₄ (A represents Mn, Ni, or Co); solid solution materials incorporating two or more transition metals (such as a solid solution of electrochemically inactive layered Li₂MnO₃ and electrochemically active layered LiMO₂ (M represents a transition metal such as Co and Ni); LiCoₓMn₁₋ₓO₂ (0 ≤ x ≤ 1); LiNiₓMn₁₋ₓO₂ (0 ≤ x ≤ 1); compounds having a fluorinated olivine structure such as Li₂APO₄F (A represents Fe, Mn, Ni, or Co); and sulfur. These may be used alone or in combination of two or more of them.

Examples of the positive electrode active material used for the sodium ion secondary battery include NaNiO₂, NaCoO₂, NaMnO₂, NaVO₂, NaFeO₂, Na(Ni_{X}Mn_{1-X})O₂ (0 < X < 1), Na(Fe_{X}Mn_{1-X})O₂ (0 < X < 1), NaVPO₄F, Na₂FePO₄F, and Na₃V₂(PO₄)₃. These may be used alone or in combination of two or more of them.

Among the other positive electrode active materials, in particular, a positive electrode active material capable of absorbing and desorbing lithium ions may be suitably used. Such a positive electrode active material is used, for example, in a lithium ion secondary battery using a non-aqueous electrolyte solution. Such a non-aqueous system usually has a lower ionic conductivity than an aqueous system. However, the present disclosure can efficiently improve the discharge capacity of the non-aqueous system.

The content of the positive electrode active material (the total content if two or more positive electrode active materials are contained) is preferably 75 mass% or more, more preferably 85 mass% or more, still more preferably 90 mass% or more, and preferably 99 mass% or less, more preferably 98 mass% or less, and still more preferably 95 mass% or less, with respect to 100 mass% of the total amount of the components contained in the positive electrode mixture material in view of improving the output characteristics and electrical characteristics of the secondary battery.

The conductivity aid is used to improve the output of the lithium ion secondary battery. Conductive carbon is mainly used as the conductivity aid. Examples of the conductive carbon include carbon black, fiber-like carbon, and graphite. These conductivity aids may be used alone or in combination of two or more of them. Among the conductivity aids, carbon black is preferable. Examples of the carbon black include Ketjen black and acetylene black. In the nonvolatile content of the positive electrode mixture, the conductivity aid is preferably contained in an amount of 1 mass% to 20 mass%, more preferably 1.5 mass% to 10 mass%, in view of improving the output characteristics and electrical characteristics of the lithium ion secondary battery.

Examples of the binder include: fluorine-based resins such as polyvinylidene fluoride and polytetrafluoroethylene; synthetic rubbers such as styrene-butadiene rubber and nitrile-butadiene rubber; polyamide-based resins such as polyamide-imide; polyolefin-based resins such as polyethylene and polypropylene; poly(meth)acrylic resins; polyacrylic acids; and cellulose-based resins such as carboxymethyl cellulose. The binders may be used alone or in combination of two or more of them. These binders may be dissolved or dispersed in a solvent in use.

Examples of the solvent include N-methylpyrrolidone, dimethylformamide, dimethylacetamide, methyl ethyl ketone, tetrahydrofuran, acetonitrile, acetone, ethanol, ethyl acetate, and water. These solvents may be used alone or in combination of two or more of them. The amount of the solvent used is not limited to a particular value, and may be determined as appropriate in accordance with the manufacturing method and the material used.

If necessary, the positive electrode mixture may also contain other component, for example: polymers including non-fluorine polymers such as a (meth)acrylic polymer, a nitrile polymer, and a diene polymer, and fluorine polymers such as polytetrafluoroethylene; an emulsifier such as an anionic emulsifier, a nonionic emulsifier, and a cationic emulsifier; dispersing agents including polymer dispersing agents such as a styrene-maleic acid copolymer and polyvinylpyrrolidone; a thickener such as carboxymethyl cellulose, hydroxyethyl cellulose, polyvinyl alcohol, polyacrylic acid (salt), and an alkali-soluble (meth)acrylic acid-(meth)acrylic acid ester copolymer; and a preservative. In the nonvolatile content of the positive electrode mixture, the other component is preferably contained in an amount of 0 mass% to 15 mass%, more preferably 0 mass% to 10 mass%.

The positive electrode mixture can be prepared, for example, by mixing the positive electrode active material, the conductivity aid, the binder, the solvent, and the optional other component, and dispersing the mixture using a beads mill, a ball mill, or an agitating mixer.

The positive electrode may be formed (coated) by any method without particular limitations. Examples of the method include: (1) a method of applying the positive electrode mixture to the positive electrode current collector (followed by drying) by a common coating method (e.g., a doctor blade method); (2) a method of immersing the positive electrode current collector in the positive electrode mixture (followed by drying); (3) a method of joining a sheet made of the positive electrode mixture to the positive electrode current collector (e.g., with a conductive adhesive) and pressing (and drying) the sheet; (4) a method of applying or casting the positive electrode mixture containing a liquid lubricant added, onto the positive electrode current collector, forming the positive electrode mixture into a desired shape, and then removing the liquid lubricant (followed by extending the product uniaxially or multiaxially); and (5) a method of making the positive electrode mixture (or a solid content forming the positive electrode mixture layer) into slurry with an electrolyte solution, transferring the slurry in a semisolid state to a current collector (the positive electrode current collector), and using the positive electrode mixture as an electrode (the positive electrode) without drying.

The positive electrode mixture layer thus formed or coated (applied) may be dried or pressed, if necessary.

### (Negative Electrode)

The negative electrode includes a negative electrode current collector and a negative electrode mixture layer formed on the negative electrode current collector, and is usually formed into a sheet shape.

Examples of metal used for the negative electrode current collector include iron, copper, aluminum, nickel, stainless steel (SUS), titanium, tantalum, gold, and platinum. Among them, copper is preferred. The shape and size of the negative electrode current collector are not limited to particular ones.

The negative electrode mixture layer is made of a negative electrode mixture (a negative electrode composition). The negative electrode mixture contains components such as a negative electrode active material, a conductivity aid, a binder, and a solvent dispersing these components.

The negative electrode active material may be any known negative electrode active material used for various batteries (e.g., a lithium secondary battery) as long as the material can absorb and desorb ions (e.g., lithium ions). A specific negative electrode active material can be graphite materials such as artificial graphite and natural graphite, a mesophase calcined body made from coal or petroleum pitches, carbon materials such as non-graphitizable carbon, a Si-based negative electrode material such as Si, a Si alloy, and SiO, a Sn-based negative electrode material such as a Sn alloy, and lithium alloys such as a lithium metal and a lithium-aluminum alloy. These negative electrode active materials may be used alone or in combination of two or more of them.

The negative electrode mixture may further include a conductivity aid (conductive material), a binder, a solvent, or the like. As the conductivity aid, the binder, the solvent, and the like, the same components as those described above can be used. The proportion and the like of the components used is also the same as described above.

The negative electrode may be produced in the same manner as the positive electrode.

### (Separator)

The secondary battery may include a separator. The separator is disposed so as to separate between the positive electrode and the negative electrode. The separator is not limited to a particular one, and any known separator can be used in the present disclosure. Specific examples of the separator include a porous sheet (e.g., a polyolefin-based microporous separator and a cellulose-based separator) formed of a polymer capable of absorbing and retaining an electrolyte solution (non-aqueous electrolyte solution), a nonwoven fabric separator, and a porous metal body.

Examples of the material of the porous sheet include polyethylene, polypropylene, and a laminate having a three layer structure of polypropylene, polyethylene, and polypropylene.

Examples of the material of the nonwoven fabric separator include cotton, rayon, acetate, nylon, polyester, polypropylene, polyethylene, polyimide, aramid, and glass. These materials may be used alone or in combination of two or more of them depending on the required mechanical strength.

### (Battery Exterior Material)

A battery element including the positive electrode, the negative electrode, and the non-aqueous electrolyte solution (and the separator) is usually contained in a battery housing to protect the battery element from external shocks and environmental degradation when the battery is in use. The battery housing is made of any material, and any known battery housing can be used.

If necessary, an expanded metal, a fuse, an overcurrent protection element such as a PTC element, or a lead plate may be placed in the battery housing to avoid an increase in internal pressure of the battery and excessive charge/discharge.

The battery (such as the lithium ion secondary battery) is not limited to have a particular shape, and may have any known shape such as a cylindrical shape, a rectangular shape, a laminate shape, a coin shape, and a large shape. When used as a high-voltage (e.g., tens to hundreds of volts) power supply to be mounted in an electric vehicle or a hybrid electric vehicle, for example, the batteries may be connected in series into a battery module.

The rated charging voltage of the secondary battery (such as the lithium ion secondary battery) is not limited to a particular value, and may be 3.6 V or more, preferably 4.0 V or more, more preferably 4.1 V or more, much more preferably 4.2 V or more, when the secondary battery includes a positive electrode mainly containing the ternary positive electrode active material (7). When the secondary battery includes a positive electrode mainly containing the iron phosphate positive electrode active material (8), the rated charging voltage may be 2.5 V or more, preferably 3.0 V or more, more preferably 3.2 V or more, and much more preferably 3.5 V or more. Although the energy density increases as the rated charging voltage increases, the rated charging voltage may be 4.6 V or less (e.g., 4.5 V or less) in view of safety.

### <Method of Manufacturing Secondary Battery>

The secondary battery of the present embodiment can be easily manufactured, for example, by joining a positive electrode and a negative electrode (with a separator interposed therebetween, if necessary), placing the obtained laminate in a battery housing, injecting a non-aqueous electrolyte solution into the battery housing, and sealing the battery housing.

In the method of manufacturing the secondary battery of the present embodiment, the non-aqueous electrolyte solution in the obtained secondary battery contains the sulfonylimide compound (1) and dissolves 20 ppm by mass or more of CO₂ or other component. Thus, as described above, (A) CO₂ or other component is dissolved in the non-aqueous electrolyte solution in the process of preparing of the non-aqueous electrolyte solution, i.e., the non-aqueous electrolyte solution of the present embodiment (electrolyte solution containing CO₂ or other component dissolved) is used as the non-aqueous electrolyte solution; or (B) CO₂ or other component is dissolved in the non-aqueous electrolyte solution in the process of manufacturing the secondary battery, i.e., the non-aqueous electrolyte solution is injected into the battery in a CO₂ atmosphere, or the air in the battery in which the non-aqueous electrolyte solution has been injected is replaced with CO₂.

In the method of manufacturing the secondary battery of the present embodiment, at least one of the ternary positive electrode active material (7) or the iron phosphate positive electrode active material (8) may be used as the positive electrode.

The method of manufacturing the secondary battery described above provides a secondary battery including a non-aqueous electrolyte solution containing the sulfonylimide compound (1) and CO₂ or other component dissolved, in a total amount of 20 ppm by mass or more. Advantageously, a secondary battery including the non-aqueous electrolyte solution and a positive electrode containing at least one of the ternary positive electrode active material (7) or the iron phosphate positive electrode active material (8) is obtained.

### [Examples]

The present disclosure will be described below by way of examples. The present disclosure is not limited to the following Examples.

### <Series of Example 1>

### (1-1) Preparation of Non-Aqueous Electrolyte Solution (Reference Electrolyte Solution)

In a mixture solvent of ethylene carbonate (EC) and ethyl methyl carbonate (EMC) in a volume ratio of 3 : 7 (manufactured by Kishida Chemical Co., Ltd., the same applies hereinafter) used as an electrolyte solution solvent, an electrolyte salt of a mixed salt composition containing LiFSI (manufactured by Nippon Shokubai Co., Ltd., the same applies hereinafter) and LiPF₆ (manufactured by Stella Chemifa Corporation, the same applies hereinafter) or an electrolyte salt of a simple salt composition containing LiPF₆ alone was dissolved in concentrations shown in Table 1-1 to prepare non-aqueous electrolyte solutions (may be hereinafter simply referred to as "electrolyte solutions.") A comparative electrolyte solution 1-2 was prepared by further adding 2 mass% of vinylene carbonate (VC) to the solution. In the following description, a non-aqueous electrolyte solution that does not intentionally dissolve CO₂ or other component will be referred to as a "reference electrolyte solution." This reference electrolyte solution was obtained without performing the dissolving (before the dissolving was performed), and may contain CO₂ or other component originally contained in the raw material or CO₂ or other component which was inevitably dissolved in the solution. Each of the obtained reference electrolyte solutions was analyzed by gas chromatography to determine the amount of CO₂ dissolved in the electrolyte solution. Table 1-1 shows the results in the column of "Reference electrolyte solution."

The amount of CO₂ dissolved in the non-aqueous electrolyte solution was determined by gas chromatography (gas chromatograph: GC-2010plus, manufactured by Shimadzu Corporation, column: Micropacked-ST manufactured by and Shinwa Chemical Industries, Ltd.) by the following method.

### (Measurement Conditions for Gas Chromatography)

For the measurement by gas chromatography, the non-aqueous electrolyte solution or calibration gas was directly fed into the gas chromatograph purged with nitrogen (in a nitrogen atmosphere) to block atmospheric air from entering the measurement system. The measurement by the gas chromatography was performed under the following conditions.

Column temperature program: the column temperature was kept at 37°C (for 2.5 minutes from the start), raised from 37°C to 250°C (at a rate of 20°C/min), raised from 250°C to 270°C (at a rate of 15°C/min), and kept at 270°C (for 5.42 minutes)
Temperature of vaporization chamber: 130°C
Temperature of detector: 300°C (BID)
Carrier Gas: helium (flow rate in column: 1.33 mL/min)
Injection amount: 1 µL (split method, split ratio: 5.0)

### (Method of Determining Amount of Dissolved CO₂)

Multiple kinds of standard helium gas each mixed with CO₂ in a known mixing ratio were analyzed under the same measurement conditions as the conditions for the gas chromatography described above except that the injection amount (1 µL) was changed to 1 mL, and a calibration curve showing the relationship between the amount of mixed (dissolved) CO₂ and a peak area of CO₂ gas was generated from the obtained peak area of the CO₂ gas. Subsequently, the non-aqueous electrolyte solutions obtained in the following Examples were analyzed by gas chromatography. Finally, the amount of CO₂ dissolved in each of the non-aqueous electrolyte solutions was determined by the external standard method.

### (1-2) Preparation of Non-Aqueous Electrolyte Solution Containing Dissolved CO₂ (CO₂ Dissolving Electrolyte Solution) (Method (A), Dissolving: Replacing)

Each of the electrolyte solutions obtained in "(1-1) Preparation of Non-Aqueous Electrolyte Solution (Reference Electrolyte Solution)" was put into a sealed bottle to about 1/10 of the volume of the bottle. The bottle was allowed to stand in a desiccator with an opening of the bottle facing up, and then the desiccator was evacuated to 40 mmHg with a vacuum pump. Then, CO₂ was supplied to fill the desiccator. This process was repeated a total of three times to replace the air in the bottle with CO₂. Thereafter, the bottle was sealed and stored in a refrigerator for three days to prepare a CO₂ dissolving electrolyte solution. The obtained CO₂ dissolving electrolyte solution was analyzed by gas chromatography to determine the amount of CO₂ dissolved in the electrolyte solution. Table 1-1 shows the results in the column of "(A) CO₂ dissolving electrolyte solution."

**[Table 1-1]**

| Composition of electrolyte solution | | VC added or not | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | | Type | Amount of CO₂ dissolved (ppm by mass) | Type | Amount of CO₂ dissolved (ppm by mass) | Amount of CO₂ dissolved (ppm by mass) |
| 0.05 | 1.15 | Not added | Electrolyte solution 1-1 | 2 | Electrolyte Solution 1-1_{CO2} | 150 | 151 |
| 0.2 | 1.0 | Not added | Electrolyte solution 1-2 | 1 | Electrolyte Solution 1-2_{CO2} | 152 | 152 |
| 0.6 | 0.6 | Not added | Electrolyte solution 1-3 | 1 | Electrolyte Solution 1-3_{CO2} | 153 | 152 |
| - | 1.2 | Not added | Comparative electrolyte solution 1-1 | 3 | Comparative electrolyte solution 1-1_{CO2} | 150 | - |
| - | 1.2 | Added (2 mass%) | Comparative electrolyte solution 1-2 | 1 | Comparative electrolyte Solution 1-2_{CO2} | 152 | 151 |

### (1-3) Preparation of Laminate Battery 1-1

### (Preparation of Positive Electrode)

LiNi_{1/3}Co_{1/3}Mn_{1/3}O₂ (product number: MX7h, manufactured by Umicore) as the ternary positive electrode active material, acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were dispersed in N-methyl-2-pyrrolidone (NMP) to prepare positive electrode mixture slurry (containing the positive electrode active material, AB, graphite, and PVdF in a solid mass ratio of 93 : 2 : 2 : 3). The obtained positive electrode mixture slurry was coated on one side of aluminum foil (a positive electrode current collector, manufactured by Nippon Foil Co., Ltd., thickness: 15 µm) with an applicator so that the coated slurry after drying weighed 19.4 mg/cm², and dried on a hot plate at 110°C for 10 minutes. The obtained product was further dried in a vacuum drying furnace at 110°C for 12 hours. Thereafter, the dried product was pressure-molded by a roll press to a density of 3.1 g/cm³ to obtain a positive electrode sheet (83 µm in thickness).

### (Preparation of Negative Electrode)

Graphite (natural graphite (product number: SMG, manufactured by Hitachi Chemical Co., Ltd.) and artificial graphite (product number: SFG15, manufactured by TIMCAL) in a solid mass ratio of 85 : 15) as the negative electrode active material, styrene-butadiene rubber (SBR, binder), and carboxymethyl cellulose (CMC, binder) were dispersed in ultrapure water to prepare negative electrode mixture slurry (containing the negative electrode active material, SBR, and CMC in a solid mass ratio of 97.3 : 1.5 : 1.2). The obtained negative electrode mixture slurry was coated on one side of copper foil (a negative electrode current collector, manufactured by Fukuda Metal Foil & Powder Co., Ltd., thickness: 15 µm) with an applicator so that the coated slurry after drying weighed 9.8 mg/cm², and dried on a hot plate at 80°C for 10 minutes. The obtained product was further dried in a vacuum drying furnace at 100°C for 12 hours. Thereafter, the dried product was pressure-molded by a roll press to a density of 1.3 g/cm³ to obtain a negative electrode sheet (113 µm in thickness).

### (Preparation of Laminate Battery)

The obtained positive and negative electrodes were cut, and polar leads were ultrasonically welded to the cut positive and negative electrodes. Then, the positive and negative electrodes were disposed to face each other with a 16-µm polyethylene (PE) separator interposed therebetween and sealed at three sides with a laminate film. Thus, batteries containing no solution were obtained. Subsequently, the electrolyte solutions shown in Table 1-1 or Table 1-2, 700 µL each, were injected into the batteries containing no solution from one unsealed side. The batteries were sealed under vacuum after the injection of the electrolyte solution. Thus, laminate batteries (cells) 1-1 with a voltage of 4.2 V and a capacity of 30 mAh were prepared.

Each of the obtained cells 1-1 was charged at a constant current of 0.1 C (3 mA) at room temperature (25°C, the same is applied hereinafter) for four hours using a charge/discharge tester (product number: ACD-01, manufactured by Asuka Electronic Co., Ltd.), and was left to stand at room temperature for five days. After being left to stand, the cell 1-1 was charged at a constant current of 0.5 C (15 mA) and a constant voltage of 4.2 V (CCCV) at room temperature for five hours. Thereafter, the cell 1-1 was discharged at a constant current of 0.2 C (6 mA) to a cutoff voltage (discharge cutoff voltage) of 2.75 V at room temperature, an excess of the laminate film was torn, and the cell 1-1 was degassed by vacuum sealing. The degassed cell 1-1 was charged again at the constant current and the constant voltage under the same conditions as described above, and discharged at a constant current of 1 C (30 mA) to a cutoff voltage of 2.75 V at room temperature. The cell was partially charged at 0.5 C (15 mA) at room temperature for an hour to a 50% depth of charge (SOC), and was held at room temperature for two weeks. The above-described process is referred to as aging of the cell.

### (1-4) Preparation of Laminate Battery 1-2 (Method (B))

Batteries containing no solution were prepared by the same method as described above, and the electrolyte solutions shown in Table 1-1, 700 µL each, were injected into the batteries containing no solution from one unsealed side. After the injection of the electrolyte solution, the battery was allowed to stand in a desiccator with an opening of the battery facing up, and then the desiccator was evacuated to 40 mmHg with a vacuum pump. Then, CO₂ was supplied to fill the desiccator. This process was repeated a total of three times to replace the air in the battery with CO₂, and the battery was sealed under normal pressure. Thus, laminate batteries (cells) 1-2 with a voltage of 4.2 V and a capacity of 30 mAh were prepared. The cells 1-2 were then aged in the same manner as the cells 1-1.

By the same method as described above, the air in each battery containing 700 µL of the electrolyte solution shown in Table 1-1 was replaced with CO₂, and then the battery was sealed under normal pressure. Thereafter, the battery was stored at room temperature for five days, the laminate was torn in a nitrogen atmosphere, and the electrolyte solution after the air replacement in the cell was extracted. The electrolyte solution extracted after the air replacement in the cell was analyzed by gas chromatography to determine the amount of CO₂ dissolved in the electrolyte solution. Table 1-1 shows the results in the column of "(B) Electrolyte solution after air replacement in cell."

### (1-5) Evaluation of Battery

### (Self-Discharge)

The aged cell was fully charged at a constant current of 1 C (30 mA) and a constant voltage of 4.2 V at room temperature to a cutoff current of 0.02 C (0.6 mA) and stored at 60°C for four weeks. An open circuit voltage (OCV) of the cell was measured before and after the storage. Table 1-2 shows the results. The smaller the degree of decrease in OCV (may be hereinafter simply referred to as "decrease in OCV") after the storage (measured value) relative to the OCV before the storage (measured value) is, the less the self-discharge of the battery occurs.

### (Impedance)

The aged cell was discharged at 0.2 C (6 mA) to 2.75 V at room temperature and then charged at a constant current of 1 C (30 mA) and 4.2 V at room temperature for 30 minutes to a 50% depth of charge (SOC), and impedance was measured with an impedance analyzer (product number: VSP-300, manufactured by BioLogic) under the condition of 25°C or -30°C in a frequency range from 1 GHz to 10 MHz (25°C) or 1 MHz (-30°C). A real axis resistance (interface resistance) was obtained from a frequency at which an arc of the measured value diverges. Table 1-2 shows the results. The frequency at which the arc diverges refers to a frequency at which a value of an imaginary axis reaches the minimum in the frequency range of 100 Hz to 0.01 Hz when the measurement was done at 25°C, and also refers to a frequency at which the value of the imaginary axis reaches the minimum in the frequency range of 10 Hz to 0.001 Hz when the measurement was done at -30°C.

### (DCR)

The aged cell was charged at a constant current of 1 C (30 mA) and a constant voltage of 4.2 V at room temperature to a cutoff current of 0.02 C (0.6 mA) to reach the fully charged state (100% SOC) or a 50% depth of charge (SOC). Subsequently, the cell that was fully charged (100% SOC) or charged to a 50% depth of charge (SOC) was left to stand for 30 minutes, discharged at 6 mA for 10 seconds, left to stand for another 30 minutes, discharged at 30 mA for 10 seconds, left to stand for another 30 minutes, and discharged at 60 mA for 10 seconds. The discharging currents were plotted on the horizontal axis, the difference (ΔV) between the voltage at the start of the discharge at each discharging current and a closing voltage after 10 seconds from the start of the discharge was plotted on the vertical axis, and the slope of a straight line I-V was taken as the DCR of the cell. Table 1-2 shows the results.

### (Low Temperature Charge-Discharge Characteristics)

After the measurement of the impedance, the cell was discharged at 0.2 C (6 mA) to 2.75 V at 25°C, and then charged at a constant current of 1 C (30 mA) and a constant voltage of 4.2 V to a cutoff current of 0.02 C (0.6 mA) at 25°C. The charged cell was left to stand at - 20°C for three hours, and then a discharge capacity at a constant current of 1 C (30 mA) to a cutoff voltage of 2.75 V at -20°C was measured. After the measurement of the constant current discharge capacity at -20°C, the cell was left to stand at room temperature for three hours, and then discharged at a constant current of 0.2 C (6 mA) to a cutoff voltage of 2.75 V at 25°C. The discharged cell was left to stand at -20°C for three hours, and a charge capacity at a constant current of 1 C (30 mA) to a cutoff voltage of 4.2 V at -20°C was measured. Table 1-2 shows the results.

### (Charge-Discharge Cycle Characteristics)

A cycle test of the aged cell, 300 cycles in total, was performed at 45°C under the following charge/discharge conditions (cycle conditions). A capacity retention rate after the 300th cycle was calculated by the following formula (1):
[Mathematical 1]
Capacity retention rate (%) = (300th cycle capacity at 1 C/1st cycle capacity at 1 C) × 100

Table 1-2 shows the results.

### (Cycle conditions)

Charge: charge at a constant current of 1 C (30 mA) and a constant voltage of 4.2 V to a cutoff current of 0.02 C (0.6 mA), pause for 10 minutes
Discharge: discharge at a constant current (CC) of 1 C (30 mA) to a cutoff voltage of 2.75 V, pause for 10 minutes

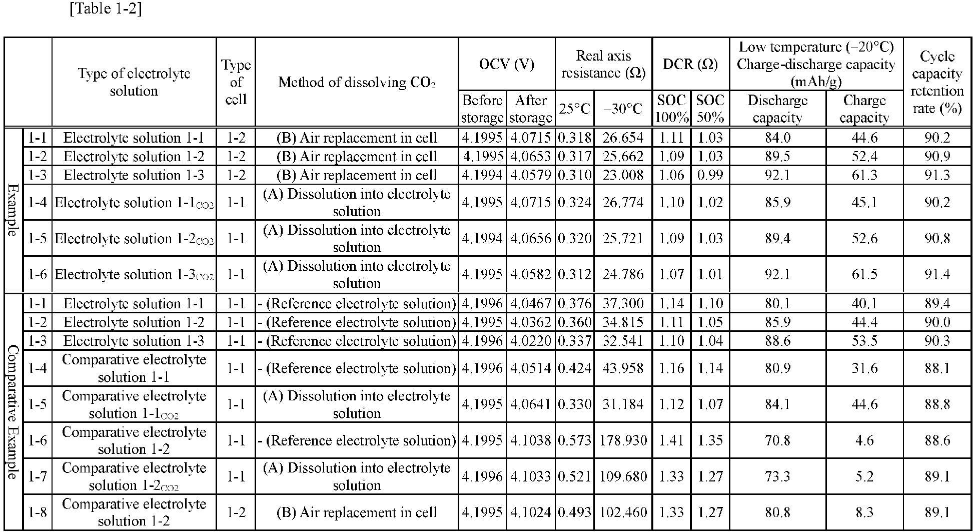

Table 1-3 shows decreasing rates of OCV obtained from Table 1-2. The decreasing rate of OCV refers to the ratio (%) of the difference in OCV before and after the storage of the cell using an electrolyte solution that has the same salt composition as the reference electrolyte solution (standard electrolyte solution) and contains CO₂ dissolved by the dissolution of CO₂ in the electrolyte solution or the replacement of the air in the cell with CO₂, to the difference in OCV before and after the storage of the cell using the reference electrolyte solution (reference, 100%). For example, the decreasing rate of OCV of Example 1-1 relative to Comparative Example 1-1 as the standard electrolyte solution is calculated by the following formula (2):
[Formula 2] Decreasing rate (%) of OCV of Example 1-1 = [{(OCV of Example 1-1 before storage) - (OCV of Example 1-1 after storage)}/{(OCV of Comparative Example 1-1 before storage) - (OCV of Comparative Example 1-1 after storage)}] × 100

The smaller the decreasing rate of OCV is, the less the self-discharge of the battery occurs, i.e., the more effectively the self-discharge is reduced (the effect (degree) of reducing the self-discharge is remarkable).

**[Table 1-3]**

| | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 1-1 | Electrolyte solution 1-1 | - (Reference electrolyte solution) | 4.1996 | 4.0467 | 0.1529 | Standard for Examples 1-1 and 1-4 |
| Example 1-1 | Electrolyte solution 1-1 | (B) Air replacement in cell | 4.1995 | 4.0715 | 0.128 | 83.7 |
| Example 1-4 | Electrolyte solution 1-1_{CO2} | (A) Dissolution into electrolyte solution | 4.1995 | 4.0715 | 0.128 | 83.7 |
| Comparative Example 1-2 | Electrolyte solution 1-2 | - (Reference electrolyte solution) | 4.1995 | 4.0362 | 0.1633 | Standard for Examples 1-2 and 1-5 |
| Example 1-2 | Electrolyte solution 1-2 | (B) Air replacement in cell | 4.1995 | 4.0653 | 0.1342 | 82.2 |
| Example 1-5 | Electrolyte solution 1-2_{CO2} | (A) Dissolution into electrolyte solution | 4.1994 | 4.0656 | 0.1338 | 81.9 |
| Comparative Example 1-3 | Electrolyte solution 1-3 | - (Reference electrolyte solution) | 4.1996 | 4.022 | 0.1776 | Standard for Examples 1-3 and 1-6 |
| Example 1-3 | Electrolyte solution 1-3 | (B) Air replacement in cell | 4.1994 | 4.0579 | 0.1415 | 79.7 |
| Example 1-6 | Electrolyte solution 1-3_{CO2} | (A) Dissolution into electrolyte solution | 4.1995 | 4.0582 | 0.1413 | 79.6 |
| Comparative Example 1-4 | Comparative electrolyte solution 1-1 | - (Reference electrolyte solution) | 4.1996 | 4.0514 | 0.1482 | Standard for Comparative Example 1-5 |
| Comparative Example 1-5 | Comparative electrolyte solution 1-1_{CO2} | (A) Dissolution into electrolyte solution | 4.1995 | 4.0641 | 0.1354 | 91.4 |
| Comparative Example 1-6 | Comparative electrolyte solution 1-2 | - (Reference electrolyte solution) | 4.1995 | 4.1038 | 0.0957 | Standard for Comparative Examples 1-7 and 1-8 |
| Comparative Example 1-7 | Comparative electrolyte Solution 1-2_{CO2} | (A) Dissolution into electrolyte solution | 4.1996 | 4.1033 | 0.0963 | 100.6 |
| Comparative Example 1-8 | Comparative electrolyte solution 1-2 | (B) Air replacement in cell | 4.1995 | 4.1024 | 0.0971 | 101.5 |

### (Self-Discharge)

The results of Table 1-2 indicate that the batteries (Comparative Examples 1-1 to 1-3) using the electrolyte solution containing LiFSI (the sulfonylimide compound (1)) showed a large decrease in OCV after storage depending on the concentration thereof (i.e., caused significant self-discharge from the fully charged state), and showed the larger decrease in OCV than the batteries (Comparative Examples 1-4 and 1-6) using the electrolyte solution containing LiPF₆ alone. It was also found that the OCV of these batteries is kept form decreasing (i.e., the self-discharge is reduced) when the electrolyte solution contains dissolved CO₂ that is dissolved in the electrolyte solution or dissolved by replacing the air inside the cell with CO₂.

The results shown in Table 1-3 indicate that each of the batteries (Examples) using the electrolyte solution containing LiFSI showed the smaller decreasing rate of OCV, i.e., caused even less self-discharge, than the batteries (Comparative Examples 1-5, 1-7, and 1-8) using the electrolyte solution containing no LiFSI. More specifically, although the batteries of Examples showed the OCV after the storage equal to or lower than, or the decrease in OCV (the "difference in OCV before and after storage" shown in Table 1-3) equal to or higher than, the batteries of Comparative Examples 1-5, 1-7, and 1-8, the decreasing rate of OCV was significantly reduced in each of the batteries of Examples. This indicates that the batteries of Examples reduced the self-discharge more effectively by the dissolution of CO₂ into the electrolyte solution than the batteries of Comparative Examples 1-5, 1-7 and 1-8.

### (Impedance)

The results of Table 1-2 indicate that each battery using the electrolyte solution containing dissolved CO₂ significantly reduced the impedance compared with the battery using the reference electrolyte solution that did not intentionally dissolve CO₂ (comparison was made between Comparative Example 1-1 and Examples 1-1 and 1-4, between Comparative Example 1-2 and Examples 1-2 and 1-5, and between Comparative Example 1-3 and Examples 1-3 and 1-6). The reduction in impedance was particularly noticeable at low temperature. The batteries of Comparative Examples 1-6 to 1-8 using the electrolyte solution to which VC was added had remarkably high impedance at low temperature regardless of whether CO₂ was dissolved or not.

### (DCR)

The results of Table 1-2 indicate that each of the batteries using the electrolyte solution containing dissolved CO₂ significantly reduced the DCR compared with the batteries using the reference electrolyte solution that did not intentionally dissolve CO₂ (comparison was made between the same batteries). The reduction in DCR was observed in both of the batteries of 100% SOC and 50% SOC, suggesting that the DCR is reduced regardless of how much the battery is charged. The batteries of Comparative Examples 1-6 to 1-8 using the electrolyte solution to which VC was added had remarkably high DCR regardless of whether CO₂ was dissolved or not.

### (Low Temperature Charge-Discharge Characteristics)

The results of Table 1-2 indicate that each of the batteries using the electrolyte solution containing dissolved CO₂ improved the charge-discharge capacity at low temperature compared with the batteries using the reference electrolyte solution that did not intentionally dissolve CO₂ (comparison was made between the same batteries). The batteries of Comparative Examples 1-6 to 1-8 using the electrolyte solution to which VC was added had low charge capacity at low temperature, in particular, regardless of whether CO₂ was dissolved or not. This is presumably because the impedance at low temperature is remarkably high as indicated by the results of the impedance measurement.

### (Charge-Discharge Cycle Characteristics)

The results of Table 1-2 indicate that each of the batteries using the electrolyte solution containing dissolved CO₂ improved the capacity retention rate after the 300th cycle compared with the batteries using the reference electrolyte solution that did not intentionally dissolve CO₂ (comparison was made between the same batteries).

### (1-6) Preparation of Non-Aqueous Electrolyte Solution Containing Dissolved CO₂ under Pressurized Conditions (CO₂ Dissolving Electrolyte Solution) (Method (A), Dissolving: Pressurizing, Replacing)

The electrolyte solution 1-3 (reference electrolyte solution) obtained in "(1-1) Preparation of Non-Aqueous Electrolyte Solution (Reference Electrolyte Solution)" was put into a sealed bottle to about 1/10 of the volume of the bottle. The bottle was allowed to stand in an autoclave with an opening of the bottle facing up, and then the autoclave was pressurized to 0.3 MPa with CO₂. Then, a release valve was half opened to lower the pressure in the autoclave to 0.15 MPa. This process was repeated a total of three times to replace the air in the autoclave with CO₂. After the replacement, the autoclave was pressurized again to 0.3 MPa with CO₂, and the bottle was left to stand for a predetermined period of time (see Table 1-4 below for the standing time at 0.3 MPa). The electrolyte solution left to stand was taken out of the autoclave, and left to stand in a sealed state at 24°C for another week. After being left to stand for a week, part of the electrolyte solution that was left to stand at 0.3 MPa for 15 minutes (Example 1-9) was taken and diluted two-fold (Example 1-8), four-fold (Example 1-7), or ten-fold (Comparative Example 1-10) with the reference electrolyte solution. Each of the obtained CO₂ dissolving electrolyte solutions was analyzed by gas chromatography to determine the amount of CO₂ dissolved in the electrolyte solution and an increment of dissolved CO₂ relative to the reference electrolyte solution. Table 1-4 shows the results.

### (1-7) Preparation of Laminate Battery 1-1

A laminate battery (cell) 1-1 with a voltage of 4.2 V and a capacity of 30 mAh was prepared in the same manner as described in "(1-3) Preparation of Laminate Battery 1-1," and then the cell 1-1 was aged. The laminate was torn in a nitrogen atmosphere to extract the electrolyte solution. The extracted electrolyte solution was analyzed by gas chromatography to determine the amount of CO₂ dissolved in the electrolyte solution. Tables 1-4 and 1-5 show the results in the column of "Amount of dissolved CO₂ after aging."

### (1-8) Evaluation of Battery

### (Impedance and Self-Discharge)

Self-discharge (OCV) and impedance of the cells were measured in the same manner as described in "(1-5) Evaluation of Battery." Table 1-4 shows the results.

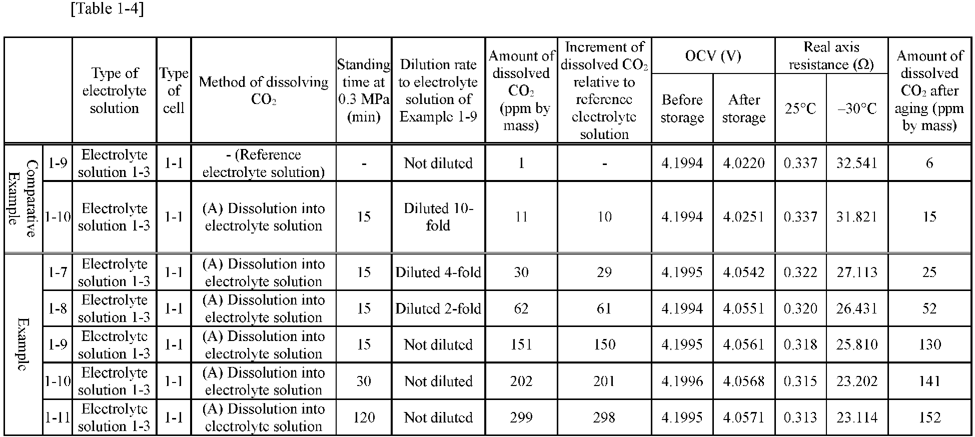

The decreasing rate of OCV was calculated based on Table 1-4 in the same manner as described above. Table 1-5 shows the results.

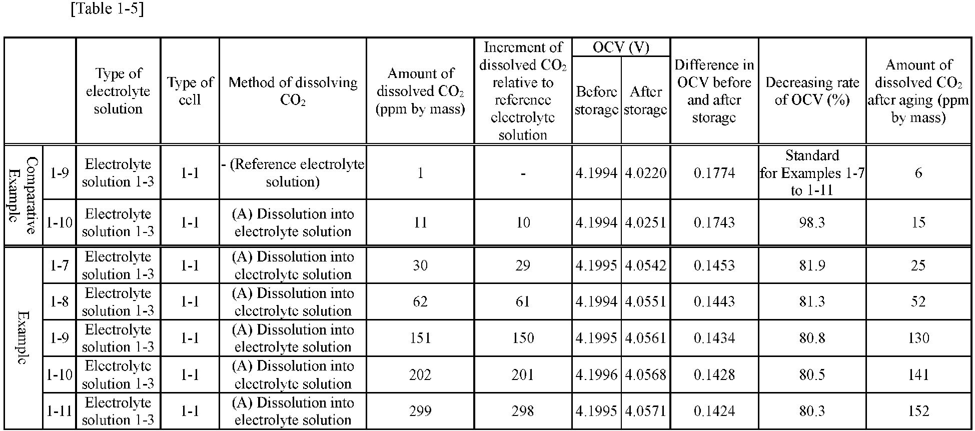

A decrease in real axis resistance (degree of decrease in impedance) with respect to the reference electrolyte solution was calculated based on Table 1-4. Table 1-6 shows the results. The decrease in real axis resistance with respect to the reference electrolyte solution is a value obtained by subtracting the real axis resistance of the reference electrolyte solution (electrolyte solution of Comparative Example 1-9) at each temperature from the real axis resistance of the electrolyte solution of the battery of Examples at the same temperature.

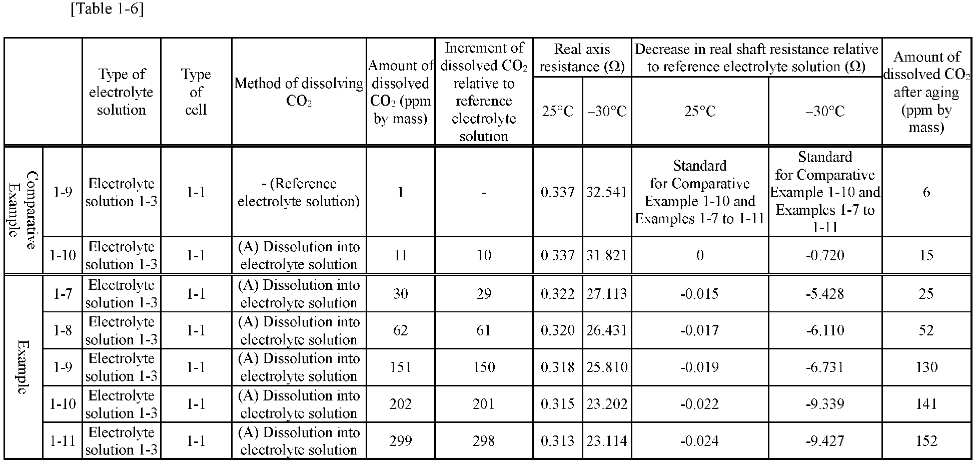

### (Self-Discharge)

The results shown in Table 1-4 indicate that the batteries each using the electrolyte solution obtained by the dissolving of 20 ppm by mass or more of CO₂ in a non-aqueous electrolyte solution (the batteries of Examples) showed the smaller decrease in OCV after storage, i.e., caused less self-discharge, than the battery using the reference electrolyte solution (electrolyte solution 1-3) dissolving 1 ppm by mass of CO₂ in a non-aqueous electrolyte solution without undergoing the dissolving (the battery of Comparative Example 1-9) and the battery using the electrolyte solution dissolving 11 ppm by mass of CO₂ in a non-aqueous electrolyte solution (the battery of Comparative Example 1-10). The results of Table 1-5 indicate that the self-discharge was reduced more effectively with the increase in the amount of dissolved CO₂ and the increment of dissolved CO₂ relative to the reference electrolyte solution. The results reveal that the amount of dissolved CO₂ is proportional to the reduction of the self-discharge.

### (Impedance)

The results shown in Table 1-4 indicate that the batteries of Examples reduced the impedance as compared with the batteries of Comparative Examples. The reduction in impedance was particularly noticeable at low temperature. The results of Table 1-6 indicate that the real axis resistance with respect to the reference electrolyte solution decreased with the increase in the amount of dissolved CO₂ and the increment in dissolved CO₂ relative to the reference electrolyte solution, and the impedance was further reduced. This reveals that the amount of dissolved CO₂ is proportional to the reduction of the impedance.

### (Amount of Dissolved CO₂ after Aging)

The results shown in Table 1-4 indicate that the amount of CO₂ dissolved in the CO₂ dissolving electrolyte solution extracted by tearing the laminate in a nitrogen atmosphere after the aging (the amount of dissolved CO₂ after aging) was 20 ppm by mass or more in all the batteries of Examples, although it was smaller than the amount of CO₂ dissolved in the CO₂ dissolving electrolyte solution before the aging (the electrolyte solution just prepared).

### (1-9) Consideration of Series of Example 1

The above results confirmed that dissolving 20 ppm by mass or more of CO₂ or other component in the non-aqueous electrolyte solution containing the sulfonylimide compound (1) reduces the self-discharge of the battery using the non-aqueous electrolyte solution, without using VC that may significantly increase the resistance of the battery. It was also confirmed that the battery using the non-aqueous electrolyte solution containing the sulfonylimide compound (1) causes even less self-discharge (i.e., reduces the self-discharge more effectively) than the battery using the non-aqueous electrolyte solution containing no sulfonylimide compound (1). It was also confirmed that the battery shows improvement in its performance, such as reduced resistance (impedance and DCR) of the battery and improved low temperature charge-discharge characteristics and charge-discharge cycle characteristics.

### <Series of Example 2>

### (2-1) Preparation of Non-Aqueous Electrolyte Solution (Reference Electrolyte Solution)

Non-aqueous electrolyte solutions were prepared by the same method as described in "(1-1) Preparation of Non-Aqueous Electrolyte Solution (Reference Electrolyte Solution)" except that lithium difluorophosphate (LiPO₂F₂) was further added and dissolved into each electrolyte solution to the content shown in Table 2-1. Table 2-1 shows the compositions of the obtained electrolyte solutions. Each of the obtained reference electrolyte solutions was analyzed by gas chromatography to determine the amount of CO₂ dissolved in the electrolyte solution. Table 2-1 shows the results in the column of "Reference electrolyte solution."

### (2-2) Preparation of Non-Aqueous Electrolyte Solution Containing Dissolved CO₂ (CO₂ dissolving electrolyte solution) (Method (A), Dissolving: Replacing)

Electrolyte solutions each containing CO₂ dissolved were prepared in the same manner as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(2-1) Preparation of Non-Aqueous Electrolyte Solution (Reference Electrolyte Solution)," and the obtained electrolyte solutions were analyzed by gas chromatography. Table 2-1 shows the results of quantitative determination of the amount of CO₂ dissolved in the CO₂ dissolving electrolyte solution in the column of "(A) CO₂ dissolving electrolyte solution."

**[Table 2-1]**

| Composition of electrolyte solution | | Additive | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | Content of LiPO₂F₂ (mass%) | Type | Amount of CO₂ dissolved (ppm by mass) | Type | Amount of CO₂ dissolved (ppm by mass) | Amount of CO₂ dissolved (ppm by mass) |
| 0.5 | 0.5 | 0.5 | Electrolyte solution 2-1 | 2 | Electrolyte solution 2-1_{CO2} | 149 | 151 |
| 0.8 | 0.2 | 0.5 | Electrolyte solution 2-2 | 3 | **Electrolyte** solution 2-2_{CO2} | 153 | 152 |
| 0.5 | 0.5 | 0.2 | Electrolyte solution 2-3 | 1 | - | - | 150 |
| 0.5 | 0.5 | 1.0 | Electrolyte solution 2-4 | 1 | - | - | 150 |
| - | 1.0 | - | Comparative electrolyte solution 2-1 | 3 | Comparative electrolyte solution 2-1_{CO2} | 152 | - |
| - | 1.0 | 0.5 | Comparative electrolyte solution 2-2 | 1 | Comparative electrolyte solution 2-2_{CO2} | 150 | 151 |

### (2-3) Preparation of Laminate Battery 2-1

### (Preparation of Positive Electrode)

LiNi_{1/3}Co_{1/3}Mn_{1/3}O₂ (product number: MX7h, manufactured by Umicore) as the ternary positive electrode active material, acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were dispersed in N-methyl-2-pyrrolidone (NMP) to prepare positive electrode mixture slurry (containing the positive electrode active material, AB, graphite, and PVdF in a solid mass ratio of 93 : 2 : 2 : 3).

The obtained positive electrode mixture slurry was coated on one side of aluminum foil (a positive electrode current collector, manufactured by Nippon Foil Co., Ltd., thickness: 15 µm) with an applicator so that the coated slurry after drying weighed 19.8 mg/cm², and dried on a hot plate at 110°C for 10 minutes. The obtained product was further dried in a vacuum drying furnace at 110°C for 12 hours. Thereafter, the dried product was pressure-molded by a roll press to a density of 3.1 g/cm³ to obtain a positive electrode sheet (83 µm in thickness).

### (Preparation of Negative Electrode)

Graphite (natural graphite (product number: SMG, manufactured by Hitachi Chemical Co., Ltd.) as the negative electrode active material, acetylene black (AB, product name: Denka Black (registered trademark), manufactured by Denka Co., Ltd.), styrenebutadiene rubber (SBR, binder), and carboxymethyl cellulose (CMC, binder) were dispersed in ultrapure water to prepare negative electrode mixture slurry (containing natural graphite, AB, SBR, and CMC in a solid mass ratio of 96 : 2 : 1 : 1).

The obtained negative electrode mixture slurry was coated on one side of copper foil (a negative electrode current collector, manufactured by Fukuda Metal Foil & Powder Co., Ltd., thickness: 15 µm) with an applicator so that the coated slurry after drying weighed 9.8 mg/cm², and dried on a hot plate at 80°C for 10 minutes. The obtained product was further dried in a vacuum drying furnace at 100°C for 12 hours. Thereafter, the dried product was pressure-molded by a roll press to a density of 1.3 g/cm³ to obtain a negative electrode sheet (113 µm in thickness).

### (Preparation of Laminate Battery)

The obtained positive and negative electrodes were cut, and polar leads were ultrasonically welded to the cut positive and negative electrodes. Then, the positive and negative electrodes were disposed to face each other with a 25-µm polyethylene (PE) separator interposed therebetween and sealed at three sides with a laminate film. Thus, batteries containing no solution were obtained. Subsequently, the electrolyte solutions shown in Table 2-1, 500 µL each, were injected into the batteries containing no solution from one unsealed side. The battery was sealed under vacuum after the injection of the electrolyte solution. Thus, laminated batteries (cells) 2-1 with a voltage of 4.2 V and a capacity of 32 mAh were prepared.

Each of the obtained cells 2-1 was charged at a constant current of 0.5 C (16 mA) to a cutoff voltage of 4.2 V at room temperature for five hours using the charge/discharge tester, and was left to stand for five days. After being left to stand, the cell 2-1 was discharged at a constant current of 0.2 C (6.4 mA) to a cutoff voltage of 2.75 V at room temperature, an excess of the laminate film was torn, and the cell 2-1 was degassed by vacuum sealing. The degassed cell 2-1 was charged again at the constant current and constant voltage under the same conditions as described above, and discharged at a constant current of 1 C (32 mA) to a cutoff voltage of 2.75 V at room temperature. The cell was partially charged at 0.5 C (15 mA) at room temperature for an hour to a 50% depth of charge (SOC), and was held at room temperature for two weeks. The above-described process is referred to as aging of the cell.

### (2-4) Preparation of Laminate Battery 2-2 (Method (B))

Batteries containing no solution were prepared by the same method as described above, and the electrolyte solutions shown in Table 2-1, 500 µL each, were injected into the batteries containing no solution from one unsealed side. After the injection of the electrolyte solution, the battery was allowed to stand in a desiccator with an opening of the battery facing up, and then the desiccator was evacuated to 40 mmHg with a vacuum pump. Then, CO₂ was supplied to fill the desiccator. This process was repeated a total of three times to replace the air in the battery with CO₂, and the battery was sealed under normal pressure. Thus, laminate batteries (cells) 2-2 with a voltage of 4.2 V and a capacity of 35.8 mAh were prepared. The cells 2-2 were then aged in the same manner as the cells 2-1.

By the same method as described above, the air in each battery containing 500 µL of the electrolyte solution shown in Table 2-1 was replaced with CO₂, and then the battery was sealed under normal pressure. Thereafter, the battery was stored at room temperature for five days, the laminate was torn in a nitrogen atmosphere, and the electrolyte solution after the air replacement in the cell was extracted. The electrolyte solution extracted after the air replacement in the cell was analyzed by gas chromatography to determine the amount of CO₂ dissolved in the electrolyte solution. Table 2-1 shows the results in the column of "(B) Electrolyte solution after air replacement in cell."

### (2-5) Evaluation of Battery

### (Impedance, DCR, and Low Temperature Charge-Discharge Characteristics)

The impedance, DCR, and charge-discharge capacity at a low temperature (-20°C) of the cells were measured by the same method as described above. The results are shown in Table 2-2.

### (Self-Discharge)

The aged cell was fully charged at a constant current of 0.5 C (16 mA) and a constant voltage of 4.2 V at room temperature to a cutoff current of 0.02 C (0.64 mA) and stored at 60°C for four weeks. An open circuit voltage (OCV) of the cell was measured before and after the storage. The results are shown in Table 2-2.

**[Table 2-2]**

| Additive LiPO₂F₂ | | Type of electrolyte solution | Type of cell | Method of dissolving CO₂ | Real axis resistance (Ω) | | DCR (Ω) | | Low temperature (-20°C) Charge-discharge capacity (mAh/g) | | OCV (V) | |
|---|---|---|---|---|---|---|---|---|---|---|---|---|
| | | | | | 25°C | -30°C | SOC 100% | SOC 50% | Discharge capacity | Charge capacity | Before storage | After storage |
| Example | 2-1 | Electrolyte solution 2-1 | 2-2 | (B) Air replacement in cell | 0.30 | 22.50 | 1.12 | 0.96 | 91.73 | 50.02 | 4.198 | 4.067 |
| | 2-2 | Electrolyte solution 2-3 | 2-2 | (B) Air replacement in cell | 0.31 | 23.10 | 1.13 | 0.96 | 91.04 | 49.33 | 4.198 | 4.061 |
| | 2-3 | Electrolyte solution 2-4 | 2-2 | (B) Air replacement in cell | 0.30 | 22.30 | 1.12 | 0.95 | 91.75 | 50.10 | 4.197 | 4.067 |
| | 2-4 | Electrolyte solution 2-2 | 2-2 | (B) Air replacement in cell | 0.29 | 21.79 | 1.10 | 0.94 | 93.25 | 50.80 | 4.197 | 4.060 |
| | 2-5 | Electrolyte solution 2-I_{CO2} | 2-1 | (A) Dissolution into electrolyte solution | 0.30 | 22.49 | 1.11 | 0.95 | 91.56 | 49.89 | 4.196 | 4.066 |
| | 2-6 | Electrolyte solution 2-2_{CO2} | 2-1 | (A) Dissolution into electrolyte solution | 0.29 | 21.80 | 1.10 | 0.93 | 93.34 | 50.34 | 4.195 | 4.060 |
| Comparative Example | 2-1 | Electrolyte solution 2-1 | 2-1 | - (Reference electrolyte solution) | 0.33 | 23.80 | 1.14 | 1.02 | 90.10 | 47.40 | 4.195 | 4.048 |
| | 2-2 | Electrolyte solution 2-2 | 2-1 | - (Reference electrolyte solution) | 0.30 | 23.40 | 1.14 | 0.98 | 91.80 | 47.87 | 4.196 | 4.046 |
| | 2-3 | Comparative electrolyte solution 2-1 | 2-1 | - (Reference electrolyte solution) | 0.41 | 40.92 | 1.23 | 1.11 | 87.21 | 45.70 | 4.196 | 4.051 |
| | 2-4 | Comparative electrolyte solution 2-2 | 2-1 | - (Reference electrolyte solution) | 0.34 | 24.20 | 1.19 | 1.07 | 89.21 | 46.22 | 4.197 | 4.054 |
| | 2-5 | Comparative electrolyte solution 2-2 | 2-2 | (B) Air replacement in cell | 0.32 | 23.20 | 1.17 | 1.05 | 90.08 | 47.01 | 4.195 | 4.056 |

The decreasing rate of OCV was calculated based on Table 2-2 in the same manner as described above. Table 2-3 shows the results.

**[Table 2-3]**

| Additive LiPO₂F₂ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 2-1 | Electrolyte solution 2-1 | - (Reference electrolyte solution) | 4.195 | 4.048 | 0.147 | Standard for Examples 2-1 to 2-3 and 2-5 |
| Example 2-1 | Electrolyte solution 2-1 | (B) Air replacement in cell | 4.198 | 4.067 | 0.131 | 89.1 |
| Example 2-2 | Electrolyte solution 2-3 | (B) Air replacement in cell | 4.198 | 4.061 | 0.137 | 93.2 |
| Example 2-3 | Electrolyte solution 2-4 | (B) Air replacement in cell | 4.197 | 4.067 | 0.13 | 88.4 |
| Example 2-5 | Electrolyte solution 2-1_{CO2} | (A) Dissolution into electrolyte solution | 4.196 | 4.066 | 0.13 | 88.4 |
| Comparative Example 2-2 | Electrolyte solution 2-2 | - (Reference electrolyte solution) | 4.196 | 4.046 | 0.15 | Standard for Examples 2-4 and 2-6 |
| Example 2-4 | Electrolyte solution 2-2 | (B) Air replacement in cell | 4.197 | 4.06 | 0.137 | 91.3 |
| Example 2-6 | Electrolyte solution 2-2_{CO2} | (A) Dissolution into electrolyte solution | 4.195 | 4.06 | 0.135 | 90.0 |
| Comparative Example 2-3 | Comparative electrolyte solution 2-1 | - (Reference electrolyte solution) | 4.196 | 4.051 | 0.145 | - |
| Comparative Example 2-4 | Comparative electrolyte solution 2-2 | - (Reference electrolyte solution) | 4.197 | 4.054 | 0.143 | Standard for Comparative Example 2-5 |
| Comparative Example 2-5 | Comparative electrolyte solution 2-2 | (B) Air replacement in cell | 4.195 | 4.056 | 0.139 | 97.2 |

### (Impedance)

The results of Table 2-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 2-1 and Examples 2-1 to 2-3 and 2-5, and between Comparative Example 2-2 and Examples 2-2 and 2-4). The reduction in impedance was particularly noticeable at low temperature.

### (DCR)

The results of Table 2-2 indicate that each battery using the electrolyte solution containing dissolved CO₂ significantly reduced the DCR compared with the battery using the reference electrolyte solution that did not intentionally dissolve CO₂ (comparison was made between the same batteries). The reduction in DCR was observed in both of the batteries of 100% SOC and 50% SOC, suggesting that the DCR is reduced regardless of how much the battery is charged.

### (Low Temperature Charge-Discharge Characteristics)

The results of Table 2-2 indicate that each battery using the electrolyte solution containing dissolved CO₂ improved the charge-discharge capacity at low temperature compared with the battery using the reference electrolyte solution that did not intentionally dissolve CO₂ (comparison was made between the same batteries). This improvement was presumably achieved by the reduction in impedance at low temperature caused by the dissolution of CO₂ in the electrolyte solution as indicated by the results of the impedance measurement.

### (Self-Discharge)

The results shown in Table 2-2 indicate that each of the batteries using the electrolyte solution containing CO₂ dissolved showed the smaller decrease in OCV after storage, i.e., caused less self-discharge, than the batteries using the reference electrolyte solution that did not intentionally dissolve CO₂ (comparison was made between the same batteries).

The batteries each using the reference electrolyte solution that contained LiFSI and LiPO₂F₂ but did not intentionally dissolve CO₂ (Comparative Examples 2-1 and 2-2) showed the greater decrease in OCV after storage than the battery using the electrolyte solution containing LiPF₆ alone without containing LiPO₂F₂ and CO₂ (Comparative Example 2-3). This indicates that LiPO₂F₂ added to the electrolyte solution containing the sulfonylimide compound (1) did not sufficiently reduce the self-discharge of the battery, although the addition of LiPO₂F₂ has been known to provide improvements in battery performance, such as reduction of initial resistance. It has been found that when LiPO₂F₂ is added to and CO₂ is dissolved in the electrolyte solution containing the sulfonylimide compound (1) having such a disadvantage, the electrolyte solution shows the decrease in OCV after storage that is equal to or smaller than that of the electrolyte solution containing LiPF₆ alone, and effectively reduces the self-discharge.

The results shown in Table 2-3 indicate that each of the batteries (Examples) using the electrolyte solution containing LiFSI and LiPO₂F₂ and CO₂ dissolved showed the smaller decreasing rate of OCV, i.e., causes even less self-discharge, than the battery (Comparative Example 2-5) using the electrolyte solution containing LiPF₆ alone instead of LiFSI (containing LiPO₂F₂ and CO₂ dissolved).

### (2-6) Preparation of Non-Aqueous Electrolyte Solution Containing Dissolved CO₂ under Pressurized Conditions (CO₂ Dissolving Electrolyte Solution) (Method (A), Dissolving: Pressurizing, Replacing)

Electrolyte solutions containing CO₂ dissolved in different amounts were prepared in the same manner as described in "(1-6) Preparation of Non-Aqueous Electrolyte Solution Containing Dissolved CO₂ under Pressurized Conditions (CO₂ Dissolving Electrolyte Solution) (Method (A), Dissolving: Pressurizing and Replacing)" except that the electrolyte solutions (reference electrolyte solutions) obtained in "(2-1) Preparation of Non-Aqueous Electrolyte Solution (Reference Electrolyte Solution)" were used. Each of the obtained CO₂ dissolving electrolyte solutions was analyzed by gas chromatography to determine the amount of CO₂ dissolved in the electrolyte solution and the increment in CO₂ relative to the reference electrolyte solution. Table 2-4 shows the results.

### (2-7) Preparation of Laminate Battery 2-1

Laminate batteries (cells) 2-1 with a voltage of 4.2 V and a capacity of 30 mAh were prepared in the same manner as described in "(2-3) Preparation of Laminate Battery 2-1," and then the cells 2-1 were aged. The laminate was torn in a nitrogen atmosphere to extract the electrolyte solution. The extracted electrolyte solution was analyzed by gas chromatography to determine the amount of CO₂ dissolved in the electrolyte solution. Tables 2-4 and 2-5 show the results in the column of "Amount of dissolved CO₂ after aging."

### (2-8) Evaluation of Battery

### (Impedance and Self-Discharge)

Self-discharge (OCV) and impedance of the cells were measured by the same method as described in "(2-5) Evaluation of Battery." Table 2-4 shows the results.

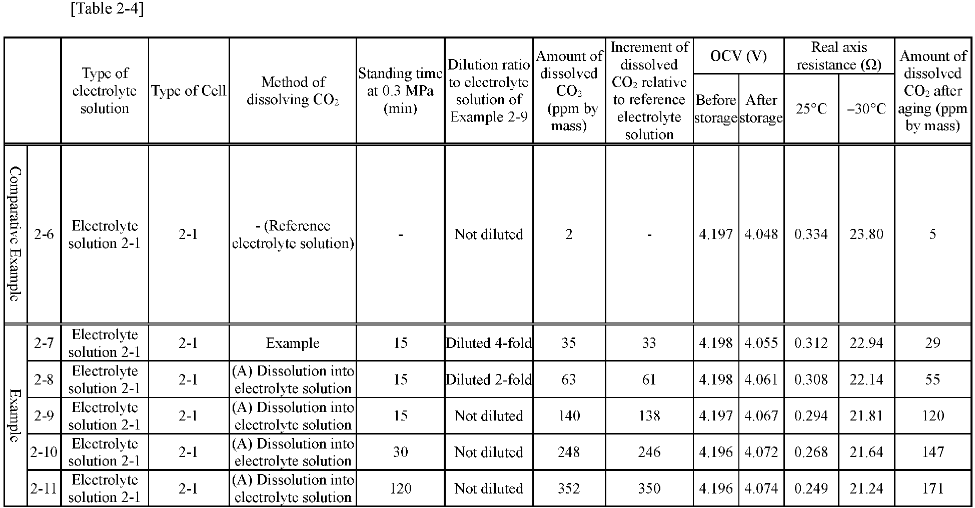

The decreasing rate of OCV was calculated based on Table 2-4 in the same manner as described above. Table 2-5 shows the results.

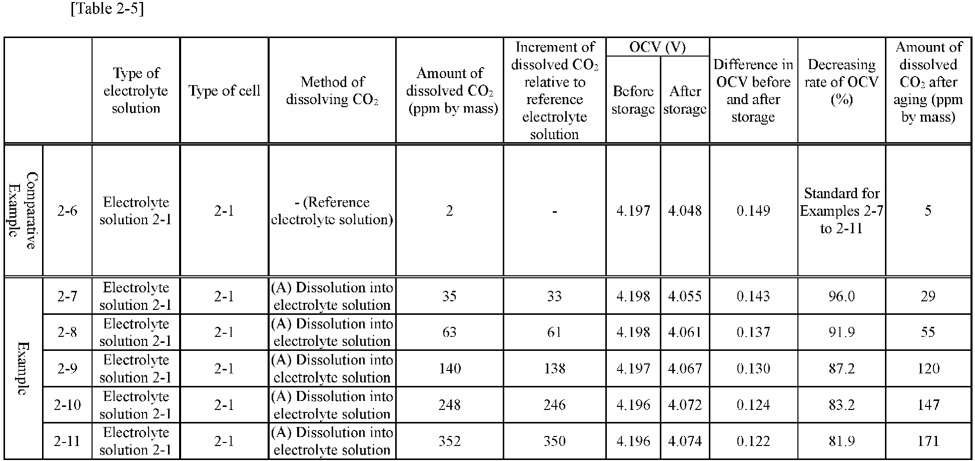

A decrease in real axis resistance (degree of decrease in impedance) with respect to the reference electrolyte solution was calculated based on Table 2-4 in the same manner as described above. Table 2-6 shows the results.

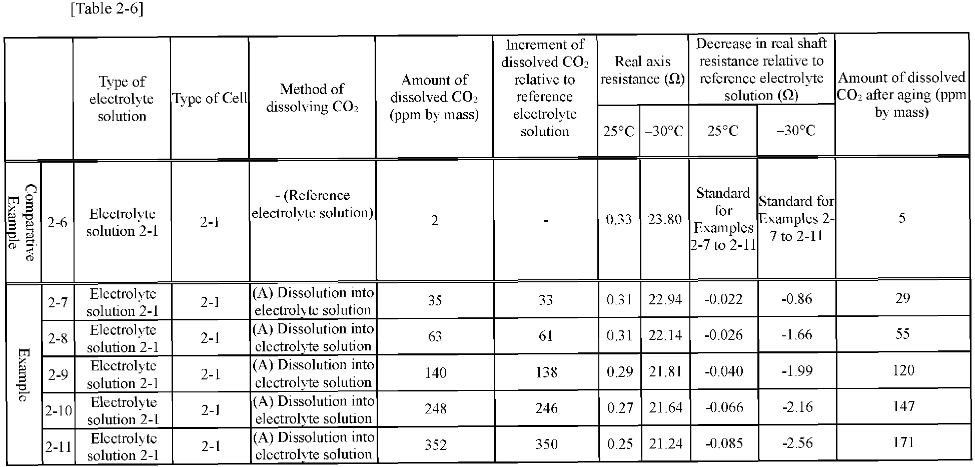

### (Self-Discharge)

The results shown in Table 2-4 indicate that the batteries each using the electrolyte solution obtained by the dissolving of 20 ppm by mass or more of CO₂ in a non-aqueous electrolyte solution (the batteries of Examples) showed the smaller decrease in OCV after storage, i.e., caused less self-discharge, than the battery using the reference electrolyte solution (electrolyte solution 2-1) obtained by dissolving 2 ppm by mass of CO₂ in a non-aqueous electrolyte solution without undergoing the dissolving (the battery of Comparative Example 2-6). The results of Table 2-5 indicate that the self-discharge was reduced more effectively with the increase in the amount of dissolved CO₂ and the increment in dissolved CO₂ relative to the reference electrolyte solution. This reveals that the amount of dissolved CO₂ is proportional to the reduction of the self-discharge.

### (Impedance)

The results shown in Table 2-4 indicate that the batteries of Examples reduced the impedance as compared with the battery of Comparative Example 2-6. The reduction in impedance was particularly noticeable at low temperature. The results of Table 2-6 indicate that the impedance was reduced more effectively with the increase in the amount of dissolved CO₂ and the increment in dissolved CO₂ relative to the reference electrolyte solution. This reveals that the amount of dissolved CO₂ is proportional to the reduction of the impedance.

### (Amount of Dissolved CO₂ after Aging)

The results shown in Table 2-4 indicate that the amount of CO₂ dissolved in the CO₂ dissolving electrolyte solution extracted by tearing the laminate in a nitrogen atmosphere after the aging (the amount of dissolved CO₂ after aging) was 20 ppm by mass or more in all the batteries of Examples, although it was smaller than the amount of CO₂ dissolved in the CO₂ dissolving electrolyte solution before the aging (the electrolyte solution just prepared).

### (2-6) Consideration of Series of Example 2

The above results confirmed that dissolving 20 ppm by mass or more of CO₂ or other component in the non-aqueous electrolyte solution containing the sulfonylimide compound (1) is clearly effective for the reduction of the self-discharge of the battery that was not sufficiently achieved by the addition of LiPO₂F₂ that could provide improvements in battery performance. It was also confirmed that the combined effect of the dissolution of CO₂ or other component and the addition of LiPO₂F₂ provides the battery with improved performance, such as reduced resistance (impedance and DCR) of the battery and improved low temperature charge-discharge characteristics and charge-discharge cycle characteristics.

### <Series of Example 3>

### (3-1) Preparation of Non-Aqueous Electrolyte Solution (Reference Electrolyte Solution)

Non-aqueous electrolyte solutions were prepared by the same method as described in "(2-1) Preparation of Non-Aqueous Electrolyte Solution (Reference Electrolyte Solution)" except that lithium fluorosulfonate (LiFSO₃) was used instead of LiPO₂F₂ and dissolved into each electrolyte solution. Table 3-1 shows the compositions of the obtained electrolyte solutions. Each of the obtained reference electrolyte solutions was analyzed by gas chromatography to determine the amount of CO₂ dissolved in the electrolyte solution. Table 3-1 shows the results in the column of "Reference electrolyte solution."

### (3-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared in the same manner as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(3-1) Preparation of Non-Aqueous Electrolyte Solution (Reference Electrolyte Solution)," and the obtained electrolyte solutions were analyzed by gas chromatography. Table 3-1 shows the results of quantitative determination of the amount of CO₂ dissolved in the CO₂ dissolving electrolyte solution in the column of "(A) CO₂ dissolving electrolyte solution."

**[Table 3-1]**

| Composition of electrolyte solution | | Additive | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | Content of LiFSO₃ (mass%) | Type | Amount of CO₂ dissolved (ppm by mass) | Type | Amount of CO₂ dissolved (ppm by mass) | Amount of CO₂ dissolved (ppm by mass) |
| 0.5 | 0.5 | 0.5 | Electrolyte solution 3-1 | 2 | Electrolyte solution 3-1_{CO2} | 152 | 153 |
| 0.5 | 0.5 | 0.2 | Electrolyte solution 3-2 | 1 | - | - | 152 |
| 0.5 | 0.5 | 1 | Electrolyte solution 3-3 | 1 | - | - | 153 |
| - | 1 | - | Comparative electrolyte solution 3-1 | 2 | Comparative electrolyte solution 3-1_{CO2} | 152 | - |
| - | 1 | 0.5 | Comparative electrolyte solution 3-2 | 3 | Comparative electrolyte solution 3-2_{CO2} | 151 | 152 |

### (3-3) Preparation of Laminate Battery 3-1

A laminate battery (cell) 3-1 with a voltage of 4.2 V and a capacity of 32 mAh was prepared by the same method as described in "(2-3) Preparation of Laminate Battery 2-1," and then the cell 3-1 was aged.

### (3-4) Preparation of Laminate Battery 3-2 (Method (B))

A laminate battery (cell) 3-2 with a voltage of 4.2 V and a capacity of 32 mAh was prepared by the same method as described in "(2-4) Preparation of Laminate Battery 2-2 (Method (B))," and the then cell 3-2 was aged in the same manner as the cell 3-1.

The electrolyte solution after the air replacement in the cell was analyzed by gas chromatography by the same method as described in "(2-4) Preparation of Laminate Battery 2-2 (Method (B))." Table 3-1 shows the results of quantitative determination of the amount of CO₂ dissolved in the electrolyte solution in the column of "(B) Electrolyte solution after air replacement in cell."

### (3-5) Evaluation of Battery

### (Impedance, Low Temperature Charge-Discharge Characteristics, and Self-Discharge)

Impedance, charge-discharge capacity at a low temperature (-20°C), and self-discharge (OCV) of the cells were measured by the same method as described in "(2-5) Evaluation of Battery." Table 3-2 shows the results.

**[Table 3-2]**

| Additive LiFSO₃ | | Type of electrolyte solution | Type of Cell | Method of dissolving CO₂ | Real axis resistance (Ω) | | Low temperature (-20°C) Charge-discharge capacity (mAh/g) | | OCV (V) | |
|---|---|---|---|---|---|---|---|---|---|---|
| | | | | | 25°C | -30°C | Discharge capacity | Charge capacity | Before storage | After storage |
| Example | 3-1 | Electrolyte solution 3-1 | 3-2 | (B) Air replacement in cell | 0.33 | 23.42 | 94.11 | 51.92 | 4.197 | 4.067 |
| | 3-2 | Electrolyte solution 3-2 | 3-2 | (B) Air replacement in cell | 0.33 | 23.44 | 93.01 | 50.64 | 4.197 | 4.067 |
| | 3-3 | Electrolyte solution 3-3 | 3-2 | (B) Air replacement in cell | 0.33 | 23.40 | 94.13 | 51.88 | 4.196 | 4.067 |
| | 3-4 | Electrolyte solution 3-1_{CO2} | 3-1 | (A) Dissolution into electrolyte solution | 0.33 | 23.41 | 94.11 | 51.91 | 4.195 | 4.067 |
| Comparative Example | 3-1 | Electrolyte solution 3-1 | 3-1 | - (Reference electrolyte solution) | 0.34 | 25.11 | 90.25 | 48.47 | 4.195 | 4.026 |
| | 3-2 | Comparative electrolyte solution 3-1 | 3-1 | - (Reference electrolyte solution) | 0.41 | 40.92 | 87.21 | 45.70 | 4.196 | 4.051 |
| | 3-3 | Comparative electrolyte solution 3-2 | 3-1 | - (Reference electrolyte solution) | 0.40 | 30.10 | 89.33 | 47.10 | 4.196 | 4.052 |
| | 3-4 | Comparative electrolyte solution 3-2 | 3-2 | (B) Air replacement in cell | 0.35 | 28.40 | 90.14 | 48.22 | 4.195 | 4.056 |

The decreasing rate of OCV was calculated based on Table 3-2 in the same manner as described above. Table 3-3 shows the results.

**[Table 3-3]**

| Additive LiFSO₃ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 3-1 | Electrolyte solution 3-1 | - (Reference electrolyte solution) | 4.195 | 4.026 | 0.169 | Standard for Examples 3-1 to 3-4 |
| Example 3-1 | Electrolyte solution 3-1 | (B) Air replacement in cell | 4.197 | 4.067 | 0.13 | 76.9% |
| Example 3-2 | Electrolyte solution 3-2 | (B) Air replacement in cell | 4.197 | 4.067 | 0.13 | 76.9% |
| Example 3-3 | Electrolyte solution 3-3 | (B) Air replacement in cell | 4.196 | 4.067 | 0.129 | 76.3% |
| Example 3-4 | Electrolyte solution 3-1_{CO2} | (A) Dissolution into electrolyte solution | 4.195 | 4.067 | 0.128 | 75.7% |
| Comparative Example 3-2 | Comparative electrolyte solution 3-1 | - (Reference electrolyte solution) | 4.196 | 4.051 | 0.145 | - |
| Comparative Example 3-3 | Comparative electrolyte solution 3-2 | - (Reference electrolyte solution) | 4.196 | 4.052 | 0.144 | Standard for Comparative Example 3-4 |
| Comparative Example 3-4 | Comparative electrolyte solution 3-2 | (B) Air replacement in cell | 4.195 | 4.056 | 0.139 | 96.5% |

### (Impedance)

The results of Table 3-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 3-1 and Examples 3-1 to 3-4). The reduction in impedance was particularly noticeable at low temperature.

### (Low Temperature Charge-Discharge Characteristics)

The results of Table 3-2 indicate that each battery using the electrolyte solution containing dissolved CO₂ improved the charge-discharge capacity at low temperature compared with the battery using the reference electrolyte solution that did not intentionally dissolve CO₂ (comparison was made between the same batteries). This improvement was presumably achieved by the reduction in impedance at low temperature caused by the dissolution of CO₂ in the electrolyte solution as indicated by the results of the impedance measurement.

### (Self-Discharge)

The results shown in Table 3-2 indicate that each of the batteries using the electrolyte solution containing CO₂ dissolved showed the smaller decrease in OCV after storage, i.e., caused less self-discharge, than the batteries using the reference electrolyte solution that did not intentionally dissolve CO₂ (comparison was made between the same batteries). The results shown in Table 3-3 also indicate that each of the batteries (Examples) using the electrolyte solution containing LiFSI and LiFSO₃ and CO₂ dissolved showed the smaller decreasing rate of OCV, i.e., caused even less self-discharge, than the battery (Comparative Example 3-4) using the electrolyte solution containing LiPF₆ alone instead of LiFSI (containing LiFSO₃ and CO₂ dissolved).

### (3-6) Consideration of Series of Example 3

The above results confirmed that dissolving 20 ppm by mass or more of CO₂ or other component in the non-aqueous electrolyte solution containing the sulfonylimide compound (1) is clearly effective for the reduction of the self-discharge of the battery, although the non-aqueous electrolyte solution contains LiFSO₃. It was also confirmed that the combined effect of the dissolution of CO₂ or other component and the addition of LiFSO₃ provides the battery with improved performance, such as reduced resistance (impedance) of the battery and improved low temperature charge-discharge characteristics.

### <Series of Example 4>

### (4-1) Preparation of Non-Aqueous Electrolyte Solution (Reference Electrolyte Solution)

Non-aqueous electrolyte solutions were prepared by the same method as described in "(2-1) Preparation of Non-Aqueous Electrolyte Solution (Reference Electrolyte Solution)" except that lithium difluoro(oxalato)borate (LiDFOB) was used instead of LiPO₂F₂ and dissolved in each electrolyte solution. Table 4-1 shows the compositions of the obtained electrolyte solutions. Each of the obtained reference electrolyte solutions was analyzed by gas chromatography to determine the amount of CO₂ dissolved in the electrolyte solution. Table 4-1 shows the results in the column of "Reference electrolyte solution."

### (4-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(4-1) Preparation of Non-Aqueous Electrolyte Solution (Reference Electrolyte Solution)," and the obtained electrolyte solutions were analyzed by gas chromatography. Table 4-1 shows the results of quantitative determination of the amount of CO₂ dissolved in the CO₂ dissolving electrolyte solution in the column of "(A) CO₂ dissolving electrolyte solution."

**[Table 4-1]**

| Composition of electrolyte solution | | Additive | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | Content of LiDFOB (mass%) | Type | Amount of CO₂ dissolved (ppm by mass) | Type | Amount of CO₂ dissolved (ppm by mass) | Amount of CO₂ dissolved (ppm by mass) |
| 0.5 | 0.5 | 0.5 | Electrolyte solution 4-1 | 1 | Electrolyte solution 4-1_{CO2} | 152 | 152 |
| 0.5 | 0.5 | 0.2 | Electrolyte solution 4-2 | 1 | - | - | 153 |
| 0.5 | 0.5 | 1 | Electrolyte solution 4-3 | 3 | - | - | 152 |
| - | 1 | - | Comparative electrolyte solution 4-1 | 2 | Comparative electrolyte solution 4-1_{CO2} | 151 | - |
| - | 1 | 0.5 | Comparative electrolyte solution 4-2 | 3 | Comparative electrolyte solution 4-2_{CO2} | 151 | 151 |

### (4-3) Preparation of Laminate Battery 4-1

A laminate battery (cell) 4-1 with a voltage of 4.2 V and a capacity of 35.8 mAh was prepared by the same method as described in "(2-3) Preparation of Laminate Battery 2-1," and then the cell 4-1 was aged.

### (4-4) Preparation of Laminate Battery 4-2 (Method (B))

A laminate battery (cell) 4-2 with a voltage of 4.2 V and a capacity of 35.8 mAh was prepared by the same method as described in "(2-4) Preparation of Laminate Battery 2-2 (Method (B))," and then the cell 4-2 was aged in the same manner as the cell 4-1.

The electrolyte solution after the air replacement in the cell was analyzed by gas chromatography by the same method as described in "(2-4) Preparation of Laminate Battery 2-2 (Method (B))." Table 4-1 shows the results of quantitative determination of the amount of CO₂ dissolved in the electrolyte solution in the column of "(B) Electrolyte solution after air replacement in cell."

### (4-5) Evaluation of Battery

### (Impedance, Low Temperature Charge-Discharge Characteristics, and Self-Discharge)

Impedance, charge-discharge capacity at a low temperature (-20°C), and self-discharge (OCV) of the cells were measured by the same method as described in "(2-5) Evaluation of Battery." Table 4-2 shows the results.

**[Table 4-2]**

| Additive LiDFOB | | Type of electrolyte solution | Type of Cell | Method of dissolving CO₂ | Real axis resistance (Ω) | | Low temperature (-20°C) Charge-discharge capacity (mAh/g) | | OCV (V) | |
|---|---|---|---|---|---|---|---|---|---|---|
| | | | | | 25°C | -30°C | Discharge capacity | Charge capacity | Before storage | After storage |
| Example | 4-1 | Electrolyte solution 4-1 | 4-2 | (B) Air replacement in cell | 0.32 | 23.26 | 91.46 | 49.22 | 4.197 | 4.067 |
| | 4-2 | Electrolyte solution 4-2 | 4-2 | (B) Air replacement in cell | 0.33 | 22.88 | 91.02 | 49.17 | 4.196 | 4.066 |
| | 4-3 | Electrolyte solution 4-3 | 4-2 | (B) Air replacement in cell | 0.32 | 23.26 | 91.48 | 49.23 | 4.195 | 4.066 |
| | 4-4 | Electrolyte solution 4-1_{CO2} | 4-1 | (A) Dissolution into electrolyte solution | 0.32 | 23.23 | 91.47 | 49.20 | 4.198 | 4.066 |
| Comparative Example | 4-1 | Electrolyte solution 4-1 | 4-1 | - (Reference electrolyte solution) | 0.32 | 25.46 | 88.93 | 47.25 | 4.197 | 4.025 |
| | 4-2 | Comparative electrolyte solution 4-1 | 4-1 | - (Reference electrolyte solution) | 0.41 | 40.92 | 57.21 | 45.70 | 4.197 | 4.051 |
| | 4-3 | Comparative electrolyte solution 4-2 | 4-1 | - (Reference electrolyte solution) | 0.36 | 28.94 | 87.77 | 45.90 | 4.196 | 4.051 |
| | 4-4 | Comparative electrolyte solution 4-2 | 4-2 | (B) Air replacement in cell | 0.33 | 28.22 | 88.82 | 47.11 | 4.195 | 4.057 |

The decreasing rate of OCV was calculated based on Table 4-2 in the same manner as described above. Table 4-3 shows the results.

**[Table 4-3]**

| Additive LiDFOB | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 4-1 | Electrolyte solution 4-1 | - (Reference electrolyte solution) | 4.197 | 4.025 | 0.172 | Standard for Examples 4-1 to 4-4 |
| Example 4-1 | Electrolyte solution 4-1 | (B) Air replacement in cell | 4.197 | 4.067 | 0.13 | 75.6% |
| Example 4-2 | Electrolyte solution 4-2 | (B) Air replacement in cell | 4.196 | 4.066 | 0.13 | 75.6% |
| Example 4-3 | Electrolyte solution 4-3 | (B) Air replacement in cell | 4.195 | 4.066 | 0.129 | 75.0% |
| Example 4-4 | Electrolyte solution 4-1_{CO2} | (A) Dissolution into electrolyte solution | 4.198 | 4.066 | 0.132 | 76.7% |
| Comparative Example 4-2 | Comparative electrolyte solution 4-1 | - (Reference electrolyte solution) | 4.197 | 4.051 | 0.146 | - |
| Comparative Example 4-3 | Comparative electrolyte solution 4-2 | - (Reference electrolyte solution) | 4.196 | 4.051 | 0.145 | Standard for Comparative Example 4-4 |
| Comparative Example 4-4 | Comparative electrolyte solution 4-2 | (B) Air replacement in cell | 4.195 | 4.057 | 0.138 | 95.2% |

### (Impedance)

The results of Table 4-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 4-1 and Examples 4-1 and 4-4). The reduction in impedance was particularly noticeable at low temperature.

### (Low Temperature Charge-Discharge Characteristics)

The results of Table 4-2 indicate that each battery using the electrolyte solution containing dissolved CO₂ improved the charge-discharge capacity at low temperature compared with the battery using the reference electrolyte solution that did not intentionally dissolve CO₂ (comparison was made between the same batteries). This improvement was presumably achieved by the reduction in impedance at low temperature caused by the dissolution of CO₂ in the electrolyte solution as indicated by the results of the impedance measurement.

### (Self-Discharge)

The results shown in Table 4-2 indicate that each of the batteries using the electrolyte solution containing CO₂ dissolved showed the smaller decrease in OCV after storage, i.e., caused less self-discharge, than the batteries using the reference electrolyte solution that did not intentionally dissolve CO₂ (comparison was made between the same batteries). The results shown in Table 4-3 also indicate that each of the batteries (Examples) using the electrolyte solution containing LiFSI and LiDFOB and CO₂ dissolved showed the smaller decreasing rate of OCV, i.e., caused even less self-discharge, than the battery (Comparative Example 4-4) using the electrolyte solution containing LiPF₆ alone instead of LiFSI (containing LiDFOB and CO₂ dissolved).

### (4-6) Consideration of Series of Example 4

The above results confirmed that dissolving 20 ppm by mass or more of CO₂ or other component in the non-aqueous electrolyte solution containing the sulfonylimide compound (1) is clearly effective for the reduction of the self-discharge of the battery, although the non-aqueous electrolyte solution contains LiDFOB. It was also confirmed that the combined effect of the dissolution of CO₂ or other component and the addition of LiDFOB provides the battery with improved performance, such as reduced resistance (impedance) of the battery and improved low temperature charge-discharge characteristics.

### <Series of Example 5>

### (5-1) Preparation of Non-Aqueous Electrolyte Solution (Reference Electrolyte Solution)

Non-aqueous electrolyte solutions were prepared by the same method as described in "(1-1) Preparation of Non-Aqueous Electrolyte Solution (Reference Electrolyte Solution)." Table 5-1 shows the compositions of the obtained electrolyte solutions. Each of the obtained reference electrolyte solutions was analyzed by gas chromatography to determine the amount of CO₂ dissolved in the electrolyte solution. Table 5-1 shows the results in the column of "Reference electrolyte solution."

### (5-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), dissolving: replacing)" using the electrolyte solutions obtained in "(5-1) Preparation of Non-Aqueous Electrolyte Solution (Reference Electrolyte Solution)," and the obtained electrolyte solutions were analyzed by gas chromatography. Table 5-1 shows the results of quantitative determination of the amount of CO₂ dissolved in the CO₂ dissolving electrolyte solution in the column of "(A) CO₂ dissolving electrolyte solution."

**[Table 5-1]**

| Composition of electrolyte solution | | Reference electrolyte solution | | (A) CO₂ dissolving electrolyte solution | | (B) Electrolyte solution after air replacement in cell |
|---|---|---|---|---|---|---|
| Concentration of LiFSI (mol/L) | Concentration of LiPF₆ (mol/L) | Type | Amount of CO₂ dissolved (ppm by mass) | Type | Amount of CO₂ dissolved (ppm by mass) | Amount of CO₂ dissolved (ppm by mass) |
| - | 1.2 | Comparative electrolyte solution 5-1 | 1 | - | - | - |
| 0.2 | 1.0 | Electrolyte solution 5-1 | 1 | Electrolyte solution 5-1_{CO2} | 151 | 152 |
| 0.6 | 0.6 | Electrolyte solution 5-2 | 3 | Electrolyte solution 5-2_{CO2} | 151 | 151 |
| 1.0 | 0.2 | Electrolyte solution 5-3 | 1 | Electrolyte solution 5-3_{CO2} | 151 | 151 |

### (5-3) Preparation of Laminate Battery 5-1

A laminate battery (cell) 5-1 with a voltage of 4.2 V and a capacity of 30 mAh was prepared by the same method as described in "(1-3) Preparation of Laminate Battery 1-1" except that the ternary positive electrode active material (7) described in the following experimental examples was used as the positive electrode active material, and then the cell 5-1 was aged.

### (5-4) Preparation of Laminate Battery 5-2 (Method (B))

A laminate battery (cell) 5-2 with a voltage of 4.2 V and a capacity of 30 mAh was prepared by the same method as described in "(1-4) Preparation of Laminate Battery 1-2" except that the ternary positive electrode active material (7) described in the following experimental examples was used as the positive electrode active material, and then the cell 5-2 was aged.

The electrolyte solution after the air replacement in the cell was analyzed by gas chromatography by the same method as described in "(1-4) Preparation of Laminate Battery 1-2." Table 5-1 shows the results of quantitative determination of the amount of CO₂ dissolved in the electrolyte solution in the column of "(B) Electrolyte solution after air replacement in cell."

### (5-5) Evaluation of Battery

### [Experimental Example 1]

In Experimental Example 1, LiNi_{1/3}Co_{1/3}Mn_{1/3}O₂ (product number: MX7h, manufactured by Umicore) was used as the positive electrode active material.

### (Impedance, DCR, and Self-Discharge)

Impedance, DCR, and self-discharge (OCV) of the cells were measured by the same method as described in "(1-5) Evaluation of Battery." Table 5-2 shows the results.

**[Table 5-2]**

| Positive electrode active material LiNi_{1/3}Co_{1/3}Mn_{1/3}O₂ | | Type of electrolyte solution | Type of Cell | Method of dissolving CO₂ | Real axis resistance (Ω) | | DCR (Ω) | | OCV (V) | |
|---|---|---|---|---|---|---|---|---|---|---|
| | | | | | 25°C | -30°C | SOC 100% | SOC 50% | Before storage | After storage |
| Example | 5-1 | Electrolyte solution 5-1 | 5-2 | (B) Air replacement in cell | 0.32 | 27.68 | 1.08 | 1.01 | 4.1974 | 4.0724 |
| | 5-2 | Electrolyte solution 5-2 | 5-2 | (B) Air replacement in cell | 0.31 | 23.00 | 1.07 | 0.99 | 4.1971 | 4.0694 |
| | 5-3 | Electrolyte solution 5-3 | 5-2 | (B) Air replacement in cell | 0.29 | 20.00 | 1.05 | 0.95 | 4.1973 | 4.0672 |
| | 5-4 | Electrolyte solution 5-1_{CO2} | 5-1 | (A) Dissolution into electrolyte solution | 0.32 | 27.72 | 1.08 | 1.00 | 4.1976 | 4.0722 |
| | 5-5 | Electrolyte solution 5-2_{CO2} | 5-1 | (A) Dissolution into electrolyte solution | 0.31 | 22.93 | 1.07 | 0.98 | 4.1975 | 4.0699 |
| | 5-6 | Electrolyte solution 5-3_{CO2} | 5-1 | (A) Dissolution into electrolyte solution | 0.28 | 20.13 | 1.05 | 0.95 | 4.1976 | 4.0675 |
| Comparative Example | 5-1 | Comparative electrolyte solution 5-1 | 5-1 | - (Reference electrolyte solution) | 0.42 | 42.01 | 1.17 | 1.13 | 4.1977 | 4.0526 |
| | 5-2 | Electrolyte solution 5-1 | 5-1 | - (Reference electrolyte solution) | 0.36 | 36.62 | 1.13 | 1.07 | 4.1978 | 4.0350 |
| | 5-3 | Electrolyte solution 5-2 | 5-1 | - (Reference electrolyte solution) | 0.34 | 32.54 | 1.10 | 1.04 | 4.1976 | 4.0277 |
| | 5-4 | Electrolyte solution 5-3 | 5-1 | - (Reference electrolyte solution) | 0.31 | 26.22 | 1.08 | 1.00 | 4.1700 | 4.0212 |

The decreasing rate of OCV was calculated based on Table 5-2 in the same manner as described above. Table 5-3 shows the results.

**[Table 5-3]**

| Positive electrode active material LiNi_{1/3}Co_{1/3}Mn_{1/3}O₂ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 5-2 | Electrolyte solution 5-1 | - (Not dissolved) | 4.1978 | 4.035 | 0.1628 | Standard for Examples 5-1 and 5-4 |
| Example 5- 1 | Electrolyte solution 5-1 | (B) Air replacement in cell | 4.1974 | 4.0724 | 0.125 | 76.8 |
| Example 5-4 | Electrolyte solution 5-1_{CO2} | (A) Dissolution into electrolyte solution | 4.1976 | 4.0722 | 0.1254 | 77.0 |
| Comparative Example 5-3 | Electrolyte solution 5-2 | - (Not dissolved) | 4.1976 | 4.0277 | 0.1699 | Standard for Examples 5-2 and 5-5 |
| Example 5-2 | Electrolyte solution 5-2 | (B) Air replacement in cell | 4.1971 | 4.0694 | 0.1277 | 75.2 |
| Example 5-5 | Electrolyte solution 5-2_{CO2} | (A) Dissolution into electrolyte solution | 4.1975 | 4.0699 | 0.1276 | 75.1 |
| Comparative Example 5-4 | Electrolyte solution 5-3 | - (Not dissolved) | 4.17 | 4.0212 | 0.1488 | Standard for Examples 5-3 and 5-6 |
| Example 5-3 | Electrolyte solution 5-3 | (B) Air replacement in cell | 4.1973 | 4.0672 | 0.1301 | 87.4 |
| Example 5-6 | Electrolyte solution 5-3_{CO2} | (A) Dissolution into electrolyte solution | 4.1976 | 4.0675 | 0.1301 | 87.4 |
| Comparative Example 5-1 | Comparative electrolyte solution 5-1 | - (Not dissolved) | 4.1977 | 4.0526 | 0.1451 | - |

### (Impedance)

The results of Table 5-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 5-2 and Examples 5-1 and 5-4, between Comparative Example 5-3 and Examples 5-2 and 5-5, and between Comparative Example 5-4 and Examples 5-3 and 5-6). The reduction in impedance was particularly noticeable at low temperature.

### (DCR)

The results of Table 5-2 indicate that each battery using the electrolyte solution containing dissolved CO₂ significantly reduced the DCR compared with the battery using the reference electrolyte solution that did not intentionally dissolve CO₂ (comparison was made between the same batteries). The reduction in DCR was observed in both of the batteries of 100% SOC and 50% SOC, suggesting that the DCR is reduced regardless of how much the battery is charged.

### (Self-Discharge)

The results shown in Table 5-2 indicate that each of the batteries using the electrolyte solution containing LiFSI, LiNi_{1/3}Co_{1/3}Mn_{1/3}O₂ (ternary positive electrode active material (7)), and CO₂ that was dissolved in the electrolyte solution or dissolved by replacing the air in the cell with CO₂ showed the smaller decrease in OCV after storage, i.e., caused less self-discharge, than the batteries using the reference electrolyte solution that did not intentionally dissolve CO₂ (comparison was made between the same batteries). It has been found that the batteries of Examples 5-1 to 5-6, although they use the electrolyte solution containing LiFSI, show the decrease in OCV after storage equal to or smaller than that of the battery using the electrolyte solution containing LiPF₆ alone (Comparative Example 5-1), and thus, effectively reduce the self-discharge. The results of Table 5-3 show that the electrolyte solution containing LiFSI and LiNi_{1/3}Co_{1/3}Mn_{1/3}O₂ can further reduce the decreasing rate of OCV by controlling the mixing ratio of LiFSI and LiPF₆.

### [Experimental Example 2]

In Experimental Example 2, commercially available LiNi_{0.5}Co_{0.2}Mn_{0.3}O₂ was used as the positive electrode active material instead of LiNi_{1/3}Co_{1/3}Mn_{1/3}O₂.
Impedance, DCR, and self-discharge (OCV) of the cells were measured in the same manner as in Experimental Example 1. Table 5-4 shows the results.

**[Table 5-4]**

| Positive electrode active material LiNi_{0.5}Co_{0.2}Mn_{0.3}O₂ | | Type of electrolyte solution | Type of Cell | Method of dissolving CO₂ | Real axis resistance (Ω) | | DCR (Ω) | | OCV (V) | |
|---|---|---|---|---|---|---|---|---|---|---|
| | | | | | 25°C | - 30°C | SOC 100% | SOC 50% | Before storage | After storage |
| Example | 5-7 | Electrolyte solution 5-1_{CO2} | 5-1 | (A) Dissolution into electrolyte solution | 0.40 | 29.12 | 1.12 | 1.05 | 4.1970 | 4.0751 |
| | 5-8 | Electrolyte solution 5-2_{CO2} | 5-1 | (A) Dissolution into electrolyte solution | 0.38 | 22.66 | 1.10 | 1.00 | 4.1970 | 4.0711 |
| | 5-9 | Electrolyte solution 5-3_{CO2} | 5-1 | (A) Dissolution into electrolyte solution | 0.34 | 20.42 | 1.08 | 0.99 | 4.1969 | 4.0700 |
| Comparative Example | 5-5 | Comparative electrolyte solution 5-1 | 5-1 | - (Reference electrolyte solution) | 0.49 | 44.71 | 1.22 | 1.17 | 4.1969 | 4.0555 |
| | 5-6 | Electrolyte solution 5-1 | 5-1 | - (Reference electrolyte solution) | 0.47 | 40.02 | 1.17 | 1.12 | 4.1970 | 4.0373 |
| | 5-7 | Electrolyte solution 5-2 | 5-1 | - (Reference electrolyte solution) | 0.44 | 36.21 | 1.14 | 1.08 | 4.1970 | 4.0299 |
| | 5-8 | Electrolyte solution 5-3 | 5-1 | - (Reference electrolyte solution) | 0.42 | 32.21 | 1.12 | 1.04 | 4.1969 | 4.0223 |

The decreasing rate of OCV was calculated based on Table 5-4 in the same manner as described above. Table 5-5 shows the results.

**[Table 5-5]**

| Positive electrode active material LiNi_{0.5}Co_{0.2} Mn_{0.3}O₂ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 5-6 | Electrolyte solution 5-1 | - (Reference electrolyte solution) | 4.197 | 4.0373 | 0.1597 | Standard for Example 5-7 |
| Example 5-7 | Electrolyte solution 5-1_{CO2} | (A) Dissolution into electrolyte solution | 4.197 | 4.0751 | 0.1219 | 76.3 |
| Comparative Example 5-7 | Electrolyte solution 5-2 | - (Reference electrolyte solution) | 4.197 | 4.0299 | 0.1671 | Standard for Example 5-8 |
| Example 5-8 | Electrolyte solution 5-2_{CO2} | (A) Dissolution into electrolyte solution | 4.197 | 4.0711 | 0.1259 | 75.3 |
| Comparative Example 5-8 | Electrolyte solution 5-3 | - (Reference electrolyte solution) | 4.1969 | 4.0223 | 0.1746 | Standard for Example 5-9 |
| Example 5-9 | Electrolyte solution 5-3_{CO2} | (A) Dissolution into electrolyte solution | 4.1969 | 4.07 | 0.1269 | 72.7 |
| Comparative Example 5-5 | Comparative electrolyte solution 5-1 | - (Reference electrolyte solution) | 4.1969 | 4.0555 | 0.1414 | - |

Tables 5-4 and 5-5 indicate that Experimental Example 2 in which the ternary positive electrode active material (7) was changed to LiNi_{0.5}Co_{0.2}Mn_{0.3}O₂ showed the same results as Experimental Example 1.

### [Experimental Example 3]

In Experimental Example 3, commercially available LiNi_{0.6}Co_{0.2}Mn_{0.2}O₂ was used as the positive electrode active material instead of LiNi_{1/3}Co_{1/3}Mn_{1/3}O₂. Impedance, DCR, and self-discharge (OCV) of the cells were measured in the same manner as in Experimental Example 1. Table 5-6 shows the results.

**[Table 5-6]**

| Positive electrode active material LiNi_{0.6}Co_{0.2}Mn_{0.2}O₂ | | Type of electrolyte solution | Type of cell | Method of dissolving CO₂ | Real axis resistance (Ω) | | DCR (Ω) | | OCV (V) | |
|---|---|---|---|---|---|---|---|---|---|---|
| | | | | | 25°C | -30°C | SOC 100% SOC | 50% | Before storage | After storage |
| Example | 5-10 | Electrolyte solution 5-1_{CO2} | 5-1 | (A) Dissolution into electrolyte solution | 0.42 | 31.12 | 1.15 | 1.06 | 4.1969 | 4.0752 |
| | 5-11 | Electrolyte solution 5-2_{CO2} | 5-1 | (A) Dissolution into electrolyte solution | 0.38 | 28.40 | 1.11 | 1.02 | 4.1969 | 4.0746 |
| | 5-12 | Electrolyte solution 5-3_{CO2} | 5-1 | (A) Dissolution into electrolyte solution | 0.35 | 24.15 | 1.08 | 1.00 | 4.1969 | 4.0748 |
| Comparative Example | 5-9 | Comparative electrolyte solution 5-1 | 5-1 | - (Reference electrolyte solution) | 0.50 | 45.62 | 1.23 | 1.20 | 4.1970 | 4.0564 |
| | 5-10 | Electrolyte solution 5-1 | 5-1 | - (Reference electrolyte solution) | 0.48 | 41.26 | 1.19 | 1.15 | 4.1970 | 4.0412 |
| | 5-11 | Electrolyte solution 5-2 | 5-1 | - (Reference electrolyte solution) | 0.46 | 40.12 | 1.15 | 1.06 | 4.1969 | 4.0285 |
| | 5-12 | Electrolyte solution 5-3 | 5-1 | - (Reference electrolyte solution) | 0.44 | 39.89 | 1.14 | 1.09 | 4.1969 | 4.0226 |

The decreasing rate of OCV was calculated based on Table 5-6 in the same manner as described above. Table 5-7 shows the results.

**[Table 5-7]**

| Positive electrode active material LiNi_{0.6}Co_{0.2}Mn_{0.2}O₂ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 5-10 | Electrolyte solution 5-1 | - (Reference electrolyte solution) | 4.197 | 4.0412 | 0.1558 | Standard for Example 5-10 |
| Example 5-10 | Electrolyte solution 5-1_{CO2} | (A) Dissolution into electrolyte solution | 4.1969 | 4.0752 | 0.1217 | 78.1 |
| Comparative Example 5-11 | Electrolyte solution 5-2 | - (Reference electrolyte solution) | 4.1969 | 4.0285 | 0.1684 | Standard for Example 5-11 |
| Example 5-11 | Electrolyte solution 5-2_{CO2} | (A) Dissolution into electrolyte solution | 4.1969 | 4.0746 | 0.1223 | 72.6 |
| Comparative Example 5-12 | Electrolyte solution 5-3 | - (Reference electrolyte solution) | 4.1969 | 4.0226 | 0.1743 | Standard for Example 5-12 |
| Example 5-12 | Electrolyte solution 5-3_{CO2} | (A) Dissolution into electrolyte solution | 4.1969 | 4.0748 | 0.1221 | 70.1 |
| Comparative Example 5-9 | Comparative electrolyte solution 5-1 | - (Reference electrolyte solution) | 4.197 | 4.0564 | 0.1406 | - |

Tables 5-6 and 5-7 indicate that Experimental Example 3 in which the ternary positive electrode active material (7) was changed to LiNi_{0.6}Co_{0.2}Mn_{0.2}O₂ showed the same results as Experimental Example 1.

### [Experimental Example 4]

In Experimental Example 4, commercially available LiNi_{0.8}Co_{0.1}Mn_{0.1}O₂ was used as the positive electrode active material instead of LiNi_{1/3}Co_{1/3}Mn_{1/3}O₂. Impedance, DCR, and self-discharge (OCV) of the cells were measured in the same manner as in Experimental Example 1. Table 5-8 shows the results.

**[Table 5-8]**

| Positive electrode active material LiNi_{0.8}Co_{0.1}Mn_{0.1}O₂ | | Type of electrolyte solution | Type of Cell | Method of dissolving CO₂ | Real axis resistance (Ω) | | DCR (Ω) | | OCV (V) | |
|---|---|---|---|---|---|---|---|---|---|---|
| | | | | | 25°C | -30°C | SOC 100% | SOC 50% | Before storage | After storage |
| Example | 5-13 | Electrolyte solution 5-1_{CO2} | 5-1 | (A) Dissolution into electrolyte solution | 0.41 | 29.16 | 1.18 | 1.08 | 4.1970 | 4.0755 |
| | 5-14 | Electrolyte solution 5-2_{CO2} | 5-1 | (A) Dissolution into electrolyte solution | 0.37 | 26.75 | 1.14 | 1.05 | 4.1971 | 4.0755 |
| | 5-15 | Electrolyte solution 5-3_{CO2} | 5-1 | (A) Dissolution into electrolyte solution | 0.36 | 25.09 | 1.11 | 1.04 | 4.1970 | 4.0749 |
| Comparative Example | 5-13 | Comparative electrolyte solution 5-1 | 5-1 | - (Reference electrolyte solution) | 0.52 | 44.36 | 1.25 | 1.22 | 4.1967 | 4.0566 |
| | 5-14 | Electrolyte solution 5-1 | 5-1 | - (Reference electrolyte solution) | 0.51 | 40.26 | 1.23 | 1.20 | 4.1968 | 4.0416 |
| | 5-15 | Electrolyte solution 5-2 | 5-1 | - (Reference electrolyte solution) | 0.48 | 37.21 | 1.19 | 1.15 | 4.1968 | 4.0301 |
| | 5-16 | Electrolyte solution 5-3 | 5-1 | - (Reference electrolyte solution) | 0.47 | 36.10 | 1.18 | 1.12 | 4.1967 | 4.0267 |

The decreasing rate of OCV was calculated based on Table 5-8 in the same manner as described above. Table 5-9 shows the results.

**[Table 5-9]**

| Positive electrode active material LiNi_{0.8}Co_{0.1}Mn_{0.1}O₂ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 5-14 | Electrolyte solution 5-1 | - (Reference electrolyte solution) | 4.1968 | 4.0416 | 0.1552 | Standard for Example 5-13 |
| Example 5-13 | Electrolyte solution 5- 1_{CO2} | (A) Dissolution into electrolyte solution | 4.197 | 4.0755 | 0.1215 | 78.3 |
| Comparative Example 5-15 | Electrolyte solution 5-2 | - (Reference electrolyte solution) | 4.1968 | 4.0301 | 0.1667 | Standard for Example 5-14 |
| Example 5-14 | Electrolyte solution 5-2_{CO2} | (A) Dissolution into electrolyte solution | 4.1971 | 4.0755 | 0.1216 | 72.9 |
| Comparative Example 5-16 | Electrolyte solution 5-3 | - (Reference electrolyte solution) | 4.1967 | 4.0267 | 0.17 | Standard for Example 5-15 |
| Example 5-15 | Electrolyte solution 5-3_{CO2} | (A) Dissolution into electrolyte solution | 4.197 | 4.0749 | 0.1221 | 71.8 |
| Comparative Example 5-13 | Comparative electrolyte solution 5-1 | - (Reference electrolyte solution) | 4.1967 | 4.0566 | 0.1401 | - |

The results in Tables 5-8 and 5-9 indicate that Experimental Example 3 in which the ternary positive electrode active material (7) was changed to LiNi_{0.8}Co_{0.1}Mn_{0.1}O₂ showed the same results as Experimental Example 1.

### (5-6) Consideration of Series of Example 5

The above results confirmed that the battery that includes the non-aqueous electrolyte solution containing the sulfonylimide compound (1) and the positive electrode containing the ternary positive electrode active material (7) causes the greater self-discharge as the concentration of the sulfonylimide compound (1) increases, but the battery reduces the self-discharge more effectively than the battery using the electrolyte solution containing LiPF₆ alone when 20 ppm by mass or more of CO₂ or other component is dissolved in the non-aqueous electrolyte solution. It was also confirmed that the battery greatly reduces the resistance (impedance and DCR) of the battery.

### <Series of Example 6>

### (6-1) Preparation of Non-Aqueous Electrolyte Solution (Reference Electrolyte Solution)

Non-aqueous electrolyte solutions were prepared by the same method as described in "(2-1) Preparation of Non-Aqueous Electrolyte Solution (Reference Electrolyte Solution)" except that lithium difluorophosphate (LiPO₂F₂) was added to the content (in the concentration) shown in Table 6-1 to an electrolyte solution that contains an electrolyte salt of a simple salt composition containing LiFSI or LiPF₆ alone and an electrolyte solution that contains an electrolyte salt of a mixed salt composition containing LiFSI and LiPF₆ in the concentration shown in Table 6-1. Table 6-1 shows the compositions of the obtained electrolyte solutions. Each of the obtained reference electrolyte solutions was analyzed by gas chromatography to determine the amount of CO₂ dissolved in the electrolyte solution. Table 6-1 shows the results in the column of "Reference electrolyte solution."

### (6-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(6-1) Preparation of Non-Aqueous Electrolyte Solution (Reference Electrolyte Solution)," and the obtained electrolyte solutions were analyzed by gas chromatography. Table 6-1 shows the results of quantitative determination of the amount of CO₂ dissolved in the CO₂ dissolving electrolyte solution in the column of "(A) CO₂ dissolving electrolyte solution."

**[Table 6-1]**

| Composition of electrolyte solution | | Additive | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | Content of LiPO₂F₂ (mass%) | Type | Amount of CO₂ dissolved (ppm by mass) | Type | Amount of CO₂ dissolved (ppm by mass) | Amount of CO₂ dissolved (ppm by mass) |
| 1.0 | - | - | Electrolyte solution 6-1 | 2 | Electrolyte solution 6-1_{CO2} | 151 | 152 |
| 1.0 | - | 0.5 | Electrolyte solution 6-2 | 2 | Electrolyte solution 6-2_{CO2} | 152 | 151 |
| - | 1.0 | - | Comparative electrolyte solution 6-1 | 3 | Comparative electrolyte solution 6-1_{CO2} | 152 | 151 |
| 0.5 | 0.5 | - | Electrolyte solution 6-3 | 2 | - | 151 | 151 |

### (6-3) Preparation of Laminate Battery 6-1

A laminate battery (cell) 6-1 with a voltage of 3.55 V and a capacity of 28.8 mAh was prepared by the same method as described in "(2-3) Preparation of Laminate Battery 2-1" except that LiNi_{1/3}Co_{1/3}Mn_{1/3}O₂ used as the ternary positive electrode active material (7) was replaced with LiFePO₄, which was a commercially available iron phosphate positive electrode active material (8), and then the cell 6-1 was aged.

### (6-4) Preparation of Laminate Battery 6-2 (Method (B))

A laminate battery (cell) 6-2 with a voltage of 3.55 V and a capacity of 28.8 mAh was prepared by the same method as described in "(2-4) Preparation of Laminate Battery 2-2 (Method (B)," and then the cell 6-2 was aged in the same manner as the cell 6-1.

The electrolyte solution after the air replacement in the cell was analyzed by gas chromatography by the same method as described in "(2-4) Preparation of Laminate Battery 2-2 (Method (B))." Table 6-1 shows the results of quantitative determination of the amount of CO₂ dissolved in the electrolyte solution in the column of "(B) Electrolyte solution after air replacement in cell."

### (6-5) Evaluation of Battery

### (Impedance and Charge-Discharge Capacity at Low Temperature (-20°C))

Impedance and charge-discharge capacity at a low temperature (-20°C) of the cells were measured by the same method as described in "(2-5) Evaluation of Battery." Table 6-2 shows the results.

### (Self-Discharge)

The aged cell was fully charged at a constant current of 0.5 C (14.4 mA) and a constant voltage of 3.55 V to a cutoff current of 0.02 C (0.576 mA) at room temperature and stored at 60°C for four weeks. An open circuit voltage (OCV) of the cell was measured before and after the storage. Table 6-2 shows the results.

**[Table 6-2]**

| Positive electrode active material LiFePO₄ | | Type of electrolyte solution | Type of Cell | Method of dissolving CO₂ | Real axis resistance (Ω) | | Low temperature (-20°C) Charge-discharge capacity (mAh/g) | | OCV (V) | |
|---|---|---|---|---|---|---|---|---|---|---|
| | | | | | 25°C | -30°C | Discharge capacity | Charge capacity | Before storage | After storage |
| Example | 6-1 | Electrolyte solution 6-1 | 6-2 | (B) Air replacement in cell | 0.46 | 15.48 | 74.85 | 6.34 | 3.453 | 3.242 |
| | 6-2 | Electrolyte solution 6-2 | 6-2 | (B) Air replacement in cell | 0.44 | 13.94 | 77.06 | 7.64 | 3.453 | 3.254 |
| | 6-3 | Electrolyte solution 6-1_{CO2} | 6-1 | (A) Dissolution into electrolyte solution | 0.46 | 15.50 | 74.82 | 6.29 | 3.454 | 3.243 |
| | 6-4 | Electrolyte solution 6-3 | 6-2 | (B) Air replacement in cell | 0.50 | 18.44 | 72.48 | 5.22 | 3.453 | 3.244 |
| Comparative Example | 6-1 | Electrolyte solution 6-1 | 6-1 | - (Reference electrolyte solution) | 0.59 | 56.76 | 68.47 | 0.33 | 3.453 | 3.185 |
| | 6-2 | Electrolyte solution 6-2 | 6-1 | - (Reference electrolyte solution) | 0.55 | 17.36 | 72.44 | 4.26 | 3.452 | 3.205 |
| | 6-3 | Electrolyte solution 6-3 | 6-1 | - (Reference electrolyte solution) | 0.60 | 62.10 | 67.40 | 0.25 | 3.453 | 3.207 |
| | 6-4 | Comparative electrolyte solution 6-1 | 6-1 | - (Reference electrolyte solution) | 0.62 | 71.24 | 62.14 | 0.10 | 3.453 | 3.232 |
| | 6-5 | Comparative electrolyte solution 6-1 | 6-2 | (B) Air replacement in cell | 0.59 | 29.77 | 69.22 | 1.00 | 3.453 | 3.251 |

The decreasing rate of OCV was calculated based on Table 6-2 in the same manner as described above. Table 6-3 shows the results.

**[Table 6-3]**

| Positive electrode active material LiFePO₄ | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 6-1 | Electrolyte solution 6-1 | - (Reference electrolyte solution) | 3.453 | 3.185 | 0.268 | Standard for Examples 6-1 and 6-3 |
| Example 6-1 | Electrolyte solution 6-1 | (B) Air replacement in cell | 3.453 | 3.242 | 0.211 | 78.7 |
| Example 6-3 | Electrolyte solution 6-1_{CO2} | (A) Dissolution into electrolyte solution | 3.454 | 3.243 | 0.211 | 78.7 |
| Comparative Example 6-2 | Electrolyte solution 6-2 | - (Reference electrolyte solution) | 3.452 | 3.205 | 0.247 | Standard for Example 6-2 |
| Example 6-2 | Electrolyte solution 6-2 | (B) Air replacement in cell | 3.453 | 3.254 | 0.199 | 80.6 |
| Comparative Example 6-3 | Electrolyte solution 6-3 | - (Reference electrolyte solution) | 3.453 | 3.207 | 0.246 | Standard for Example 6-4 |
| Example 6-4 | Electrolyte solution 6-3 | (B) Air replacement in cell | 3.453 | 3.244 | 0.209 | 85.0 |
| Comparative Example 6-4 | Comparative electrolyte solution 6-1 | - (Reference electrolyte solution) | 3.453 | 3.232 | 0.221 | Standard for Comparative Example 6-5 |
| Comparative Example 6-5 | Comparative electrolyte solution 6-1 | (B) Air replacement in cell | 3.453 | 3.251 | 0.202 | 91.4 |

### (Impedance)

The results of Table 6-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 6-1 and Examples 6-1 and 6-3, between Comparative Example 6-2 and Example 6-2, and between Comparative Example 6-3 and Example 6-4). The reduction in impedance was particularly noticeable at low temperature.

### (Low Temperature Charge-Discharge Characteristics)

The results of Table 6-2 indicate that each battery using the electrolyte solution containing dissolved CO₂ improved the charge-discharge capacity at low temperature compared with the battery using the reference electrolyte solution that did not intentionally dissolve CO₂ (comparison was made between the same batteries). This improvement was presumably achieved by the reduction in impedance at low temperature caused by the dissolution of CO₂ in the electrolyte solution as indicated by the results of the impedance measurement.

### (Self-Discharge)

The results shown in Table 6-2 indicate that each of the batteries using the electrolyte solution containing CO₂ dissolved showed the smaller decrease in OCV after storage, i.e., caused less self-discharge, than the batteries using the reference electrolyte solution that did not intentionally dissolve CO₂ (comparison was made between the same batteries).

The results shown in Table 6-3 indicate that each of the batteries (Examples) using the electrolyte solution containing LiFSI showed the smaller decreasing rate of OCV, i.e., caused even less self-discharge, than the battery (Comparative Example 6-5) using the electrolyte solution containing no LiPFSI and containing LiPF₆ alone. More specifically, although the batteries of Examples showed the OCV after the storage equal to or lower than, or the decrease in OCV (the "difference in OCV before and after storage" shown in Table 6-3) equal to or higher than, the battery of Comparative Example 6-5, the decreasing rate of OCV was significantly reduced in each of the batteries of Examples. This indicates that the batteries of Examples reduced the self-discharge more effectively than the battery of Comparative Example 6-5 by the dissolution of CO₂ into the electrolyte solution.

### (6-6) Consideration of Series of Example 6

The above results clearly confirmed that dissolving 20 ppm by mass or more of CO₂ or other component in the non-aqueous electrolyte solution containing the sulfonylimide compound (1) reduces the self-discharge of the battery, although the battery has the positive electrode containing the iron phosphate positive electrode active material (8) and operates at a voltage different from the battery having the positive electrode containing the ternary positive electrode active material (7). It was also confirmed that the combined effect of the dissolution of CO₂ or other component and the addition of LiPO₂F₂ provides the battery with improved performance, such as reduced resistance (impedance) of the battery and improved low temperature charge-discharge characteristics.

It was also confirmed that the same advantages are obtained by dissolving CO₂ or other component in the non-aqueous electrolyte solution containing the electrolyte salt of a simple salt composition using the sulfonylimide compound (1) alone.

### <Series of Example 7>

### (7-1) Preparation of Non-Aqueous Electrolyte Solution (Reference Electrolyte Solution)

An electrolyte salt of a simple salt composition containing LiFSI alone was dissolved in a concentration shown in Table 7-1 in dimethyl carbonate (DMC, manufactured by Kishida Chemical Co., Ltd.) used as an electrolyte solution solvent to prepare a non-aqueous electrolyte solution. Further, an electrolyte salt of a simple salt composition containing LiPF₆ alone was dissolved in a concentration shown in Table 7-1 in a mixture solvent of EC and EMC in a volume ratio of 3 : 7 used as the electrolyte solution solvent to prepare a non-aqueous electrolyte solution. Table 7-1 shows the compositions of the obtained electrolyte solutions. Each of the obtained reference electrolyte solutions was analyzed by gas chromatography to determine the amount of CO₂ dissolved in the electrolyte solution. Table 7-1 shows the results in the column of "Reference electrolyte solution."

### (7-2) Raman spectroscopy of Non-Aqueous Electrolyte Solution

DMC used as the electrolyte solution solvent, a referential electrolyte solution 7-1 and the electrolyte solution 7-1 shown in Table 7-1, and LiFSI powder were measured by Raman spectroscopy using NRS-3100 (manufactured by JASCO Corporation). FIG. 1 shows the results. In the graph of FIG. 1, the horizontal axis represents the wave number (cm⁻¹), and the vertical axis represents the scattering intensity.

### (Measurement Conditions for Raman Spectroscopy)

Device: JASCORFT-6000 (manufactured by JASCO Corporation)
Wavelength of laser: 1064 mm
Exposure time: 10 seconds, five times
Center wave number: 1450 cm⁻¹
Slit: 0.05 mm diameter
Beam attenuator: open
Objective lens: 20 magnification
Data interval: 4 cm⁻¹
Smoothing: correction of baseline (linear correction between 872 cm⁻¹ to 1873cm⁻¹)
Smoothing: simple moving average (convolution width: 5)
Measurement cell: glass cell

The electrolyte solution was sealed in a glass cell in an inert gas atmosphere for the measurement.

As can be seen from FIG. 1, a Raman spectrum of the LiFSI powder ("LiFSI powder" in FIG. 1) showed a distinctive peak derived from (FSO₂)₂N of LiFSI around 790 cm⁻¹.

A Raman spectrum of DMC ("DMC solvent" in FIG. 1) showed a distinctive peak derived from a stretching vibration of a double bond between C and O of DMC (original peak of DMC) around 910 cm⁻¹.

A Raman spectrum of the referential electrolyte solution 7-1 containing LiFSI (LiFSI concentration: 1.0 mol/L) ("1.0 M" in FIG. 1) showed an original peak of DMC around 910 cm⁻¹ (peak intensity Io: 1.32) and a distinctive peak that was derived from the stretching vibration of the double bond between C and O of DMC around 950 cm⁻¹ and shifted to the higher wave number from the original peak of DMC (shifted peak, intensity Is: 0.345). The two peak intensities Is and Io met a relationship Is = 0.26 x Io, i.e., Is < Io.

A Raman spectrum of the electrolyte solution 7-1 containing LiFSI (LiFSI concentration: 4.0 mol/L) ("4.0 M" in FIG. 1) showed an original peak of DMC around 910 cm⁻¹ (peak intensity Io: 0.11) and a shifted peak (intensity Is: 0.55) that shifted to the higher wave number from the original peak of DMC around 950 cm⁻¹. The two peak intensities Is and Io met a relationship Is = 5.0 x Io, i.e., Is > Io.

The above results confirmed that the original peak of DMC shifts to the higher wave number as the concentration of LiFSI in the non-aqueous electrolyte solution containing LiFSI and DMC increases. This reduces the intensity Io of the original peak of DMC and increases the intensity Is of the shifted peak, changing the relationship between the two peak intensities from Is < Io to Is > Io. That is, it was confirmed that the two peak intensities Is and Io in the Raman spectrum of the non-aqueous electrolyte solution containing LiFSI in a high concentration meet the relationship Is > Io.

### (7-3) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(7-1) Preparation of Non-Aqueous Electrolyte Solution (Reference Electrolyte Solution)," and the obtained electrolyte solutions were analyzed by gas chromatography. Table 7-1 shows the results of quantitative determination of the amount of CO₂ dissolved in the CO₂ dissolving electrolyte solution in the column of "(A) CO₂ dissolving electrolyte solution."

**[Table 7-1]**

| Composition of electrolyte solution | | | Reference electrolyte solution | | (A) CO₂ dissolving electrolyte solution | | (B) Electrolyte solution after air replacement in cell |
|---|---|---|---|---|---|---|---|
| Concentration of LiFSI (mol/L) | Concentration of LiPF₆ (mol/L) | Type of solvent | Type | Amount of CO₂ dissolved (ppm by mass) | Type | Amount of CO₂ dissolved (ppm by mass) | Amount of CO₂ dissolved (ppm by mass) |
| 4.0 | - | DMC | Electrolyte solution 7-1 | 1 | Electrolyte solution 7-1_{CO2} | 137 | 139 |
| 1.0 | - | DMC | Referential electrolyte solution 7-1 | 1 | - | - | - |
| - | 1.2 | EC/EMC | Comparative electrolyte solution 7-1 | 1 | - | - | - |

### (7-4) Preparation of Laminate Battery 7-1

A laminate battery (cell) 7-1 with a voltage of 4.2 V and a capacity of 32 mAh was prepared by the same method as described in "(2-3) Preparation of Laminate Battery 2-1," and then the cell 7-1 was aged.

### (7-5) Preparation of Laminate Battery 7-2 (Method (B))

A laminate battery (cell) 7-2 with a voltage of 4.2 V and a capacity of 32 mAh was prepared by the same method as described in "(2-4) Preparation of Laminate Battery 2-2 (Method (B))," and then the cell 7-2 was aged in the same manner as the cell 7-1.

The electrolyte solution after the air replacement in the cell was analyzed by gas chromatography by the same method as described in "(2-4) Preparation of Laminate Battery 2-2 (Method (B))." Table 7-1 shows the results of quantitative determination of the amount of CO₂ dissolved in the electrolyte solution in the column of "(B) Electrolyte solution after air replacement in cell."

### (7-6) Evaluation of Battery

### (Impedance)

Impedance of the cells was measured by the same method as described in "(2-5) Evaluation of Battery." Table 7-2 shows the results.

### (Self-Discharge)

The aged cell was fully charged at a constant current of 0.5 C (16 mA) and a constant voltage of 4.2 V to a cutoff current of 0.02 C (0.64 mA) at room temperature and stored at 60°C for four weeks. An open circuit voltage (OCV) of the cell was measured before and after the storage. Table 7-2 shows the results.

**[Table 7-2]**

| | | Type of electrolyte solution | Type of cell | Method of dissolving CO₂ | Real axis resistance (Ω) | | OCV (V) | |
|---|---|---|---|---|---|---|---|---|
| | | | | | 25°C | -30°C | Before storage | After storage |
| Example | 7-1 | Electrolyte solution 7-1 | 7-2 | (B) Air replacement in cell | 0.42 | 24.39 | 4.196 | 4.126 |
| | 7-2 | Electrolyte solution 7-1_{CO2} | 7-1 | (A) Dissolution into electrolyte solution | 0.42 | 24.73 | 4.195 | 4.125 |
| Comparative Example | 7-1 | Electrolyte solution 7-1 | 7-1 | - (Reference electrolyte solution) | 0.51 | 31.39 | 4.195 | 4.095 |
| | 7-2 | Comparative electrolyte solution 7-1 | 7-1 | - (Reference electrolyte solution) | 0.54 | 39.63 | 4.196 | 4.115 |
| Reference Example | 7-1 | Referential electrolyte solution 7-1 | 7-1 | - (Reference electrolyte solution) | 0.48 | 28.72 | 4.196 | 4.102 |

The decreasing rate of OCV was calculated based on Table 7-2 in the same manner as described above. Table 7-3 shows the results.

**[Table 7-3]**

| | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 7-1 | Electrolyte solution 7-1 | - (Reference electrolyte solution) | 4.195 | 4.095 | 0.1 | Standard for Examples 7-1 and 7-2 |
| Example 7-1 | Electrolyte solution 7-1 | (B) Air replacement in cell | 4.196 | 4.126 | 0.07 | 70 |
| Example 7-2 | Electrolyte solution 7-1_{CO2} | (A) Dissolution into electrolyte solution | 4.195 | 4.125 | 0.07 | 70 |
| Comparative Example 7-2 | Comparative electrolyte solution 7-1 | - (Reference electrolyte solution) | 4.196 | 4.115 | 0.081 | - |
| Reference Example 7-1 | Referential electrolyte solution 7-1 | - (Reference electrolyte solution) | 4.196 | 4.102 | 0.094 | - |

### (Impedance)

The results of Table 7-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Reference Example 7-1 and Examples 7-1 and 7-2). The reduction in impedance was particularly noticeable at low temperature.

### (Self-Discharge)

The results shown in Tables 7-2 and 7-3 indicate that each of the batteries using the electrolyte solution containing CO₂ dissolved showed the smaller decrease in OCV after storage, i.e., caused less self-discharge, than the battery using the reference electrolyte solution that did not intentionally dissolve CO₂ (comparison was made between Reference Example 7-1 and Examples 7-1 and 7-2).

### (7-7) Consideration of Series of Example 7

The above results confirmed that dissolving 20 ppm by mass or more of CO₂ or other component in the non-aqueous electrolyte solution containing the sulfonylimide compound (1) clearly effective for the reduction of the self-discharge of the battery, although the two peak intensities in the Raman spectrum meet the relationship Is > Io.

### <Series of Example 8>

### (8-1) Preparation of Non-Aqueous Electrolyte Solution (Reference Electrolyte Solution)

In a mixture solvent of EC and EMC in a volume ratio of 3 : 7 used as an electrolyte solution solvent, an electrolyte salt of a mixed salt composition containing LiFSI and LiPF₆ or an electrolyte salt of a simple salt composition containing LiPF₆ alone was dissolved in concentrations shown in Table 8-1, and 10 mass% of fluoroethylene carbonate (FEC, manufactured by Kishida Chemical Co., Ltd., the same applies hereinafter) was added to prepare non-aqueous electrolyte solutions. Table 8-1 shows the compositions of the obtained electrolyte solutions. Each of the obtained reference electrolyte solutions was analyzed by gas chromatography to determine the amount of CO₂ dissolved in the electrolyte solution. Table 8-1 shows the results in the column of "Reference electrolyte solution."

### (8-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(8-1) Preparation of Non-Aqueous Electrolyte Solution (Reference Electrolyte Solution)," and the obtained electrolyte solutions were analyzed by gas chromatography. Table 8-1 shows the results of quantitative determination of the amount of CO₂ dissolved in the CO₂ dissolving electrolyte solution in the column of "(A) CO₂ dissolving electrolyte solution."

**[Table 8-1]**

| Composition of electrolyte solution | | Reference electrolyte solution | | (A) CO₂ dissolving electrolyte solution | | (B) Electrolyte solution after air replacement in cell |
|---|---|---|---|---|---|---|
| Concentration of LiFSI (mol/L) | Concentration of LiPF₆ (mol/L) | Type | Amount of CO₂ dissolved (ppm by mass) | Type | Amount of CO₂ dissolved (ppm by mass) | Amount of CO₂ dissolved (ppm by mass) |
| - | 1.2 | Comparative electrolyte solution 8-1 | 2 | - | - | - |
| 0.2 | 1.0 | Electrolyte solution 8-1 | 2 | Electrolyte solution 8-1_{CO2} | 150 | 152 |
| 0.6 | 0.6 | Electrolyte solution 8-2 | 3 | Electrolyte solution 8-2_{CO2} | 151 | 151 |
| 1.0 | 0.2 | Electrolyte solution 8-3 | 2 | Electrolyte solution 8-3_{CO2} | 153 | 151 |

### (8-3) Preparation of Coin Lithium Battery 8-1

### (Preparation of Si-Containing Graphite Mixture Sheet)

Si-containing Graphite (containing SiO and graphite in a ratio of 10 : 90) as an active material, carbon black (product name: Denka Black, manufactured by Denka Co., Ltd.) and carbon fiber (product name: VGCF, manufactured by Showa Denko K. K) as a conductivity aid, styrene-butadiene rubber (SBR, binder), and carboxymethyl cellulose (CMC, binder) were dispersed in ultrapure water to prepare Si-containing graphite mixture slurry (containing the active material, the conductive aid, SBR, and CMC in a solid mass ratio of 100 : 5 : 3 : 1). The obtained mixture slurry was coated on one side of copper foil (a current collector, manufactured by Fukuda Metal Foil & Powder Co., Ltd., thickness: 15 µm) with an applicator so that the coated slurry after drying weighed 7.2 mg/cm², and dried on a hot plate at 80°C for 10 minutes. The obtained product was further dried in a vacuum drying furnace at 100°C for 12 hours. Thereafter, the dried product was pressure-molded by a roll press to a density of 1.5 g/cm³ to obtain a Si-containing graphite mixture sheet having a thickness of 65 µm.

### (Preparation of Coin Lithium Battery)

Parts of CR2032 coin cell (manufactured by Hohsen Corp.) were assembled into a coin lithium battery. A negative electrode cap with a gasket, a waved washer, a spacer, and lithium foil (having a diameter of 14 mm and a thickness of 0.5 mm) (manufactured by Honjo Metal Co., Ltd.) were stacked in this order, and 25 µL of the non-aqueous electrolyte solution shown in Table 8-1 was dropped onto the lithium foil. APE separator was stacked on the lithium foil, and then 25 µL of the non-aqueous electrolyte solution was dropped onto the separator to impregnate the separator with the non-aqueous electrolyte solution. Thereafter, the Si-containing graphite mixture sheet, stamped into a round shape (14 mm in diameter), was arranged to face the lithium foil with the separator interposed therebetween. A positive electrode case was stacked on the sheet and caulked with a caulking machine to obtain a coin lithium battery 8-1.

The obtained coin lithium battery 8-1 was charged at a constant current (CC) of 0.1 C (0.5 mA) at room temperature for four hours using a charge/discharge tester, and was left to stand at room temperature for five days. After being left to stand, the battery was charged at a constant current of 0.1 C (0.5 mA) and a constant voltage of 0.01 V (CCCV) at room temperature. The charge was finished at a cutoff current of 0.02 C (0.1 mA). Thereafter, the battery was discharged at a constant current of 0.1 C (0.5 mA) at room temperature. The discharge was finished at a cutoff voltage of 1.5 V. The CCCV charge and the CC discharge were repeated four times. The battery was charged and discharged under the same conditions except that the current value was set to 0.2 C (1.0 mA) for the first discharge, 1 C (5 mA) for the second discharge, 2 C (9.5 mA) for the third discharge, and 0.1 C (0.5 mA) for the fourth discharge. The battery was partially charged at 0.1 C (0.5 mA) at room temperature for five hours to a 50% depth of charge (SOC), and was held at room temperature for two weeks. The above-described step is referred to as aging for the coin lithium battery.

### (8-4) Preparation of Coin Lithium Battery 8-2 (Method (B))

A coin lithium battery 8-2 was prepared by the same method as described in "(Preparation of Coin Lithium Battery)" except that the battery was assembled in a glove box in which the air was replaced with CO₂, and the battery was aged.

A coin lithium battery was assembled by the same method as described above in a glove box in which the air was replaced with CO₂, stored at room temperature for five days, and disassembled in an argon atmosphere to extract the electrolyte solution. The extracted electrolyte solution was analyzed by gas chromatography to determine the amount of CO₂ dissolved in the electrolyte solution. Table 8-1 shows the results of quantitative determination in the column of "(B) Electrolyte solution after air replacement in cell."

### (8-5) Determination of Amount of Dissolved CO₂ after Aging

The aged coin lithium batteries 8-1 and 8-2 were discharged at a constant current of 0.1 C (0.5 mA) and 1.5 V at room temperature, and then disassembled in a glove box in which the air was replaced with argon gas to extract the electrolyte solution. The extracted electrolyte solution was analyzed by gas chromatography to determine the amount of CO₂ dissolved in the electrolyte solution. Table 8-2 shows the results of quantitative determination in the column of "Amount of dissolved CO₂ after aging."

### (8-6) Evaluation of Battery

### (Self-Discharge)

Each of the aged coin lithium batteries was discharged at a constant current of 0.1 C (0.5 mA) and 1.5 V, and then fully charged at a constant current of 0.1 C (0.5 mA) and a constant voltage of 0.01 V. The charge capacity at that time was taken as a charge capacity before storage. The fully charged battery was stored at 60°C for four weeks, left to cool at room temperature for two hours, and discharged at a constant current of 0.1 C (0.5 mA) and 1.5 V. The discharge capacity at that time was taken as a remaining capacity. Table 8-2 shows the results. The smaller the difference between the charge capacity before storage and the remaining capacity (will be hereinafter referred to as a "self-discharge capacity" in the series of Example 8) is, the less the self-discharge of the battery occurs.

### (Impedance)

A real axis resistance (interface resistance) was obtained by the same method described in the section of (Impedance) in "(1-5) Evaluation of Battery" except that the aged cell was discharged at 0.1 C (0.5 mA) to 1.5 V at room temperature and then charged at a constant current of 0.5 C (2.5 mA) at room temperature for an hour to a 50% depth of charge (SOC). Table 8-2 shows the results.

**[Table 8-2]**

| Active material Si-containing graphite mixture | | Type of electrolyte solution | Type of Cell | Method of dissolving CO₂ | Real axis resistance (Ω) 25°C | Charge capacity (mAh/g) | Remaining capacity (mAh/g) | Amount of dissolved CO₂ after aging (ppm by mass) |
|---|---|---|---|---|---|---|---|---|
| Example | 8-1 | Electrolyte solution 8-1 | 8-2 | (B) Air replacement in cell | 3.62 | 395.9 | 354.9 | 132 |
| | 8-2 | Electrolyte solution 8-2 | 8-2 | (B) Air replacement in cell | 3.58 | 395.8 | 353.2 | 131 |
| | 8-3 | Electrolyte solution 8-3 | 8-2 | (B) Air replacement in cell | 3.50 | 396.2 | 351.2 | 131 |
| | 8-4 | Electrolyte solution 8-1_{CO2} | 8-1 | (A) Dissolution into electrolyte solution | 3.61 | 395.7 | 355.1 | 134 |
| | 8-5 | Electrolyte solution 8-2_{CO2} | 8-1 | (A) Dissolution into electrolyte solution | 3.56 | 395.9 | 353.5 | 130 |
| | 8-6 | Electrolyte solution 8-3_{CO2} | 8-1 | (A) Dissolution into electrolyte solution | 3.51 | 396.0 | 351.0 | 135 |
| Comparative Example | 8-1 | Comparative electrolyte solution 8-1 | 8-1 | - (Reference electrolyte solution) | 5.47 | 395.9 | 325.1 | 7 |
| | 8-2 | Electrolyte solution 8-1 | 8-1 | - (Reference electrolyte solution) | 4.97 | 395.5 | 320.8 | 4 |
| | 8-3 | Electrolyte solution 8-2 | 8-1 | - (Reference electrolyte solution) | 4.89 | 395.7 | 318.9 | 6 |
| | 8-4 | Electrolyte solution 8-3 | 8-1 | - (Reference electrolyte solution) | 4.71 | 396.1 | 317.3 | 5 |

Table 8-3 shows a decreasing rate of the self-discharge capacity obtained based on Table 8-2. The decreasing rate of the self-discharge capacity refers to the ratio (%) of the difference in discharge capacity before and after the storage of the battery using an electrolyte solution that has the same salt composition as the reference electrolyte solution (standard electrolyte solution) and contains CO₂ dissolved by the dissolution of CO₂ in the electrolyte solution or the replacement of the air inside the cell with CO₂, to the difference in OCV before and after the storage of the battery using the reference electrolyte solution (reference, 100%). For example, the decreasing rate of the self-discharge capacity of Example 8-1 relative to Comparative Example 8-2 as the standard electrolyte solution is calculated by the following formula (3):
[Formula 3] Decreasing rate (%) of self-discharge capacity of Example 8-1 = [{(discharge capacity of Example 8-1 before storage) - (discharge capacity of Example 8-1 after storage)}/{(discharge capacity of Comparative Example 8-2 before storage) - (discharge capacity of Comparative Example 8-2 after storage)}] × 100

The smaller the decreasing rate of the self-discharge capacity is, the less the self-discharge of the battery occurs, i.e., the more effectively the self-discharge is reduced (the effect (degree) of reducing the self-discharge is remarkable).

**[Table 8-3]**

| | Type of electrolyte solution | Method of dissolving CO₂ | Charge capacity (mAh/g) | Remaining capacity (mAh/g) | Self-discharge capacity (mAh/g) | Decreasing ratio of self-discharge capacity (%) |
|---|---|---|---|---|---|---|
| Comparative Example 8-2 | Electrolyte solution 8-1 | - (Not dissolved) | 395.5 | 320.8 | 74.7 | Standard for Examples 8-1 and 8-4 |
| Example 8-1 | Electrolyte solution 8-1 | (B) Air replacement in cell | 395.9 | 354.9 | 41.0 | 54.9 |
| Example 8-4 | Electrolyte solution 8-1_{CO2} | (A) Dissolution into electrolyte solution | 395.7 | 355.1 | 40.6 | 54.4 |
| Comparative Example 8-3 | Electrolyte solution 8-2 | - (Not dissolved) | 395.7 | 318.9 | 76.8 | Standard for Examples 8-2 and 8-5 |
| Example 8-2 | Electrolyte solution 8-2 | (B) Air replacement in cell | 395.8 | 353.2 | 42.6 | 55.5 |
| Example 8-5 | Electrolyte solution 8-2_{CO2} | (A) Dissolution into electrolyte solution | 395.9 | 353.5 | 42.4 | 55.2 |
| Comparative Example 8-4 | Electrolyte solution 8-3 | - (Not dissolved) | 396.1 | 317.3 | 78.8 | Standard for Examples 8-3 and 8-6 |
| Example 8-3 | Electrolyte solution 8-3 | (B) Air replacement in cell | 396.2 | 351.2 | 45.0 | 57.1 |
| Example 8-6 | Electrolyte solution 8-3_{CO2} | (A) Dissolution into electrolyte solution | 396.0 | 351.0 | 45.0 | 57.1 |
| Comparative Example 8-1 | Comparative electrolyte solution 8-1 | - (Not dissolved) | 395.9 | 325.1 | 70.8 | - |

### (Impedance)

The results of Table 8-2 indicate that each battery using the electrolyte solution containing dissolved CO₂ that was dissolved in the electrolyte solution or dissolved by replacing the air inside the battery with CO₂ greatly reduced the impedance compared with the battery using the reference electrolyte solution that did not intentionally dissolve CO₂ (comparison was made between Comparative Example 8-2 and Examples 8-1 and 8-4, between Comparative Example 8-3 and Examples 8-2 and 8-5, and between Comparative Example 8-4 and Examples 8-3 and 8-6). The reduction in impedance was particularly noticeable at low temperature.

### (Self-Discharge)

The results shown in Table 8-3 indicate that each battery using the electrolyte solution containing dissolved CO₂ that was dissolved in the electrolyte solution or dissolved by replacing the air inside the battery with CO₂ had the greater remaining capacity after storage, i.e., caused less self-discharge, than the batteries using the reference electrolyte solution that did not intentionally dissolve CO₂ (comparison was were made between the same batteries). It has been found that the batteries of Examples 8-1 to 8-6, although they use the electrolyte solution containing LiFSI, have the greater remaining capacity after storage than the battery using the electrolyte solution containing LiPF₆ alone (Comparative Example 8-1), and thus, effectively reduce the self-discharge. The results of Table 8-3 show that the battery containing LiFSI and the Si-containing graphite mixture can further reduce the decreasing rate of the self-discharge capacity by controlling the mixing ratio of LiFSI and LiPF₆.

### (8-7) Consideration of Series of Example 8

The above results confirmed that the battery including the non-aqueous electrolyte solution that contains the sulfonylimide compound (1) and the electrolyte solution solvent having a vapor pressure of 1 kPa or more at room temperature (EMC, chain carbonate ester) and the electrode that contains Si or Si oxide and graphite causes the greater self-discharge as the concentration of the sulfonylimide compound (1) increases, but the self-discharge more effectively than the battery using the electrolyte solution containing LiPF₆ alone when 20 ppm by mass or more of CO₂ or other component is dissolved in the non-aqueous electrolyte solution, although the battery. It was also confirmed that the battery greatly reduces the resistance (impedance).

### <Series of Example 9>

### (9-1) Preparation of Non-Aqueous Electrolyte Solution (Reference Electrolyte Solution)

Non-aqueous electrolyte solutions were prepared by the same method as described in "(1-1) Preparation of Non-Aqueous Electrolyte Solution (Reference Electrolyte Solution)" except that ethylene carbonate (EC) and/or propylene carbonate (PC) and at least one of dimethyl carbonate (DMC), ethyl methyl carbonate (EMC), diethyl carbonate (DEC), or γ-butyrolactone (GBL) (all manufactured by Kishida Chemical Co., Ltd.) were used as the electrolyte solution solvents. Table 9-1 shows the compositions of the obtained electrolyte solutions. Each of the obtained reference electrolyte solutions was analyzed by gas chromatography to determine the amount of CO₂ dissolved in the electrolyte solution. Table 9-1 shows the results in the column of "Reference electrolyte solution."

### (9-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(9-1) Preparation of Non-Aqueous Electrolyte Solution (Reference Electrolyte Solution)," and the obtained electrolyte solutions were analyzed by gas chromatography. Table 9-1 shows the results of quantitative determination of the amount of CO₂ dissolved in the CO₂ dissolving electrolyte solution in the column of "(A) CO₂ dissolving electrolyte solution."

**[Table 9-1]**

| Composition of electrolyte solution | | | | | | | | Reference electrolyte solution | | (A) CO₂ dissolving electrolyte solution | | (B) Electrolyte solution after air replacement in cell |
|---|---|---|---|---|---|---|---|---|---|---|---|---|
| Concentration of LiFSI (mol/L) | Concentration of LiPF₆ (mol/L) | EC (vol%) | PC (vol%) | DMC (vol%) | EMC (vol%) | DEC (vol%) | GBL (vol%) | Type | Amount of dissolved CO₂ (ppm by mass) | Type | Amount of dissolved CO₂ (ppm by mass) | Amount of dissolved CO₂ (ppm by mass) |
| 0.05 | 1.15 | 30 | - | - | 70 | - | - | Electrolyte solution 9-1 | 2 | Electrolyte solution 9-1_{CO2} | 150 | 151 |
| 0.2 | 1 | 30 | - | - | 70 | - | - | Electrolyte solution 9-2 | 1 | Electrolyte solution 9-2_{CO2} | 152 | 152 |
| 0.6 | 0.6 | 30 | - | - | 70 | - | - | Electrolyte solution 9-3 | 1 | Electrolyte solution 9-3_{CO2} | 153 | 152 |
| 0.6 | 0.6 | 30 | 20 | 50 | - | - | - | Electrolyte solution 9-4 | 1 | Electrolyte solution 9-4_{CO2} | 153 | 151 |
| 0.6 | 0.6 | 20 | - | - | - | 30 | 50 | Electrolyte solution 9-5 | 3 | Electrolyte solution 9-5_{CO2} | 149 | 153 |
| - | 1.2 | 30 | - | - | 70 | - | - | Comparative electrolyte solution 9-1 | 3 | Comparative electrolyte solution 9-1_{CO2} | 150 | - |

### (9-3) Preparation of Laminate Battery 9-1

A laminate battery (cell) 9-1 with a voltage of 4.2 V and a capacity of 32 mAh was prepared by the same method as described in "(2-3) Preparation of Laminate Battery 2-1," and then the cell 9-1 was aged.

### (9-4) Preparation of Laminate Battery 9-2 (Method (B))

A laminate battery (cell) 9-2 with a voltage of 4.2 V and a capacity of 32 mAh was prepared by the same method as described in "(2-4) Preparation of Laminate Battery 2-2 (Method (B))," and then the cell 9-2 was aged in the same manner as the cell 9-1.

The electrolyte solution after the air replacement in the cell was analyzed by gas chromatography by the same method as described in "(2-4) Preparation of Laminate Battery 2-2 (Method (B))." Table 9-1 shows the results of quantitative determination of the amount of CO₂ dissolved in the electrolyte solution in the column of "(B) Electrolyte solution after air replacement in cell."

### (9-5) Evaluation of Battery

### (Impedance, DCR, Low Temperature Charge-Discharge Characteristics, and Self-Discharge)

Impedance, DCR, charge-discharge capacity at a low temperature (-20°C), and self-discharge (OCV) of the cells were measured by the same method as described in "(1-5) Evaluation of Battery." Table 9-2 shows the results.

**[Table 9-2]**

| | | Type of electrolyte solution | Type of Cell | Method of dissolving CO₂ | OCV (V) | | Real axis resistance (Ω) | | DCR (Ω) | | Low temperature (-20°C) Charge-discharge capacity (mAh/g) | | Cycle capacity retention rate (%) |
|---|---|---|---|---|---|---|---|---|---|---|---|---|---|
| | | | | | Before storage | After storage | 25°C | -30°C | SOC 100% | SOC 50% | Discharge capacity | Charge capacity | |
| | 9-1 | Electrolyte solution 9-1 | 9-2 | (B) Air replacement in cell | 4.1995 | 4.0715 | 0.318 | 26.654 | 1.11 | 1.03 | 84.0 | 44.6 | 90.2 |
| | 9-2 | Electrolyte solution 9-2 | 9-2 | (B) Air replacement in cell | 4.1995 | 4.0653 | 0.317 | 25.662 | 1.09 | 1.03 | 89.5 | 52.4 | 90.9 |
| | 9-3 | Electrolyte solution 9-3 | 9-2 | (B) Air replacement in cell | 4.1994 | 4.0579 | 0.310 | 23.008 | 1.06 | 0.99 | 92.1 | 61.3 | 91.3 |
| | 9-4 | Electrolyte solution 9-4 | 9-2 | (B) Air replacement in cell | 4.1996 | 4.0581 | 0.323 | 30.014 | 1.08 | 1.04 | 85.3 | 49.5 | 89.4 |
| | 9-5 | Electrolyte solution 9-5 | 9-2 | (B) Air replacement in cell | 4.1995 | 4.0579 | 0.327 | 30.108 | 1.10 | 1.06 | 84.4 | 46.3 | 88.9 |
| Example | 9-6 | Electrolyte solution 9-1_{CO2} | 9-1 | (A) Dissolution into electrolyte solution | 4.1995 | 4.0715 | 0.324 | 26.774 | 1.10 | 1.02 | 85.9 | 45.1 | 90.2 |
| | 9-7 | Electrolyte solution 9-2_{CO2} | 9-1 | (A) Dissolution into electrolyte solution | 4.1994 | 4.0656 | 0.320 | 25.721 | 1.09 | 1.03 | 89.4 | 52.6 | 90.8 |
| | 9-8 | Electrolyte solution 9-3_{CO2} | 9-1 | (A) Dissolution into electrolyte solution | 4.1995 | 4.0582 | 0.325 | 29.887 | 1.10 | 1.05 | 86.1 | 48.5 | 89.1 |
| | 9-9 | Electrolyte solution 9-4_{CO2} | 9-1 | (A) Dissolution into electrolyte solution | 4.1996 | 4.0581 | 0.330 | 30.192 | 1.10 | 1.06 | 84.5 | 46.3 | 89.0 |
| | 9-10 | Electrolyte solution 9-5_{CO2} | 9-1 | (A) Dissolution into electrolyte solution | 4.1995 | 4.0582 | 0.312 | 24.786 | 1.07 | 1.01 | 92.1 | 61.5 | 91.4 |
| Comparative Example | 9-1 | Electrolyte solution 9-1 | 9-1 | - (Reference electrolyte solution) | 4.1996 | 4.0467 | 0.376 | 37.300 | 1.14 | 1.10 | 80.1 | 40.1 | 89.4 |
| | 9-2 | Electrolyte solution 9-2 | 9-1 | - (Reference electrolyte solution) | 4.1995 | 4.0362 | 0.360 | 34.815 | 1.11 | 1.05 | 85.9 | 44.4 | 90.0 |
| | 9-3 | Electrolyte solution 9-3 | 9-1 | - (Reference electrolyte solution) | 4.1996 | 4.0220 | 0.337 | 32.541 | 1.10 | 1.04 | 88.6 | 53.5 | 90.3 |
| | 9-4 | Electrolyte solution 9-4 | 9-1 | - (Reference electrolyte solution) | 4.1994 | 4.0230 | 0.398 | 40.539 | 1.15 | 1.08 | 81.1 | 34.3 | 89.2 |
| | 9-5 | Electrolyte solution 9-5 | 9-1 | - (Reference electrolyte solution) | 4.1996 | 4.0224 | 0.411 | 41.194 | 1.15 | 1.10 | 81.3 | 32.8 | 88.7 |
| | 9-6 | Comparative electrolyte solution 9-1 | 9-1 | - (Reference electrolyte solution) | 4.1996 | 4.0514 | 0.424 | 43.958 | 1.16 | 1.14 | 80.9 | 31.6 | 88.1 |
| | 9-7 | Comparative electrolyte solution 9-1_{CO2} | 9-1 | (A) Dissolution into electrolyte solution | 4.1995 | 4.0641 | 0.330 | 31.184 | 1.12 | 1.07 | 84.1 | 44.6 | 88.8 |

The decreasing rate of OCV was calculated based on Table 9-2 in the same manner as described above. Table 9-3 shows the results.

**[Table 9-3]**

| | Type of electrolyte solution | Method of dissolving CO₂ | OCV (V) | | Difference in OCV before and after storage | Decreasing rate of OCV (%) |
|---|---|---|---|---|---|---|
| | | | Before storage | After storage | | |
| Comparative Example 9-1 | Electrolyte solution 9-1 | - (Reference electrolyte solution) | 4.1996 | 4.0467 | 0.1529 | Standard for Examples 9-1 and 9-6 |
| Example 9-1 | Electrolyte solution 9-1 | (B) Air replacement in cell | 4.1995 | 4.0715 | 0.128 | 83.7 |
| Example 9-6 | Electrolyte solution 9-1_{CO2} | (A) Dissolution into electrolyte solution | 4.1995 | 4.0715 | 0.128 | 83.7 |
| Comparative Example 9-2 | Electrolyte solution 9-2 | - (Reference electrolyte solution) | 4.1995 | 4.0362 | 0.1633 | Standard for Examples 9-2 and 9-7 |
| Example 9-2 | Electrolyte solution 9-2 | (B) Air replacement in cell | 4.1995 | 4.0653 | 0.1342 | 82.2 |
| Example 9-7 | Electrolyte solution 9-2_{CO2} | (A) Dissolution into electrolyte solution | 4.1994 | 4.0656 | 0.1338 | 81.9 |
| Comparative Example 9-3 | Electrolyte solution 9-3 | - (Reference electrolyte solution) | 4.1996 | 4.022 | 0.1776 | Standard for Examples 9-3 and 9-8 |
| Example 9-3 | Electrolyte solution 9-3 | (B) Air replacement in cell | 4.1994 | 4.0579 | 0.1415 | 79.7 |
| Example 9-8 | Electrolyte solution 9-3_{CO2} | (A) Dissolution into electrolyte solution | 4.1995 | 4.0582 | 0.1413 | 79.6 |
| Comparative Example 9-4 | Electrolyte solution 9-4 | - (Reference electrolyte solution) | 4.1994 | 4.0230 | 0.1754 | Standard for Examples 9-4 and 9-9 |
| Example 9-4 | Electrolyte solution 9-4 | (B) Air replacement in cell | 4.1996 | 4.0581 | 0.1415 | 80.7 |
| Example 9-9 | Electrolyte solution 9-4_{CO2} | (A) Dissolution into electrolyte solution | 4.1996 | 4.0581 | 0.1415 | 80.7 |
| Comparative Example 9-5 | Electrolyte solution 9-5 | - (Reference electrolyte solution) | 4.1996 | 4.0224 | 0.1772 | Standard for Examples 9-5 and 9-10 |
| Example 9-5 | Electrolyte solution 9-5 | (B) Air replacement in cell | 4.1995 | 4.0579 | 0.1416 | 79.9 |
| Example 9-10 | Electrolyte solution 9-5_{CO2} | (A) Dissolution into electrolyte solution | 4.1995 | 4.0582 | 0.1413 | 79.7 |
| Comparative Example 9-6 | Comparative electrolyte solution 9-1 | - (Reference electrolyte solution) | 4.1996 | 4.0514 | 0.1482 | Standard for Comparative Example 9-7 |
| Comparative Example 9-7 | Comparative electrolyte solution 9-1_{CO2} | (A) Dissolution into electrolyte solution | 4.1995 | 4.0641 | 0.1354 | 91.4 |

### (Impedance)

The results of Table 9-2 indicate that each battery using the electrolyte solution containing dissolved CO₂ that was dissolved in the electrolyte solution or dissolved by replacing the air inside the cell with CO₂ reduced the impedance compared with the battery using the reference electrolyte solution that did not intentionally dissolve CO₂ (comparison was made between Comparative Example 9-1 and Examples 9-1 and 9-6, between Comparative Example 9-2 and Examples 9-2 and 9-7, between Comparative Example 9-3 and Examples 9-3 and 9-8, between Comparative Example 9-4 and Examples 9-4 and 9-9, and between Comparative Example 9-5 and Examples 9-5 and 9-10). The reduction in impedance was particularly noticeable at low temperature.

### (Low Temperature Charge-Discharge Characteristics)

The results of Table 9-2 indicate that each battery using the electrolyte solution containing dissolved CO₂ improved the charge-discharge capacity at low temperature compared with the battery using the reference electrolyte solution that did not intentionally dissolve CO₂ (comparison was made between the same batteries). This improvement was presumably achieved by the reduction in impedance at low temperature caused by the dissolution of CO₂ in the electrolyte solution as indicated by the results of the impedance measurement.

### (Self-Discharge)

The results shown in Table 9-2 indicate that each of the batteries using the electrolyte solution containing CO₂ dissolved showed the smaller decrease in OCV after storage, i.e., caused less self-discharge, than the batteries using the reference electrolyte solution that did not intentionally dissolve CO₂ (comparison was made between the same batteries). The results shown in Table 9-3 also indicate that each of the batteries (Examples) using the electrolyte solution containing LiFSI and CO₂ dissolved showed the smaller decreasing rate of OCV, i.e., caused even less self-discharge, than the battery (Comparative Example 9-7) using the electrolyte solution containing LiPF₆ alone instead of LiFSI.

### (9-6) Consideration of Series of Example 9

The above results confirmed that dissolving 20 ppm or more of CO₂ or other component in the non-aqueous electrolyte solution containing the sulfonylimide compound (1) is clearly effective for the reduction of the self-discharge of the battery, although the non-aqueous electrolyte solution contains chain carbonate or lactone as the electrolyte solution solvent.

### <Series of Example 10>

### (10-1) Preparation of Non-Aqueous Electrolyte Solution (Reference Electrolyte Solution)

Non-aqueous electrolyte solutions were prepared by the same method as described in "(1-1) Preparation of Non-Aqueous Electrolyte Solution (Reference Electrolyte Solution)" except that ethylene carbonate (EC, manufactured by Kishida Chemical Co., Ltd.), ethyl methyl carbonate (EMC, manufactured by Kishida Chemical Co., Ltd.), 1-ethyl-3-methylimidazolium bis(fluorosulfonyl)imide (EMImFSI, manufactured by Nippon Shokubai Co., Ltd.), and 1-methyl-1-propylpyrrolidinium bis(fluorosulfonyl)imide (P13FSI, manufactured by Tokyo Chemical Industry Co., Ltd.) were used as the electrolyte solution solvents. Table 10-1 shows the compositions of the obtained electrolyte solutions. Each of the obtained reference electrolyte solutions was analyzed by gas chromatography to determine the amount of CO₂ dissolved in the electrolyte solution. Table 10-1 shows the results in the column of "Reference electrolyte solution."

### (10-2) Preparation of Non-Aqueous Electrolyte Solution Containing Dissolved CO₂ (CO₂ Dissolving Electrolyte Solution) (Method (A), Dissolving: Replacing)

Electrolyte solutions each containing CO₂ dissolved were prepared by the same method as described in "(1-2) Preparation of Non-Aqueous Electrolyte Solution Containing Dissolved CO₂ (CO₂ Dissolving Electrolyte Solution) (Method (A), Dissolving: Replacing)" using the electrolyte solutions obtained in "(10-1) Preparation of Non-Aqueous Electrolyte Solution (Reference Electrolyte Solution)," and the obtained electrolyte solutions were analyzed by gas chromatography. Table 10-1 shows the results of quantitative determination of the amount of CO₂ dissolved in the CO₂ dissolving electrolyte solution in the column of "(A) CO₂ dissolving electrolyte solution."

**[Table 10-1]**

| Composition of electrolyte solution | | | | | | Reference electrolyte solution | | (A) CO₂ dissolving electrolyte solution | |
|---|---|---|---|---|---|---|---|---|---|
| Concentration of LiFSI (mol/L) | Concentration of LiPF₆ (mol/L) | EC (vol%) | EMC (vol%) | EMImFSI (vol%) | P13FSI (vol%) | Type | Amount of CO₂ dissolved (ppm by mass) | Type | Amount of CO₂ dissolved (ppm by mass) |
| 0.6 | 0.6 | 30 | 70 | - | - | Electrolyte solution 10-1 | 2 | Electrolyte solution 10-1_{CO2} | 151 |
| 0.6 | 0.6 | 30 | 65 | 5 | - | Electrolyte solution 10-2 | 1 | Electrolyte solution 10-2_{CO2} | 149 |
| 0.6 | 0.6 | - | - | 100 | - | Comparative electrolyte solution 10-3 | 2 | Comparative electrolyte solution 10-3_{CO2} | 151 |
| 0.6 | 0.6 | 30 | 65 | - | 5 | Electrolyte solution 10-4 | 3 | Electrolyte solution 10-4_{CO2} | 150 |
| 0.6 | 0.6 | - | - | - | 100 | Comparative electrolyte solution 10-5 | 2 | Comparative electrolyte solution 10-5_{CO2} | 150 |

### (10-3) Preparation of Laminate Battery 10-1

A laminate battery (cell) 10-1 with a voltage of 4.2 V and a capacity of 32 mAh was prepared by the same method as described in "(2-3) Preparation of Laminate Battery 2-1" except that a stack of six 22 µm-thick cellulose sheets was used as the separator.

### (10-4) Evaluation of Battery

### (Initial Discharge Capacity)

Each of the obtained cells 10-1 was charged at a constant current of 0.1 C (3 mA) at room temperature (25°C, the same is applied hereinafter) for four hours using a charge/discharge tester, and was left to stand at room temperature for five days. After being left to stand, an excess of the laminate film was torn, and the cell 10-1 was degassed by vacuum sealing. The cell was charged at a constant current of 0.5 C (15 mA) and a constant voltage of 4.2 V (CCCV) at room temperature for five hours, and then discharged at a constant current of 0.2 C (6 mA) to a cutoff voltage of 2.75 V (discharge cutoff voltage) at room temperature to evaluate the initial discharge capacity. Table 10-2 shows the results.

**[Table 10-2]**

| | | Type of electrolyte solution | Type of Cell | Method of dissolving CO₂ | Initial discharge capacity (mAh/g) |
|---|---|---|---|---|---|
| Example | 10-1 | Electrolyte solution 10-1_{CO2} | 10-1 | (A) Dissolution into electrolyte solution | 144.0 |
| | 10-2 | Electrolyte solution 10-2_{CO2} | 10-1 | (A) Dissolution into electrolyte solution | 142.9 |
| | 10-3 | Electrolyte solution 10-4_{CO2} | 10-1 | (A) Dissolution into electrolyte solution | 142.2 |
| Reference Example | 10-1 | Electrolyte solution 10-1 | 10-1 | - (Reference electrolyte solution) | 144.1 |
| | 10-2 | Electrolyte solution 10-2 | 10-1 | - (Reference electrolyte solution) | 142.5 |
| | 10-3 | Electrolyte solution 10-4 | 10-1 | - (Reference electrolyte solution) | 142.1 |
| Comparative Example | 10-1 | Comparative electrolyte solution 10-3 | 10-1 | - (Reference electrolyte solution) | 42.8 |
| | 10-2 | Comparative electrolyte solution 10-3_{CO2} | 10-1 | (A) Dissolution into electrolyte solution | 43.2 |
| | 10-3 | Comparative electrolyte solution 10-5 | 10-1 | - (Reference electrolyte solution) | 41.2 |
| | 10-4 | Comparative electrolyte solution 10-5_{CO2} | 10-1 | (A) Dissolution into electrolyte solution | 41.1 |

### (Initial Discharge Capacity)

The results of Table 10-2 indicate that each battery using the electrolyte solution containing no EC or EMC significantly decreased the initial discharge capacity compared with the batteries using the electrolyte solution containing EC or EMC. The same applies to the batteries using the electrolyte solution containing CO₂ dissolved. The decrease in initial discharge capacity was more significant than the improvement in performance by the dissolution of CO₂ described in Examples 1 to 9, indicating that the battery performance was decreased as a whole. This phenomenon is presumably caused by the resistance of the electrolyte solution increased by high viscosity of EMImFSI and P13FSI.

## Claims

1. A non-aqueous electrolyte solution comprising:
a sulfonylimide compound (1) which includes LiN(FSO₂)₂ as an electrolyte salt,
an electrolyte solution solvent, and
at least one of carbon dioxide (CO₂), carbon monoxide (CO), a bicarbonate ion (HCO₃⁻), or a carbonate ion (CO₃²⁻) dissolved therein,
the electrolyte solution solvent including at least one selected from the group consisting of a carbonate solvent, a lactone solvent, an ether solvent, a nitrile solvent, and a chain ester solvent,
a total amount of the at least one of carbon dioxide (CO₂), carbon monoxide (CO), a bicarbonate ion (HCO₃⁻), or a carbonate ion (CO₃²⁻) dissolved being 20 ppm by mass or more.

2. The non-aqueous electrolyte solution of claim 1, wherein
Is > Io is met in a vibrational spectrum of the non-aqueous electrolyte solution showing intensities of peaks derived from the electrolyte solution solvent, where Io is an intensity of an original peak of the electrolyte solution solvent and Is is an intensity of a peak observed when the original peak shifts.

3. The non-aqueous electrolyte solution of any one of claims 1 to 2, wherein
the electrolyte salt further includes at least one selected from the group consisting of a compound represented by the general formula (2), a compound represented by the general formula (3), and LiAsF₆,
LiPFₐ(CₘF₂ₘ₊₁)₆₋ₐ (2)
(where 0 ≤ a ≤ 6 and 1 ≤ m ≤ 4)
LiBF_{b}(CₙF₂ₙ₊₁)_{4-b} (3)
(where 0 ≤ b ≤ 4 and 1 ≤ n ≤ 4).

4. The non-aqueous electrolyte solution of any one of claims 1 to 3, further comprising
at least one selected from the group consisting of a compound represented by the general formula (4), a compound represented by the general formula (5), and a compound represented by the general formula (6),
M¹PO_{c}F_{d} (4)
(where M¹ represents an alkali metal element, 1 ≤ c ≤ 3, and 1 ≤ d ≤ 3),
M²(FSO₃)ₑ (5)
(where M² represents a monovalent or divalent metal element and e is 1 or 2) 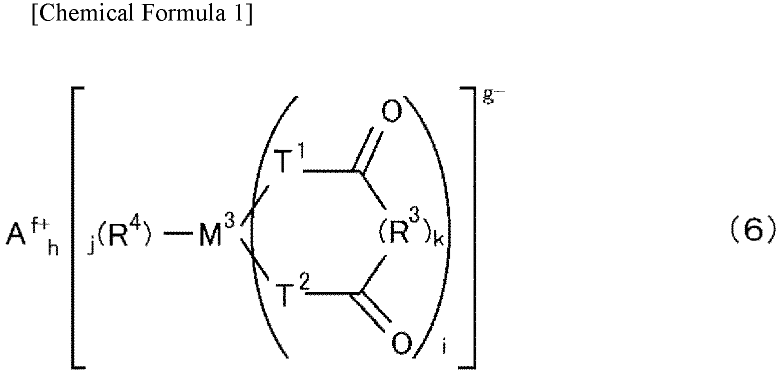 (in the general formula (6), M³ represents B or P, A^{f+} represents a metal ion, H, or an onium ion, 1 ≤ f ≤ 3, 1 ≤ g ≤ 3, h is g/f, 1 ≤ i ≤ 3, 0 ≤ j ≤ 4, k is 0 or 1, R³ represents an alkylene group having 1 to 10 carbon atoms or a halogenated alkylene group having 1 to 10 carbon atoms, R⁴ represents F or a fluorinated alkyl group having 1 to 10 carbon atoms, and T¹ and T² each independently represent O or S).

5. A method of manufacturing the non-aqueous electrolyte solution according to claim 1 containing a sulfonylimide compound (1) which includes LiN(FSO₂)₂ as an electrolyte salt, an electrolyte solution solvent, and at least one of carbon dioxide (CO₂), carbon monoxide (CO), a bicarbonate ion (HCO₃⁻), or a carbonate ion (CO₃²⁻) dissolved therein,
the electrolyte solution solvent including at least one selected from the group consisting of a carbonate solvent, a lactone solvent, an ether solvent, a nitrile solvent, and a chain ester solvent, the method comprising:
dissolving the at least one of carbon dioxide (CO₂), carbon monoxide (CO), a bicarbonate ion (HCO₃⁻), or a carbonate ion (CO₃²⁻) in the non-aqueous electrolyte solution, wherein
the dissolving includes at least one of
1) bringing a high-pressure gas containing CO₂ or carbon monoxide (CO) or a bicarbonate ion (HCO₃⁻) or a carbonate ion (CO₃²⁻) into contact with the non-aqueous electrolyte solution,
2) bringing a gas containing CO₂ or carbon monoxide (CO) or a bicarbonate ion (HCO₃⁻) or a carbonate ion (CO₃²⁻) into contact with the non-aqueous electrolyte solution,
3) blowing the gas containing CO₂ or carbon monoxide (CO) or a bicarbonate ion (HCO₃⁻) or a carbonate ion (CO₃²⁻) into the non-aqueous electrolyte solution,
4) replacing air in a sealed container containing the non-aqueous electrolyte solution with the gas containing CO₂ or carbon monoxide (CO) or a bicarbonate ion (HCO₃⁻) or a carbonate ion (CO₃²⁻).

6. A secondary battery comprising:
a positive electrode;
a negative electrode; and
a non-aqueous electrolyte solution,
the non-aqueous electrolyte solution according to claim 1 containing a sulfonylimide compound (1) which includes LiN(FSO₂)₂ as an electrolyte salt, at least one selected from the group consisting of a carbonate solvent, a lactone solvent, an ether solvent, a nitrile solvent, and a chain ester solvent as an electrolyte solution solvent, and at least one of carbon dioxide (CO₂), carbon monoxide (CO), a bicarbonate ion (HCO³⁻), or a carbonate ion (CO₃²⁻) dissolved therein,
a total amount of the at least one of carbon dioxide (CO₂), carbon monoxide (CO), a bicarbonate ion (HCO³⁻), or a carbonate ion (CO₃²⁻) dissolved being 20 ppm by mass or more

7. The secondary battery of claim 6, wherein the positive electrode contains at least one of a positive electrode active material represented by the general formula (7) or a positive electrode active material represented by the general formula (8),
Li_{zN}iₓMn_{y}Co_{(1-x-y)}O₂ (7)
(where 0.9 ≤ z ≤ 1.1, 0.2 ≤ x < 1, 0 ≤ y ≤ 0.4, and 0 < 1-x-y ≤ 0.8)
LiₚFe₁₋ᵣQᵣ(PO₄)ₚ (8)
(where Q represents Mn or Ni, 0.9 ≤ p ≤ 1.1, and 0 ≤ r ≤ 0.05).

8. A method of manufacturing a secondary battery including a positive electrode, a negative electrode, and the non-aqueous electrolyte solution according to claim 1,
the non-aqueous electrolyte solution containing a sulfonylimide compound (1) which includes LiN(FSO₂)₂ as an electrolyte salt and at least one selected from the group consisting of a carbonate solvent, a lactone solvent, an ether solvent, a nitrile solvent, and a chain ester solvent as an electrolyte solution solvent, the method comprising:
assembling the secondary battery in a CO₂ atmosphere and
injecting the non-aqueous electrolyte solution into the battery.

9. A method of manufacturing a secondary battery including a positive electrode, a negative electrode, and the non-aqueous electrolyte solution according to claim 1,
the non-aqueous electrolyte solution containing a sulfonylimide compound (1) which includes LiN(FSO₂)₂ as an electrolyte salt and at least one selected from the group consisting of a carbonate solvent, a lactone solvent, an ether solvent, a nitrile solvent, and a chain ester solvent as an electrolyte solution solvent, the method comprising:
replacing air in the battery into which the non-aqueous electrolyte solution has been injected with carbon dioxide (CO₂).

10. The method of any one of claims 8 to 9, wherein
at least one of a positive electrode active material represented by the general formula (7) or a positive electrode active material represented by the general formula (8) is used as the positive electrode,
Li_{z}NiₓMn_{y}Co(_{1-x-y})O₂ (7)
(where 0.9 ≤ z ≤ 1.1, 0.2 ≤ x < 1, 0 ≤ y ≤ 0.4, and 0 < 1-x-y ≤ 0.8)
LiₚFe₁₋ᵣQᵣ(PO₄)ₚ (8)
(where Q represents Mn or Ni, 0.9 ≤ p ≤ 1.1, and 0 ≤ r ≤ 0.05).

## Patentansprüche

1. Nichtwässrige Elektrolytlösung, umfassend:
eine Sulfonylamidverbindung (1), die LiN(FSO₂)₂ als Elektrolytsalz enthält,
ein Lösungsmittel der Elektrolytlösung, und
mindestens eines von Kohlendioxid (CO₂), Kohlenmonoxid (CO), einem Bicarbonat-Ion (HCO₃⁻) oder einem Carbonat-Ion (CO₃²⁻), das darin gelöst ist,
wobei das Lösungsmittel der Elektrolytlösung mindestens eines enthält, das aus der Gruppe ausgewählt ist, die aus einem Carbonatlösungsmittel, einem Laktonlösungsmittel, einem Etherlösungsmittel, einem Nitrillösungsmittel und einem Kettenesterlösungsmittel besteht,
wobei eine Gesamtmenge des mindestens einen von Kohlendioxid (CO₂), Kohlenmonoxid (CO), Bicarbonat-Ion (HCO₃⁻) oder Carbonat-Ion (CO₃²⁻), das gelöst ist, 20 Massen-ppm oder mehr beträgt.

2. Nichtwässrige Elektrolytlösung nach Anspruch 1, wobei
Is > Io in einem Schwingungsspektrum der nichtwässrigen Elektrolytlösung erfüllt ist, das die Intensitäten der aus dem Lösungsmittel der Elektrolytlösung abgeleiteten Peaks zeigt, wobei Io die Intensität eines ursprünglichen Peaks des Lösungsmittels der Elektrolytlösung ist und Is die Intensität eines Peaks ist, der beobachtet wird, wenn sich der ursprüngliche Peak verschiebt.

3. Nichtwässrige Elektrolytlösung nach einem der Ansprüche 1 bis 2, wobei
das Elektrolytsalz ferner mindestens eines umfasst, das aus der Gruppe ausgewählt ist, die aus einer Verbindung, die durch die allgemeine Formel (2) dargestellt wird, einer Verbindung, die durch die allgemeine Formel (3) dargestellt wird, und LiAsF₆ besteht,
LiPFₐ(CₘF₂ₘ₊₁)₆₋ₐ (2)
(wobei 0 ≤ a ≤ 6 und 1 ≤ m ≤ 4)
LiBF_{b}(CₙF₂ₙ₊₁)_{4-b} (3)
(wobei 0 ≤ b ≤ 4 und 1 ≤ n ≤ 4).

4. Nichtwässrige Elektrolytlösung nach einem der Ansprüche 1 bis 3, ferner umfassend
mindestens eines, das aus der Gruppe ausgewählt ist, die aus einer Verbindung, die durch die allgemeine Formel (4) dargestellt wird, einer Verbindung, die durch die allgemeine Formel (5) dargestellt wird, und einer Verbindung, die durch die allgemeine Formel (6) dargestellt wird, besteht,
M¹PO_{c}F_{d} (4)
(wobei M¹ für ein Alkalimetallelement steht, 1 ≤ c ≤ 3 und 1 ≤ d ≤ 3),
M²(FSO₃)ₑ (5)
(wobei M² für ein monovalentes oder divalentes Metallelement steht und e 1 oder 2 ist) 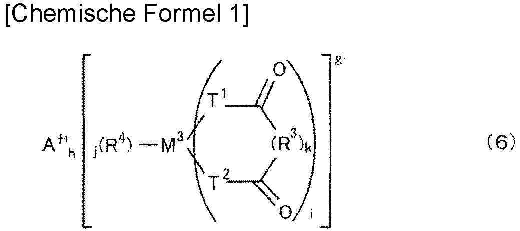 (in der allgemeinen Formel (6) steht M³ für B oder P, A^{f+} steht für ein Metallion, H oder ein Oniumion, 1 ≤ f ≤ 3, 1 ≤ g ≤ 3, h ist g/f, 1 ≤ i ≤ 3, 0 ≤ j ≤ 4, k ist 0 oder 1, R³ steht für eine Alkylengruppe mit 1 bis 10 Kohlenstoffatomen oder eine halogenierte Alkylengruppe mit 1 bis 10 Kohlenstoffatomen, R⁴ steht für F oder eine fluorierte Alkylgruppe mit 1 bis 10 Kohlenstoffatomen, und T¹ und T² stehen jeweils unabhängig voneinander für O oder S).

5. Verfahren zum Herstellen der nichtwässrigen Elektrolytlösung nach Anspruch 1, die eine Sulfonylamidverbindung (1) enthält, die LiN(FSO₂)₂ als Elektrolytsalz, ein Lösungsmittel der Elektrolytlösung und mindestens eines von Kohlendioxid (CO₂), Kohlenmonoxid (CO), einem Bicarbonat-Ion (HCO₃⁻) oder einem Carbonat-Ion (CO₃²⁻), das darin gelöst ist, enthält,
wobei das Lösungsmittel der Elektrolytlösung mindestens eines enthält, das aus der Gruppe ausgewählt ist, die aus einem Carbonatlösungsmittel, einem Laktonlösungsmittel, einem Etherlösungsmittel, einem Nitrillösungsmittel und einem Kettenesterlösungsmittel besteht, wobei das Verfahren Folgendes umfasst:
Lösen des mindestens einen von Kohlendioxid (CO₂), Kohlenmonoxid (CO), einem Bicarbonat-Ion (HCO₃⁻) oder einem Carbonat-Ion (CO₃²⁻) in der nichtwässrigen Elektrolytlösung, wobei
das Lösen mindestens eines von Folgendem enthält:
1) Inkontaktbringen eines Hochdruckgases, das CO₂ oder Kohlenmonoxid (CO) oder ein Bicarbonat-Ion (HCO₃⁻) oder ein Carbonat-Ion (CO₃²⁻) enthält, mit der nichtwässrigen Elektrolytlösung,
2) Inkontaktbringen eines Gases, das CO₂ oder Kohlenmonoxid (CO) oder ein Bicarbonat-Ion (HCO₃⁻) oder ein Carbonat-Ion (CO₃²⁻) enthält, mit der nichtwässrigen Elektrolytlösung,
3) Einblasen des Gases, das CO₂ oder Kohlenmonoxid (CO) oder ein Bicarbonat-Ion (HCO₃⁻) oder ein Carbonat-Ion (CO₃²⁻) enthält, in die nichtwässrige Elektrolytlösung,
4) Ersetzen von Luft in einem verschlossenen Behälter, der die nichtwässrige Elektrolytlösung enthält, durch das Gas, das CO₂ oder Kohlenmonoxid (CO) oder ein Bicarbonat-Ion (HCO₃⁻) oder ein Carbonat-Ion (CO₃²⁻) enthält.

6. Sekundärbatterie, umfassend:
eine positive Elektrode;
eine negative Elektrode; und
eine nichtwässrige Elektrolytlösung,
die nichtwässrige Elektrolytlösung nach Anspruch 1, die eine Sulfonylamidverbindung (1) enthält, die LiN(FSO₂)₂ als Elektrolytsalz, mindestens eines, das aus der Gruppe ausgewählt ist, die aus einem Carbonatlösungsmittel, einem Laktonlösungsmittel, einem Etherlösungsmittel, einem Nitrillösungsmittel und einem Kettenesterlösungsmittel besteht, als Lösungsmittel der Elektrolytlösung und mindestens eines von Kohlendioxid (CO₂), Kohlenmonoxid (CO), einem Bicarbonat-Ion (HCO₃⁻) oder ein Carbonat-Ion (CO₃²⁻), das darin gelöst ist, enthält,
wobei eine Gesamtmenge des mindestens einen von Kohlendioxid (CO₂), Kohlenmonoxid (CO), einem Bicarbonat-Ion (HCO³⁻) oder einem Carbonat-Ion (CO₃²⁻), das gelöst ist, 20 Massen-ppm oder mehr beträgt

7. Sekundärbatterie nach Anspruch 6, wobei die positive Elektrode mindestens eines von einem durch die allgemeine Formel (7) dargestellten aktiven positiven Elektrodenmaterial oder einem durch die allgemeine Formel (8) dargestellten aktiven positiven Elektrodenmaterial enthält,
Li_{zN}iₓMn_{y}Co_{(1-x-y)}O₂ (7)
(wobei 0,9 ≤ z ≤ 1,1, 0,2 ≤ x < 1, 0 ≤ y ≤ 0,4 und 0 < 1-x-y ≤ 0,8)
LiₚFe₁₋ᵣQᵣ(PO₄)ₚ (8)
(wobei Q für Mn oder Ni steht, 0,9 ≤ p ≤ 1,1 und 0 ≤ r ≤ 0,05).

8. Verfahren zum Herstellen einer Sekundärbatterie, die eine positive Elektrode, eine negative Elektrode und die nichtwässrige Elektrolytlösung nach Anspruch 1 enthält,
wobei die nichtwässrige Elektrolytlösung eine Sulfonylamidverbindung (1) enthält, die LiN(FSO₂ )₂ als Elektrolytsalz und mindestens eines, das aus der Gruppe ausgewählt ist, die aus einem Carbonatlösungsmittel, einem Laktonlösungsmittel, einem Etherlösungsmittel, einem Nitrillösungsmittel und einem Kettenesterlösungsmittel besteht, als Lösungsmittel der Elektrolytlösung enthält, wobei das Verfahren Folgendes umfasst:
Montieren der Sekundärbatterie in CO₂-Atmosphäre und
Einspritzen der nichtwässrigen Elektrolytlösung in die Batterie.

9. Verfahren zum Herstellen einer Sekundärbatterie, die eine positive Elektrode, eine negative Elektrode und die nichtwässrige Elektrolytlösung nach Anspruch 1 enthält,
wobei die nichtwässrige Elektrolytlösung eine Sulfonylamidverbindung (1) enthält, die LiN(FSO₂ )₂ als Elektrolytsalz und mindestens eines, das aus der Gruppe ausgewählt ist, die aus einem Carbonatlösungsmittel, einem Laktonlösungsmittel, einem Etherlösungsmittel, einem Nitrillösungsmittel und einem Kettenesterlösungsmittel besteht, als Lösungsmittel der Elektrolytlösung enthält, wobei das Verfahren Folgendes umfasst:
Ersetzen der Luft in der Batterie, in die die nichtwässrige Elektrolytlösung mit Kohlendioxid (CO₂) eingespritzt wurde.

10. Verfahren nach einem der Ansprüche 8 bis 9, wobei
mindestens eines von einem durch die allgemeine Formel (7) dargestellten aktiven positiven Elektrodenmaterial oder einem durch die allgemeine Formel (8) dargestellten aktiven positiven Elektrodenmaterial als positive Elektrode verwendet wird,
Li_{zN}iₓMn_{y}Co_{(1-x-y)}O₂ (7)
(wobei 0,9 ≤ z ≤ 1,1, 0,2 ≤ x < 1, 0 ≤ y ≤ 0,4 und 0 < 1-x-y ≤ 0,8)
LiₚFe₁₋ᵣQᵣ(PO₄)ₚ (8)
(wobei Q für Mn oder Ni steht, 0,9 ≤ p ≤ 1,1 und 0 ≤ r ≤ 0,05).

## Revendications

1. Solution électrolytique non aqueuse comprenant :
un composé sulfonylimide (1) qui comprend LiN(FSO₂)₂ en tant que sel d'électrolyte,
un solvant de solution électrolytique, et
au moins l'un parmi le dioxyde de carbone (CO₂), le monoxyde de carbone (CO), un ion bicarbonate (HCO₃⁻) ou un ion carbonate (CO₃²⁻) dissous dedans,
le solvant de solution électrolytique comprenant au moins l'un choisi dans le groupe constitué par un solvant carbonate, un solvant lactone, un solvant éther, un solvant nitrile et un solvant ester à chaîne,
la quantité totale de l'au moins l'un parmi le dioxyde de carbone (CO₂), le monoxyde de carbone (CO), un ion bicarbonate (HCO₃⁻) ou un ion carbonate (CO₃²⁻) dissous étant de 20 ppm en masse ou plus.

2. Solution électrolytique non aqueuse selon la revendication 1, dans laquelle
Is > Io est satisfait dans un spectre vibrationnel de la solution électrolytique non aqueuse montrant les intensités de pics dérivés du solvant de solution électrolytique, où Io est l'intensité d'un pic d'origine du solvant de solution électrolytique et Is est l'intensité d'un pic observé lorsque le pic d'origine se déplace.

3. Solution électrolytique non aqueuse selon l'une quelconque des revendications 1 et 2, dans laquelle
le sel d'électrolyte comprend en outre au moins l'un choisi dans le groupe constitué par un composé représenté par la formule générale (2), un composé représenté par la formule générale (3) et LiAsF₆,
LiPFₐ(CₘF₂ₘ₊₁)₆₋ₐ (2)
(où 0 ≤ a ≤ 6 et 1 ≤ m ≤ 4)
LiBF_{b}(CₙF₂ₙ₊₁)_{4-b} (3)
(où 0 ≤ b ≤ 4 et 1 ≤ n ≤ 4).

4. Solution électrolytique non aqueuse selon l'une quelconque des revendications 1 à 3, comprenant en outre
au moins l'un choisi dans le groupe constitué par un composé représenté par la formule générale (4), un composé représenté par la formule générale (5) et un composé représenté par la formule générale (6),
M¹PO_{c}F_{d} (4)
(où M¹ représente un élément métallique alcalin, 1 ≤ c ≤ 3 et 1 ≤ d ≤ 3),
M²(FSO₃)ₑ (5)
(où M² représente un élément métallique monovalent ou divalent et e est 1 ou 2) 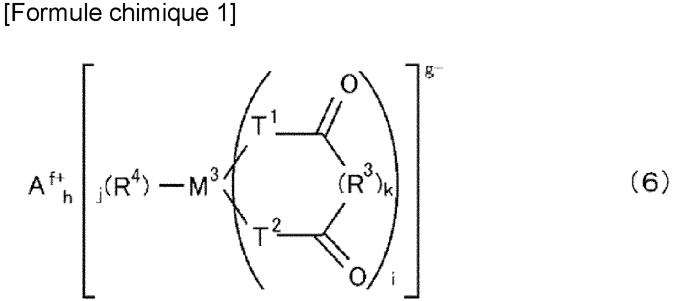 (dans la formule générale (6), M³ représente B ou P, A^{f+} représente un ion métallique, H ou un ion onium, 1 ≤ f ≤ 3, 1 ≤ g ≤ 3, h est g/f, 1 ≤ i ≤ 3, 0 ≤ j ≤ 4, k est 0 ou 1, R³ représente un groupe alkylène ayant 1 à 10 atomes de carbone ou un groupe alkylène halogéné ayant 1 à 10 atomes de carbone, R⁴ représente F ou un groupe alkyle fluoré ayant 1 à 10 atomes de carbone, et T¹ et T² représentent chacun indépendamment O ou S).

5. Procédé de fabrication de la solution électrolytique non aqueuse selon la revendication 1 contenant un composé sulfonylimide (1) qui comprend LiN(FSO₂)₂ en tant que sel d'électrolyte, un solvant de solution électrolytique, et au moins l'un parmi le dioxyde de carbone (CO₂), le monoxyde de carbone (CO), un ion bicarbonate (HCO₃⁻) ou un ion carbonate (CO₃²⁻) dissous dedans,
le solvant de solution électrolytique comprenant au moins l'un choisi dans le groupe constitué par un solvant carbonate, un solvant lactone, un solvant éther, un solvant nitrile et un solvant ester à chaîne, le procédé comprenant :
la dissolution de l'au moins l'un parmi le dioxyde de carbone (CO₂), le monoxyde de carbone (CO), un ion bicarbonate (HCO₃⁻) ou un ion carbonate (CO₃²⁻) dans la solution électrolytique non aqueuse, où
la dissolution comprend au moins l'un parmi
1) la mise en contact d'un gaz à haute pression contenant du CO₂ ou du monoxyde de carbone (CO) ou un ion bicarbonate (HCO₃⁻) ou un ion carbonate (CO₃²⁻) avec la solution électrolytique non aqueuse,
2) la mise en contact d'un gaz contenant du CO₂ ou du monoxyde de carbone (CO) ou un ion bicarbonate (HCO₃⁻) ou un ion carbonate (CO₃²⁻) avec la solution électrolytique non aqueuse,
3) le soufflage du gaz contenant du CO₂ ou du monoxyde de carbone (CO) ou un ion bicarbonate (HCO₃⁻) ou un ion carbonate (CO₃²⁻) dans la solution électrolytique non aqueuse,
4) le remplacement de l'air dans un récipient scellé contenant la solution électrolytique non aqueuse par le gaz contenant du CO₂ ou du monoxyde de carbone (CO) ou un ion bicarbonate (HCO₃⁻) ou un ion carbonate (CO₃²⁻).

6. Batterie secondaire comprenant :
une électrode positive ;
une électrode négative ; et
une solution électrolytique non aqueuse,
la solution électrolytique non aqueuse selon la revendication 1 contenant un composé sulfonylimide (1) qui comprend LiN(FSO₂)₂ en tant que sel d'électrolyte, au moins l'un choisi dans le groupe constitué par un solvant carbonate, un solvant lactone, un solvant éther, un solvant nitrile et un solvant ester à chaîne en tant que solvant de solution électrolytique, et au moins l'un parmi le dioxyde de carbone (CO₂), le monoxyde de carbone (CO), un ion bicarbonate (HCO₃⁻) ou un ion carbonate (CO₃²⁻) dissous dedans,
la quantité totale de l'au moins l'un parmi le dioxyde de carbone (CO₂), le monoxyde de carbone (CO), un ion bicarbonate (HCO₃⁻) ou un ion carbonate (CO₃²⁻) dissous étant de 20 ppm en masse ou plus.

7. Batterie secondaire selon la revendication 6, dans laquelle l'électrode positive contient au moins l'un parmi un matériau actif d'électrode positive représenté par la formule générale (7) ou un matériau actif d'électrode positive représenté par la formule générale (8),
Li_{z}NiₓMn_{y}Co_{(1-x-y)}O₂ (7)
(où 0,9 ≤ z ≤ 1,1, 0,2 ≤ x < 1, 0 ≤ y ≤ 0,4 et 0 < 1-x-y ≤ 0,8)
LiₚFe₁₋ᵣQᵣ(PO₄)ₚ (8)
(où Q représente Mn ou Ni, 0,9 ≤ p ≤ 1,1 et 0 ≤ r ≤ 0,05).

8. Procédé de fabrication d'une batterie secondaire comprenant une électrode positive, une électrode négative et la solution électrolytique non aqueuse selon la revendication 1,
la solution électrolytique non aqueuse contenant un composé sulfonylimide (1) qui comprend LiN(FSO₂)₂ en tant que sel d'électrolyte et au moins l'un choisi dans le groupe constitué par un solvant carbonate, un solvant lactone, un solvant éther, un solvant nitrile et un solvant ester à chaîne en tant que solvant de solution électrolytique, le procédé comprenant :
l'assemblage de la batterie secondaire dans une atmosphère de CO₂ et
l'injection de la solution électrolytique non aqueuse dans la batterie.

9. Procédé de fabrication d'une batterie secondaire comprenant une électrode positive, une électrode négative et la solution électrolytique non aqueuse selon la revendication 1,
la solution électrolytique non aqueuse contenant un composé sulfonylimide (1) qui comprend LiN(FSO₂)₂ en tant que sel d'électrolyte et au moins l'un choisi dans le groupe constitué par un solvant carbonate, un solvant lactone, un solvant éther, un solvant nitrile et un solvant ester à chaîne en tant que solvant de solution électrolytique, le procédé comprenant :
le remplacement de l'air dans la batterie dans laquelle la solution électrolytique non aqueuse a été injectée par du dioxyde de carbone (CO₂).

10. Procédé selon l'une quelconque des revendications 8 et 9, dans lequel
au moins l'un parmi un matériau actif d'électrode positive représenté par la formule générale (7) ou un matériau actif d'électrode positive représenté par la formule générale (8) est utilisé comme électrode positive,
Li_{z}NiₓMn_{y}Co_{(1-x-y)}O₂ (7)
(où 0,9 ≤ z ≤ 1,1, 0,2 ≤ x < 1, 0 ≤ y ≤ 0,4 et 0 < 1-x-y ≤ 0,8)
LiₚFe₁₋ᵣQᵣ(PO₄)ₚ (8)
(où Q représente Mn ou Ni, 0,9 ≤ p ≤ 1,1 et 0 ≤ r ≤ 0,05).
